(19) Europäisches Patentamt / European Patent Office / Office européen des brevets

(11) **EP 4 462 722 B1**

(12) **EUROPEAN PATENT SPECIFICATION**

(45) Date of publication and mention
of the grant of the patent:
**31.12.2025 Bulletin 2026/01**

(21) Application number: **23315299.0**

(22) Date of filing: **28.07.2023**

(51) International Patent Classification (IPC):
**H04L 9/00** *(2022.01)*  **H04L 9/32** *(2006.01)*
**H04L 9/08** *(2006.01)*

(52) Cooperative Patent Classification (CPC):
**H04L 9/008; H04L 9/085; H04L 9/3218;
H04L 9/3247;** H04L 2209/463

(54) **A LINEARLY HOMOMORPHIC SIGNATURE METHOD AND SYSTEM FOR ZERO-KNOWLEDGE PROOFS OF SUBSET MEMBERSHIP**

LINEAR HOMOMORPHES SIGNATURVERFAHREN UND SYSTEM FÜR ZERO-KNOWLEDGE-BEWEIS EINER UNTERSATZZUGEHÖRIGKEIT

PROCÉDÉ ET SYSTÈME DE SIGNATURE LINÉAIREMENT HOMOMORPHE POUR PREUVES À CONNAISSANCE NULLE D'APPARTENANCE À UN SOUS-ENSEMBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **12.05.2023 EP 23173248**

(43) Date of publication of application:
**13.11.2024 Bulletin 2024/46**

(73) Proprietors:
  • **Paris Sciences et Lettres**
    **75006 Paris (FR)**
  • **Centre National de la Recherche Scientifique**
    **75016 Paris 16 (FR)**
  • **Institut National de Recherche en Informatique et en Automatique**
    **78150 Le Chesnay (FR)**

(72) Inventor: **Pointcheval, David**
    **75230 PARIS (FR)**

(74) Representative: **Yes My Patent**
    **32 Boulevard Richard Lenoir**
    **75011 Paris (FR)**

(56) References cited:
  • **HENRI DEVILLEZ ET AL: "Traceable Receipt-Free Encryption", vol. 20220622:235217, 22 June 2022 (2022-06-22), pages 1 - 56, XP061073574, Retrieved from the Internet <URL:https://eprint.iacr.org/archive/2022/822/1655941937.pdf> [retrieved on 20220623]**
  • **H�BANT CHLO� ET AL: "Linearly-Homomorphic Signatures and Scalable Mix-Nets", 29 April 2020, PUBLIC-KEY CRYPTOGRAPHY - PKC 2020; [LECTURE NOTES IN COMPUTER SCIENCE; LECT.NOTES COMPUTER], SPRINGER INTERNATIONAL PUBLISHING, CHAM, PAGE(S) 597 - 627, ISBN: 978-3-030-45387-9, ISSN: 0302-9743, XP047659171**
  • **DAVID POINTCHEVAL: "Linearly-Homomorphic Signatures for Short Randomizable Proofs of Subset Membership", vol. 20231001:152028, 1 October 2023 (2023-10-01), pages 1 - 22, XP061081414, Retrieved from the Internet <URL:https://eprint.iacr.org/archive/2023/1499/1696173628.pdf> [retrieved on 20231003]**

**Description**

Technical field

The present invention relates to the technical field of cryptography. Particularly, the invention relates to the technical field of cryptography applied in various areas such as in electronic voting system, for example in an internet of things environment.

Background of the invention

With the all-digital society, and more recently with the pandemic and multiple lock-down periods, democracy is moving towards remote electronic voting, a.k.a. internet voting. Several solutions have been developed. They all encrypt the ballot on the voter-side to guarantee the voter's privacy.

Thereafter, several approaches exist for counting the tally, according to the complexity of the election. For example, one applies a mixing-network, which permutes and randomizes the encrypted ballots, before decryption of all the individual ballots to perform the counting in the clear, as one does with paper-based voting systems when one opens the envelops after having mixed them to remove any link with the voters. Prior art solutions are disclosed in documents HENRI DEVILLEZ ET AL: "Traceable Receipt-Free Encryption", IACR, INTERNATIONAL ASSOCIATION FOR CRYPTOLOGIC RESEARCH, vol. 20220622:235217 22 June 2022 (2022-06-22), pages 1-56, and HÉBANT CHLOÉ ET AL: "Linearly-Homomorphic Signatures and Scalable Mix-Nets", 29 April 2020 (2020-04-29), PUBLIC-KEY CRYPTOGRAPHY - PKC 2020; [LECTURE NOTES IN COMPUTER SCIENCE; LECT.NOTES COMPUTER], SPRINGER INTER-NATIONAL PUBLISHING, CHAM, PAGE(S) 597 - 627.

It seems therefore that electronic voting is one of the most interesting applications of modern cryptography, as it involves many innovative tools to guarantee several a priori contradictory security properties: the integrity of the tally and the privacy of the individual votes. While many efficient solutions exist for honest-but-curious voters, that follow the official procedure but try to learn more than just the public result, preventing attacks from malicious voters is much more complex: when voters may have incentive to send biased ballots, the privacy of the ballots is much harder to satisfy, whereas this is the crucial security property for electronic voting. The present invention solves at least some of these technical issues.

Summary of the invention

According to one aspect, the present invention relates to a linearly homomorphic signature method for zero-knowledge proofs of subset membership on at least one ciphertext, preferably at least one ElGamal ciphertext in a group $\mathbb{G}$ with a generator $P$ of prime order $p$, regarding at least one subset $\mathcal{S} = \{\vec{x}_1, ..., \vec{x}_N\} \subseteq \mathbb{Z}_p^n$ of $N$ authorized plaintexts, said plaintexts being authorized by at least one authority device AUT, said cyphertext being generated from a plaintext taken among said subset $\mathcal{S}$, said method being executable by at least one computing system, preferably said computing system being communicatively connected to at least one communication network, said method using randomizable tags, said method comprising at least:

◦ An initialization step, preferably executed by said authority device AUT using at least one initialization module IM, said initialization step comprising at least a generation step of at least:

- one pair of ElGamal encryption keys (DK, EK) for plaintexts comprised by a group $\mathbb{G}^n$ wherein the decryption key DK is generated as $DK = \vec{z} \xleftarrow{\$} \mathbb{Z}_p^n$, and the encryption key EK is generated as $EK = \vec{Z} = \vec{z} \cdot P \in \mathbb{G}^n$ wherein $\vec{z}$ is the above private vector of scalars that defines the decryption key DK, and $P$ is said generator of the group $\mathbb{G}$ of prime order $p$;
- one pair of linearly homomorphic signature keys (SK, VK) for messages in $\mathbb{G}^{n+2}$, said messages comprising at least ciphertexts;
- $N$ verifiable tags $Tag_j$, for $j$ = 1, ..., $N$;
- $N$ pairs of signatures $(\Sigma_{j,0}, \Sigma_{j,1})$, for $j$ = 1, ...,$N$, on $\vec{M}_j = \vec{x}_j \cdot P$ such as:

$$\Sigma_{j,0} = \text{Sign}\left(SK, Tag_j, \left(H_S, 0, \vec{M}_j\right)\right) \qquad \Sigma_{j,1} = \text{Sign}\left(SK, Tag_j, \left(0, P, \vec{Z}\right)\right)$$

wherein $H_S$ is configured to characterize a proof $\text{PR}_S$ on a subset $S$, preferably, $H_S = \mathcal{H}(S)$, where $\mathcal{H}$ is a full-domain hash function into $\mathbb{G}$;

Said initialization step generating a set of public parameters comprising:

$$\text{EK}, \text{VK}, \text{and} \left(\text{Tag}_j, \varSigma_{j,0}, \varSigma_{j,1}\right) \text{ for } j = 1, \dots, N$$

○ A ciphertext creation step with at least one proof of subset membership, preferably executed by at least one sender device SEND using at least one encryption module EM, said ciphertext creation step comprising the generation of at least one ElGamal ciphertext $(C_0, \vec{C})$ for at least one authorized plaintext $\vec{x} = \vec{x}_j \in S \subseteq \mathbb{Z}_p^n$, for a given $j$, with a random scalar $r \xleftarrow{\$} \mathbb{Z}_p$ such as:

$$C_0 = r \cdot P \qquad \vec{C} = r \cdot \vec{Z} + \vec{M}_j \quad \text{with } \vec{M}_j = \vec{x}_j \cdot P \in \mathbb{G}^n$$

○ A proof creation step, preferably executed by at least said sender device SEND using at least a first proof module PM1, from $\text{Tag}_j$ and $\varSigma_{j,0}, \varSigma j_{,1}$, for the above fixed $j$, comprising:

- a first randomization step, preferably executed by said sender device SEND using at least a first randomization module RM1, said first randomization step comprising a randomization of at least one $\text{Tag}_j$ into Tag', for said given $j$;
- a first computation step, preferably executed by said sender device SEND using at least a first computational module CM1, of $\varSigma'_0$ and $\varSigma'_1$, wherein: $\varSigma'_0$ is a valid signature of ($H_S$, $C_0$, $\vec{C}$) under VK for the tag Tag' and $\varSigma'_1$ is a valid signature of a randomizer (0, $D_0$, $\vec{D}$), under VK for the tag Tag';

○ A generation step, preferably executed by said sender device SEND using at least a generation module GM, comprising at least:

- generating a pair of linearly homomorphic signing-verification keys (sk, vk) for messages in $\mathbb{G}^{n+2}$ ;
- generating signatures $\sigma_0$ and $\sigma_1$ wherein:

$$\sigma_0 = \text{Sign}\left(\text{sk}, \left(H_S, C_0, \vec{C}\right)\right)$$

$$\sigma_1 = \text{Sign}\left(\text{sk}, \left(0, D_0, \vec{D}\right)\right)$$

○ A sending step, preferably executed by said sender device SEND using at least a sending module SM, from the sender device SEND to at least one receiver device REC of the ciphertexts $(C_0, \vec{C})$ and $(D_0, \vec{D})$, together with the proof $\text{PR}_S$ comprising (Tag', $\varSigma'_0$, $\varSigma'_1$) and with the signatures (vk, $\sigma_0$, $\sigma_1$) ;
○ A verification step, preferably executed by said receiver device REC using at least one verification module VM, said verification step comprising at least the verification of at least:

- the validity of Tag';
- the validity of the signature $\varSigma'_0$ on ($H_S$, $C_0$, $\vec{C}$) under VK for the tag Tag', and the validity of the signature $\varSigma'_1$ on (0, $D_0$, $\vec{D}$), under VK for the tag Tag';
- the validity of the signatures $\sigma_0$ on ($H_S$, $C_0$, $\vec{C}$) under vk and $\sigma_1$ on (0, $D_0$, $\vec{D}$) under vk;

○ A second randomization step, preferably executed by said receiver device REC using at least a second randomization module RM2, of said ElGamal ciphertext $(C_0, \vec{C})$ to generate the ciphertext $(C'_0, \vec{C'})$ using a random scalar $s \xleftarrow{\$} \mathbb{Z}_p$ and a randomizer $(D_0, \vec{D})$ such as:

$$C'_0 = C_0 + s \cdot D_0$$

$$\vec{C}' = \vec{C} + s \cdot \vec{D}$$

◦ A second computation step, preferably executed by said receiver device REC using at least a second computational module CM2, of a signature $\Sigma$ :

$$\Sigma' = \Sigma'_0 + s \cdot \Sigma'_1$$

$\Sigma'$ being a valid signature of ($H_S$, $C'_0$, $\vec{C}$) under VK for the tag Tag';
◦ A third computation step, preferably executed by said receiver device REC using at least said computational module CM2, of a signature $\sigma$ :

$$\sigma = \sigma_0 + s \cdot \sigma_1$$

wherein $\sigma$ is a valid signature of ($H_S$, $C'_0$, $\vec{C}$) under vk;
◦ A second proof creation step, preferably executed by at least said receiver device REC using at least a second proof module PR2, of a proof $PR'_S$ from said proof $PR_S$, (Tag',$\Sigma'_0$,$\Sigma'_1$), comprising:

- a third randomization step by at least said second randomization module RM2 of the tag Tag' into Tag" ;
- a fourth computation step by at least said second computational module CM2 of the signature $\Sigma'$ into $\Sigma$": $\Sigma$" being a valid signature of ($H_S$, $C'_0$, $\vec{C}$) under VK for the tag Tag";

◦ A storing step, preferably executed by the receiver device REC using at least a storing module STM, of the ciphertext ($C'_0$, $\vec{C}$), together with said proof $PR'_S$ comprising (Tag", $\Sigma$"), and with the signature (vk, $\sigma$), which are configured to be publicly verified and wherein:

- Tag" is a valid tag;
- $\Sigma$" is a valid signature on ($H_S$, $C'_0$, $\vec{C}$), under VK for the tag Tag" allowing to prove that the plaintext is in the subset $S$;
- $\sigma$ is a valid signature on ($H_S$, $C'_0$, $\vec{C}$), under vk.

The present invention uses advantageously linearly homomorphic signatures to design short and efficient homomorphic proofs of subset membership on ElGamal ciphertexts. But contrarily to the prior art, that were using signatures on randomizable ciphertexts just for allowing randomization on the server-side, and thus for achieving receipt-freeness for a mixnet-based system that can check the validity of the ballots in the clear, the present invention additionally uses signatures on randomizable ciphertexts on the client-side, from multiple signatures generated at the setup phase, by the electoral board, i.e. the authority device AUT, to derive efficient proofs of valid ballots, in their encrypted form. One proof of subset membership has a constant size and takes a constant time for generation, whatever the size of the subset. The present invention avoids the need of a trusted third party, in the case where the signing-verification keys and the signatures can be efficiently generated in a distributed way, for example.

The present invention uses tag-based signatures, where the tags target the vector sub-spaces, but still being randomizable and unlinkable, as in, to keep privacy of the ciphertexts. Signatures for proofs can only be generated for valid ballots, without revealing any information about the votes. Therefore, the present invention uses full-fledge linearly homomorphic signatures with tags, to have multiple vector sub-spaces, that cannot be combined and additional properties to make signatures unlinkable, whichever is the vector sub-space.

Using zero-knowledge proofs, the present invention allows to prove that some specific properties are satisfied by the text in the clear, without revealing any additional information.

The present invention allows a higher level of privacy. The present invention is particularly well designed to be applied in a situation wherein the voters are maybe not all honest. Indeed, voters might deviate from the honest behaviour, for multiple reasons. Some might even be ready to change their votes for money or to break privacy. Then, the present invention allows more advanced protections to really achieve a high privacy level.

For example, the present invention protects the voting system against a coalition of voters that really wants to know the vote of a determined person. Even if they try to duplicate her encrypted ballot and cast it in their names, the present invention blocks them to get the vote of said determined person. To avoid such an attack, also called a CS-attack see for example the following publication "Véronique Cortier and Ben Smyth. Attacking and Fixing Helios: An analysis of Ballot Secrecy. CSF 2011: 297-311.", the present invention can use some non-malleability features, as discussed hereafter.

Vote-selling is another major threat, when some voters may have strong incentive, with a reward or external pressures, to vote for someone when being able to prove it. Actually, any technique that encrypts the ballot on the client-side, without any modification before storing it in the public ballot-box, is subject to vote-selling attacks, see for example the following publication "J. C. Benaloh and D. Tuinstra. Receipt-Free Secret-Ballot Elections. STOC 1994.", and even at high scale: the client-side code can always be patched in order to reveal the randomness used during encryption, as a receipt to convince anybody of the content of the vote. The present invention allows to avoid vote-selling, also called a VS-attack. For example, by randomizing encrypted ballots before storage, the present invention prevents such an attack.

The approach followed by the present invention excludes VS-attacks and is compatible with other improvements: the voter can use a one-time linearly homomorphic signature to trace and check his vote after randomization, and append a single Groth-Sahai Diffie-Hellman proof to avoid CS-attack as discussed further in the description. This provides strong receipt-freeness.

The present invention relates also to a computer program product which, when executed on at least one processor unit, executes the method according to the present invention.

The present invention relates also to a non-volatile memory comprising at least one computer program product according to the present invention.

The present invention relates also to a voting system configured to execute the method according to the present invention, said system comprising at least:

a. One authority device AUT comprising at least one initialization module IM, said initialization module IM being configured to execute said initialization step.
b. One sender device SEND comprising at least:

i. An encryption module EM being configured to execute said ciphertext creation step.
ii. A first proof module PM1 being configured to execute said proof creation step. Said first proof module PM1 comprising at least:

◦ A first randomization module RM1 being configured to execute said first randomization step;
◦ A first computational module CM1 being configured to execute said first computation step.

iii. A generation module GM being configured to execute said generation step;
iv. A sending module SM being configured to execute the sending step, and advantageously to communicate with at least one receiver device REC.

c. One receiver device REC comprising at least:

i. A verification module VM being configured to execute said verification step;
ii. A second randomization module RM2 being configured to execute said second randomization step, and the third randomization step;
iii. A second computational module CM2 being configured to execute said second computational step, said third computational step and said fourth randomization step;
iv. A second proof module PM2 being configured to execute said second proof creation step, said proof module comprising at least:

◦ a second randomization module RM2;
◦ a second computational module CM2;

v. A storing module STM being configured to execute said storing step.

The present invention relates also to a use of the voting system according to the present invention.

Before providing below a detailed review of embodiments of the invention, some optional characteristics that may be used in association or alternatively will be listed hereinafter:

According to an example, the pair of linearly homomorphic signing-verification keys (sk, vk) for messages in

$\mathbb{G}^{n+2}$ are generated, in a type III pairing-friendly setting ( $\mathbb{G}$, $\widehat{\mathbb{G}}$, $\mathbb{G}_T$, $p$, $P$, $\hat{P}$, $e$), where $\mathbb{G}$ and $\widehat{\mathbb{G}}$ are two groups of prime order $p$, spanned by $P$ and $\hat{P}$ respectively, equipped with a pairing application e into the target group $\mathbb{G}_T$, such as:

$$\mathsf{sk} = \vec{e} \xleftarrow{\$} \mathbb{Z}_p^{n+2}, \text{ and } \mathsf{vk} = \vec{e} \cdot \hat{P} \in \widehat{\mathbb{G}}^{n+2}$$

According to an example, in a bilinear setting ( $\mathbb{G}$, $\widehat{\mathbb{G}}$, $\mathbb{G}_T$, $p$, $P$, $\hat{P}$, $e$), the pair of linearly homomorphic signing-verification keys (sk, vk) for messages in $\mathbb{G}^{n+2}$ are generated such as:

$$\mathsf{sk} = \vec{e} \xleftarrow{\$} \mathbb{Z}_p^{n+2}, \text{ and } \mathsf{vk} = \vec{e} \cdot \hat{P} \in \widehat{\mathbb{G}}^{n+2}$$

According to an example, in a bilinear setting ( $\mathbb{G}$, $\widehat{\mathbb{G}}$, $\mathbb{G}_T$, $p$, $P$, $\hat{P}$, $e$), the signatures $\sigma_0$ and $\sigma_1$ are generated such as:

$$\sigma_0 = e_1 \cdot H_S + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

According to an example, four random points $\hat{V}_{1,1}, \hat{V}_{1,2}, \hat{V}_{2,1}, \hat{V}_{2,2} \xleftarrow{\$} \widehat{\mathbb{G}}$ are generated and appended to the public parameters, preferably for the Groth-Sahai proofs, advantageously in a bilinear setting ( $\mathbb{G}$, $\widehat{\mathbb{G}}$, $\mathbb{G}_T$, $p$, $P$, $\hat{P}$, $e$).

According to an example, the proof $\mathrm{PR}_S$, from Tag; and $\Sigma_{j,0}, \Sigma_{j,1}$, is generated such as:

$$\Sigma_0 = \Sigma_{j,0} + r \cdot \Sigma_{j,1}$$

$$\Sigma_1 = \Sigma_{j,1}$$

Wherein $\Sigma_0$ is a valid signature of ( $H_S$, $C_0$, $\vec{C}$) under VK for the tag Tag = $\mathrm{Tag}_j$, and wherein $\Sigma_1$ is a valid signature of the randomizer $(0, D_0, \vec{D})$ under VK for the tag Tag = $\mathrm{Tag}_j$;

According to an example, the generation step comprises generating a Diffie-Hellman value $W = r \cdot H$, for $H = \mathcal{H}(\mathsf{vk}) \in \mathbb{G}$, and generating a Groth-Sahai proof $\pi$ of Diffie-Hellman tuple for ($P$, $C_0$, $H$, $W$).

According to an example, the sending step from the sender device SEND to the receiver device REC comprises the sending of the value $W$ and of the proof $\pi$.

According to an example, the verification step comprises the verification of the validity of the signature $\sigma$ such as $\sigma$ is a valid signature on ( $H_S$, $C'_0$, $\vec{C}'$) under vk;

According to an example, the verification step comprises the verification of the validity of the signatures $\sigma_0$ on ( $H_S$, $C_0$, $\vec{C}$) under vk and $\sigma_1$ on $(0, D_0, \vec{D})$ under vk;

According to an example, the verification step comprises the verification of the validity of the Diffie-Hellman proof $\pi$ on the tuple ($P$, $C_0$, $H = \mathcal{H}(\mathsf{vk})$, $W$).

According to an example, the randomizer $(0, D_0, \vec{D})$ is equal to $(0, P, \vec{Z})$ such as $D_0 = P$ and $\vec{D} = \vec{Z}$ wherein $P$ is the generator of $\mathbb{G}$ and $\vec{Z}$ is the public encryption key;

According to an example, the randomization of said ElGamal ciphertext $(C_0, \vec{C})$ to generate the ciphertext $(C'_0, \vec{C}')$ using a random scalar $s \xleftarrow{\$} \mathbb{Z}_p$ is such as:

$$C'_0 = C_0 + s \cdot P \qquad \vec{C}' = \vec{C} + s \cdot \vec{Z}$$

According to an example, the second computation step comprises a computation of the randomized Groth-Sahai proof $\pi'$ being a valid Diffie-Hellman proof on the tuple $(P, C'_0, H = \mathcal{H}(\text{vk}), W')$, using $\pi$ and $s$, for $W' = W + s \cdot H$;

According to an example, the storing step comprises the storing of $(W', \pi')$.

According to an example, the pair of linearly homomorphic signing-verification keys SK and VK are generated such as SK $\text{SK} = \vec{s} \xleftarrow{\$} \mathbb{Z}_p^{n+4}$, and $\text{VK} = \vec{s} \cdot \hat{P} \in \hat{\mathbb{G}}^{n+4}$;

According to an example, the $N$ verifiable tags $\text{Tag}_j$ are generated such as $\text{Tag}_j = \left( \tau_{j,1} = P, \tau_{j,2} = t_j \cdot P, \tau_{j,3} = t_j^2 \cdot P, \pi_j \right)$, with $t_j \xleftarrow{\$} \mathbb{Z}_p$, for $j = 1, ..., N$, with their validity proofs $\pi_j = (\text{com}_j, \text{proof}_j)$

According to an example, the $N$ pairs of signatures, for $j = 1, ..., N$, on $\vec{M}_j = \vec{x}_j \cdot P$ are generated such as:

$$\Sigma_{j,0} = s_1 \cdot H_S + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

According to an example, $D_0$ and $\vec{D}$ are equal to:

$$D_0 = r' \cdot P \quad \vec{D} = r' \cdot \vec{Z}$$

**with a random** scalar $r' \xleftarrow{\$} \mathbb{Z}_p$

According to an example, the proof $\text{PR}_S$ is generated, from $\text{Tag}_j$ and $\Sigma_{j,0}, \Sigma_{j,1}$ such as:

$$\Sigma'_0 = \Sigma_{j,0} + r \cdot \Sigma_{j,1} \qquad \Sigma'_1 = r' \cdot \Sigma_{j,1}$$

Wherein $\Sigma'_0$ is a valid signature of $(H_S, C_0, \vec{C})$ under VK for the tag $\text{Tag}'_0 = (r + 1) \cdot \text{Tag}$ and wherein $\Sigma'_1$ is a valid signatures of $(0, D_0, \vec{D})$ under VK for the tag $\text{Tag}'_1 = r' \cdot \text{Tag}$;

According to an example, the generation step comprises the generation of Diffie-Hellman values $W = r \cdot H$ and $W' = r' \cdot H$, for $H = \mathcal{H}(\text{vk}) \in \mathbb{G}$, together with Groth-Sahai proofs $\pi = (\text{com}, \text{proof})$ of Diffie-Hellman tuple for $(P, C_0, H, W)$ and $\pi' = (\text{com}', \text{proof}')$ of Diffie-Hellman tuple for $(P, D_0, H, W')$;

According to an example, the sending step from the sender device SEND to the receiver device REC comprises the sending of the proof $\text{PR}_S$ comprising $(\text{Tag}'_0, \text{Tag}'_1, \Sigma'_0, \Sigma'_1)$, and $(W, W', \pi, \pi')$

According to an example, the verification step comprises verifying that:

- the tags $\text{Tag}'_0$ and $\text{Tag}'_1$ are valid;
- the signature $\Sigma'_0$ is valid on the message $(H_S, C_0, \vec{C})$ and tag $\text{Tag}'_0$ under VK;
- the signature $\Sigma'_1$ is valid on the message $(0, D_0, \vec{D})$ and tag $\text{Tag}'_1$ under VK;
- the signature $\sigma_0$ is valid on the message $(H_S, C_0, \vec{C})$ under vk;
- the signature $\sigma_1$ is valid on the message $(0, D_0, \vec{D})$ under vk;
- the Diffie-Hellman proofs $\pi$ is valid on the tuples $(P, C_0, H, W)$ and $\pi'$ is valid on the tuples $(P, D_0, H, W')$.

According to an example, the third randomization step of the tags $\text{Tag}'_0$ and $\text{Tag}'_1$ into $\text{Tag}''$ is such as:

$$\text{Tag}'' = \text{Tag}'_0 + s \cdot \text{Tag}'_1$$

According to an example, the fourth computation step of the signatures $\Sigma''$ and $\sigma$ is such as:

$$\Sigma'' = \Sigma'_0 + s \cdot \Sigma'_1 \qquad \sigma = \sigma_0 + s \cdot \sigma_1$$

According to an example, the second computation step comprises a computation of the randomized Groth-Sahai proof $\pi''$ of Diffie-Hellman tuple for $W'' = W + s \cdot W'$, using $\pi$, $\pi'$, and $s$.

According to an example, the storing step comprises the storing of $(W'', \pi'')$.

According to an example, the $N$ verifiable tags $\text{Tag}_j$ are generated such as $\text{Tag}_j = (\tau_{j,1} = 1/t_j \cdot P, \tau_{j,2} = 1/t_j \cdot \hat{P})$, with $t_j \overset{\$}{\leftarrow} \mathbb{Z}_p$, for $j = 1, ..., N$;

According to an example, the $N$ pairs of signatures, for $j = 1, ..., N$, on $\vec{M}_j = \vec{x}_j \cdot P$ are generated such as:

$$\Sigma_{j,0} = t_j \cdot \left( s_1 \cdot H_s + \sum_{i=1}^{n} s_{i+2} \cdot M_{j,i} \right)$$

$$\Sigma_{j,1} = t_j \cdot \left( s_2 \cdot P + \sum_{i=1}^{n} s_{i+2} \cdot Z_i \right)$$

According to an example, the randomization of at least $\text{Tag} = (\tau_1, \tau_2)$ into $\text{Tag}' = (\tau'_1, \tau'_2)$, for a random $t' \overset{\$}{\leftarrow} \mathbb{Z}_p$, is such as:

$$\text{Tag}' = (\tau'_1 = 1/t' \cdot \tau_1, \tau'_2 = 1/t' \cdot \tau_2)$$

According to an example, the computation of $\Sigma_0$ and $\Sigma_1$ into $\Sigma'_0$ and $\Sigma'_1$, respectively, is such as:

$$\Sigma'_0 = t' \cdot \Sigma_0 \qquad \Sigma'_1 = t' \cdot \Sigma_1$$

According to an example, the randomizer $(0, D_0, \vec{D})$ is equal to $(0, P, \vec{Z})$, the signatures $\sigma_0$ and $\sigma_1$ such as:

$$\sigma_0 = e_1 \cdot H_s + e_2 \cdot C_0 + \sum_{i=1}^{n} e_{i+2} \cdot C_i$$

$$\sigma_1 = e_2 \cdot P + \sum_{i=1}^{n} e_{i+2} \cdot Z_i$$

According to an example, the verification step comprises the verification of the following equalities:

$$e(P, \tau'_2) = e(\tau'_1, \hat{P})$$

$$e(\Sigma'_0, \tau'_2) = e(H_s, \text{VK}_1) \cdot e(C_0, \text{VK}_2) \cdot \prod_{i=1}^{n} e(C_i, \text{VK}_{i+2})$$

$$e(\Sigma'_1, \tau'_2) = e(P, \text{VK}_2) \cdot \prod_{i=1}^{n} e(Z_i, \text{VK}_{i+2})$$

$$e(\sigma_0, \hat{P}) = e(H_S, \mathrm{vk}_1) \cdot e(C_0, \mathrm{vk}_2) \cdot \prod_{i=1}^{n} e(C_i, \mathrm{vk}_{i+2})$$

$$e(\sigma_1, \hat{P}) = e(P, \mathrm{vk}_2) \cdot \prod_{i=1}^{n} e(Z_i, \mathrm{vk}_{i+2})$$

wherein $e(Q, \vec{Q})$ is a pairing function between two elements of the two groups $\mathbb{G}$ and $\hat{\mathbb{G}}$.

and the validity of the Diffie-Hellman proof $\pi = (\mathrm{com}, \mathrm{proof})$ on the tuple $(P, C_0, H = \mathcal{H}(\mathrm{vk}), W)$

According to an example, the third randomization step of the tag Tag' into Tag'' is such as:

$$\mathrm{Tag}'' = (\tau''_1 = 1/t'' \cdot \tau'_1, \tau''_2 = 1/t'' \cdot \tau'_2)$$

According to an example, the second computation step of the signatures $\Sigma$ into $\Sigma'$: $\Sigma'$ being a valid signature of ( $H_S$, $C'_0$, $\vec{C}'$) under VK for the tag Tag'', is such as:

$$\Sigma'' = t'' \cdot (\Sigma'_0 + s \cdot \Sigma'_1)$$

According to an example, the second computation step comprises a computation of the randomized Groth-Sahai proof $\pi'$, for $W' = W + s \cdot H$, using $\pi$ and $s$.

According to an example, the storing step by the receiver in a storing module STM comprises the storing of ($W'$, $\pi'$).

According to an example, said public parameters VK, ($\hat{V}_{1,1}, \hat{V}_{1,2}, \hat{V}_{2,1}, \hat{V}_{2,2}$), and (Tag$_j$, $\Sigma_{j,0}$, $\Sigma_{j,1}$) for $j = 1, ..., N$, are generated in a distributed way between multiple independent parties $(\mathcal{U}_k)_k$:

○ Said multiple independent parties $(\mathcal{U}_k)_k$ agree on a bilinear setting ($\mathbb{G}$, $\hat{\mathbb{G}}, \mathbb{G}_T$, $p, P, \hat{P}, e$);

○ Each party $\mathcal{U}_k$ chooses and sends random points $\hat{V}_{1,1,k}, \hat{V}_{1,2,k}, \hat{V}_{2,1,k}, \hat{V}_{2,2,k} \overset{\$}{\leftarrow} \hat{\mathbb{G}}$ to the others parties, generating global verification points $\hat{V}_{1,1} = \Sigma_k \hat{V}_{1,1,k}, \hat{V}_{1,2} = \Sigma_k \hat{V}_{1,2,k}, \hat{V}_{2,1} = \Sigma_k \hat{V}_{2,1,k}, \hat{V}_{2,2} = \Sigma_k \hat{V}_{2,2,k}$, these global verification points being configured to be computed by said multiple independent parties;

○ the pair of linearly homomorphic signing-verification keys SK and VK are generated by each party $\mathcal{U}_k$ that randomly chooses $s_{i,k} \overset{\$}{\leftarrow} \mathbb{Z}_p$, for $i = 1, ..., n + 4$, computes and sends $\mathrm{VK}_k = (s_{i,k} \cdot \hat{P})_{i=1}^{n+4}$ to the other parties, generating a global verification key VK $= \Sigma_k \mathrm{VK}_k$, while $\mathcal{U}_k$ is configured to keep its signing key share $\mathrm{SK}_k = (s_{i,k})_{i=1}^{n+4}$;

○ the $N$ verifiable tags Tag$_j$ are generated in two steps, where each party $\mathcal{U}_k$ chooses random $t_{j,k}, v_{j,k} \overset{\$}{\leftarrow} \mathbb{Z}_p$, for $j = 1, ..., N$:

● Each $\mathcal{U}_k$ computes and sends com$_{j,k} = (\hat{C}_{j,k} = t_{j,k} \cdot \hat{V}_{2,1} + v_{j,k} \cdot \hat{V}_{1,1}, \hat{D}_{j,k} = t_{j,k} \cdot \hat{V}_{2,2} + v_{j,k} \cdot \hat{V}_{1,2})$, and $U_{j,k} = t_{j,k} \cdot P, \Theta_{j,k} = v_{j,k} \cdot P$ to the other parties;

● Each $\mathcal{U}_k$ computes $U'_j = \Sigma_k U_{j,k}, \Theta'_j = \Sigma_k \Theta_{j,k}$, and sends $V_{j,k} = t_{j,k} \cdot U'_j, \Psi_{j,k} = v_{j,k} \cdot U'_j$ to the other parties Generating $V'_j = \Sigma_k V_{j,k}, \Psi'_j = \Sigma_k \Psi_{j,k}$, and $\hat{C}'_j = \Sigma_k \hat{C}_{j,k}, \hat{D}'_j = \Sigma_k \hat{D}_{j,k}$; Tag$_j = ((\tau_{j,1} = P, \tau_{j,2} = U'_j, \tau_{j,3} = V'_j), \pi_j = (\mathrm{com}_j = (\hat{C}'_j, \hat{D}'_j), \mathrm{proof}_j = (\Theta'_j, \Psi'_j)))$, on random $t'_j = \Sigma t_{j,k}$ and $v'_j = \Sigma v_{j,k}$;

○ the $N$ pairs of signatures, for $j = 1, ..., N$, on $\vec{M_j} = \vec{x_j} \cdot P$ are also generated in a distributed way, where each $\mathcal{U}_k$ uses $SK_k$ = $(s_{i,k})_i$ and $\text{Tag}_j$ to compute:

$$\Sigma_{j,0,k} = s_{1,k} \cdot H_S + \sum_{i=1}^{n} s_{i+2,k} \cdot M_{j,i} + s_{n+3,k} \cdot U'_j + s_{n+4,k} \cdot V'_j$$

$$\Sigma_{j,1,k} = s_{2,k} \cdot P + \sum_{i=1}^{n} s_{i+2,k} \cdot Z_i + s_{n+3,k} \cdot U'_j + s_{n+4,k} \cdot V'_j$$

Then said multiple independent parties can all compute:

$$\Sigma_{j,0} = \sum_k \Sigma_{j,0,k} \qquad \Sigma_{j,1} = \sum_k \Sigma_{j,1,k}$$

which are signatures of ($H_S$, 0, $\vec{M_j}$) and of (0, $P$, $\vec{Z}$) respectively, under VK for said tag $\text{Tag}_j$.

According to an example, one among the authority device AUT, the sender device SEND and the receiver device REC is taken among: a robot, a smartphone, an Internet of Thing device, an artificial intelligence.

Brief description of the drawings

The aims, objects, as well as the technical features and advantages of the invention will emerge better from the detail description of an embodiment of the invention which is illustrated by the following figures in which:

- Figure 1 is a general schematic view of an embodiment of the present invention.
- Figure 2 is a schematic view of a method according to an embodiment of the present invention.
- Figure 3 is a schematic view of a system according to an embodiment of the present invention.
- Figure 4 is a schematic view of an example of implementation of the present invention.

The drawings are given by way of example and do not limit the invention. They constitute representations of principle intended to facilitate understanding of the invention and are not necessarily on the scale of practical applications.

Detailed description

The examples and conditional language recited herein are principally intended to aid the reader in understanding the principles of the present invention and not to limit its scope to such specifically recited examples and conditions. It will be appreciated that those skilled in the art may devise various arrangements which, although not explicitly described or shown herein, nonetheless embody the principles of the present invention and are included within its spirit and scope.

Furthermore, as an aid to understanding, the following description may describe relatively simplified implementations of the present invention. As persons skilled in the art would understand, various implementations of the present technology may be of a greater complexity.

Moreover, all statements herein reciting principles, aspects, and implementations of the present invention, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present invention. Similarly, it will be appreciated that any flowcharts, and the like represent various processes which may be substantially represented in computer-readable media and so executed by a computer or processor, whether or not such computer or processor is explicitly shown.

The functions of the various elements shown in the figures, including any functional block labeled as a "processor" or "module", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present invention, the processor may be a general-purpose processor, such as a central processing unit (CPU), for example. Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

The present disclosure is here described in detail with reference to non-limiting embodiments illustrated in the drawings.

The present invention relates preferably to a new technique to prove that a ciphertext, preferably an ElGamal ciphertext, contains a message from at least one specific subset $\mathcal{S}$, advantageously using linearly homomorphic signatures and tags. As it will be described, the proofs provided by the present invention are both quite efficient to generate, allowing the use of low-power devices to vote, and randomizable, which can be important for the strong receipt-freeness property. The present invention is well-suited to prevent vote-selling and replay attacks, which are the main threats against the privacy in electronic voting.

Before describing in more details, the present invention, some computational assumption will be presented hereafter.

For the development and security analysis of the present invention, the Generic Group Model (GGM) and the Algebraic Group Model (AGM), see for example the following publications "Victor Shoup. Lower Bounds for Discrete Logarithms and Related Problems. EUROCRYPT 1997: 256-266." and "Georg Fuchsbauer, Eike Kiltz, Julian Loss. The Algebraic Group Model and its Applications. CRYPTO (2) 2018: 33-62.", have been used, where the adversary can make generic operations on the group and pairing evaluations. Hence, any new generated group element comes as a linear combination of the input group elements. The former GGM being a slightly stronger model than the latter AGM, as encodings of group elements can even be chosen at random. But in both cases, any group element provided by the adversary comes with the explicit coefficients of the linear combination of the input elements. This will provide the simulation extractability of the proofs generated by the present invention. The following classical assumptions in a group $\mathbb{G}$ of prime order $p$, for any generator $P \in \mathbb{G}$ is used:

a. Discrete Logarithm (DL) Assumption: Given $(P, U = x \cdot P)$, for $x \xleftarrow{\$} \mathbb{Z}_p$, it is computationally hard to recover $x$;

b. Decisional Diffie-Hellman (DDH) Assumption: For $U \xleftarrow{\$} \mathbb{G}$ and $x, y \xleftarrow{\$} \mathbb{Z}_p$, distributions $\mathcal{D}_{dh} = \{(P, x \cdot P, U, x \cdot U)\}$ and $\mathbb{G}_{\$}^4 = \{(P, x \cdot P, U, y \cdot U)\}$ are computationally hard to distinguish;

c. Square Discrete Logarithm (SDL) Assumption: Given $(P, U = x \cdot P, V = x^2 \cdot P)$, for $x \xleftarrow{\$} \mathbb{Z}_p$, it is computationally hard to recover $x$;

d. Decisional Square Diffie-Hellman (DSDH) Assumption: For $x, y \xleftarrow{\$} \mathbb{Z}_p$, distributions $\mathcal{D}_{sdh} = \{(P, x \cdot P, x^2 \cdot P)\}$ and $\mathbb{G}_{\$}^3 = \{(P, x \cdot P, y \cdot P)\}$ are computationally hard to distinguish.

e. The SXDH assumption claims that the DDH assumption holds in both groups $\mathbb{G}$ and $\widehat{\mathbb{G}}$, when we are in a type III pairing-friendly setting ($\mathbb{G}$, $\widehat{\mathbb{G}}$, $\mathbb{G}_T$, $p$, $P$, $\hat{P}$, $e$).

On a high level, an ElGamal ciphertext ($C_0 = r \cdot P$, $\vec{C} = \vec{M} + r \cdot \vec{Z}$) encrypts a plaintext, seen as a vector $\vec{x} \in \mathbb{Z}_p^n$, encoded as $\vec{M} = \vec{x} \cdot P \in \mathbb{G}^n$, under the encryption key $\vec{Z} \in \mathbb{G}^n$. From the linear property of the ElGamal encryption scheme (see for example the following publication "Taher El Gamal. A Public Key Cryptosystem and a Signature Scheme Based on Discrete Logarithms. CRYPTO 1984: 10-18"), $\vec{C}$ can be transformed into $\mathbf{A} \cdot \vec{C}$, for any matrix $\mathbf{A}$, to get a ciphertext ($C_0$, $\mathbf{A} \cdot \vec{C}$) of $\vec{y} = \mathbf{A} \cdot \vec{x}$, under the encryption key $\vec{Y} = \mathbf{A} \cdot \vec{Z}$. The matrix $\mathbf{A}$ can be a projection matrix, such as $\mathbf{A} = (1,0, ...,0)$, to select one component of $\vec{x}$. As an example, the subset $\mathcal{S}$ can be $\{0,1\} \subset \mathbb{Z}_p^1$, to enforce bit values. The matrix $\mathbf{A}$ can be a sum matrix, such as $\mathbf{A} = (1, ..,1)$, to sum the component of $\vec{x}$. The subset $\mathcal{S}$ can then be a larger range $\{0, ..., k\} \subset \mathbb{Z}_p^1$. The subset $\mathcal{S}$ can be any list of specific vectors $\{\vec{x}_1, ..., \vec{x}_N\} \subseteq \mathbb{Z}_p^n$ that specifies the admissible votes of length $n$. By abuse of notation, the plaintexts are either the vectors of scalars $\vec{x} \in \mathbb{Z}_p^n$ or their encodings $\vec{M} = \vec{x} \cdot P \in \mathbb{G}^n$. Multiple matrices **A** and multiple subsets $\mathcal{S}$ can be used simultaneously on the same ElGamal ciphertext $(C_0, \vec{C})$ for more complex proofs, with multiple proofs of subset membership $\mathrm{PR}_\mathcal{S}$ and $\mathrm{PR}'_\mathcal{S}$.

According to the present invention, first an authority device AUT generates linearly homomorphic signatures under a verification key VK on all the possible trivial ciphertexts of $\vec{M}_1, ..., \vec{M}_N$, as well as on the encryption key: the signatures $\Sigma_{i,0}$ on $(H_\mathcal{S}, 0, \vec{M}_i)$ and $\Sigma_{i,1}$ on $(0, P, \vec{Z})$, under the common tag $\tau_i$, for $i = 1, ..., N$. Then, preferably, for any choice $j$, a random combination of the two signatures (with coefficient 1 for the former), leads to a valid signature under VK on a ciphertext of $\vec{M}_j$, where $\Sigma_0 = \Sigma_{j,0} + r \cdot \Sigma_{j,1}$ is a valid signature on $(H_\mathcal{S}, C_0 = r \cdot P, \vec{C} = r \cdot \vec{Z} + \vec{M}_j) = (H_\mathcal{S}, 0, \vec{M}_j) + r \cdot (0, P, \vec{Z})$ under the tag $\tau = \tau_j$. Preferably, the first components $H_\mathcal{S}$ and 0, later checked with respect to $H_\mathcal{S}$ for $\Sigma_0$, implies the coefficient 1 on $(H_\mathcal{S}, 0, \vec{M}_j)$ in the combination. One can also keep $\Sigma_1 = \Sigma_{j,1}$ as a valid signature on the randomizer $(0, D_0 = P, \vec{D} = \vec{Z})$ under the tag $\tau = \tau_j$, for further randomization.

According to an embodiment, whereas the ciphertexts $\mathcal{C} = (C_0, \vec{C})$ of $\vec{M}_j$ and $\mathcal{D} = (D_0, \vec{D})$ of $\vec{0}$ do not reveal information about $j$, under the DDH assumption (ElGamal encryption), the signatures $(\Sigma_0, \Sigma_1)$ are valid under $\tau_j$ only, which reveals $j$. Hence the need of randomizable tags to make the new tag $\tau$ and the new signatures $(\Sigma_0, \Sigma_1)$ unlinkable to $\Sigma_{j,0}$, $\Sigma_{j,1}$, and $\tau_j$. This is one of the main features of the present invention, which provides the first constant generation-time and constant proof-size for randomizable zero-knowledge proof of subset membership.

As described in the following, $(\mathcal{C}, \mathcal{D})$ and $(\Sigma_0, \Sigma_1, \tau)$ are modified before sending them to keep vote-privacy, thanks to the property of randomizable tags.

As described hereafter, several embodiments of the present invention can be used.

The present invention can use, according to an embodiment, the FHS signature (see for example the following publication "Georg Fuchsbauer, Christian Hanser, Daniel Slamanig. Structure-Preserving Signatures on Equivalence Classes and Constant-Size Anonymous Credentials. J. Cryptol. 32(2): 498-546.") for the Linearly homomorphic Signatures with Randomizable Tags (LH-Sign-RTag), for example in a type III pairing-friendly setting $(\mathbb{G}, \widehat{\mathbb{G}}, \mathbb{G}_T, p, P, \hat{P}, e)$, also presented as a signature on randomizable ciphertexts : a tag is $\tau = (\tau_1 = 1/t \cdot P, \tau_2 = 1/t \cdot \hat{P})$, for a scalar $t \xleftarrow{\$} \mathbb{Z}_p$, the signature of $\vec{M} = (M_k) \in \mathbb{G}^n$ is $\Sigma = t \cdot (\sum s_k \cdot M_k) \in \mathbb{G}$, under VK $= (\hat{P}_k = s_k \cdot \hat{P})_k$, that can both be verified by $e(P, \tau_2) = e(\tau_1, \hat{P})$ and $e(\Sigma, \tau_2) = \Pi e(M_k, \hat{P}_k)$. Using this approach, one can randomize $\tau$ and compute the signature $\Sigma$, in a perfectly unlinkable way. Hence, the privacy relies on the ElGamal encryption scheme only. From a Common Reference String (CRS) of linear length in the size of the subset $\mathcal{S}$ (with the $(\Sigma_{i,0}, \Sigma_{i,1}, \tau_i)_i$ for all the $\vec{M}_i \in \mathcal{S}$), proofs of subset membership are thereafter both size and time efficient (independent of the size of ) as the voter only has to generate a ciphertext $\mathcal{C} = (C_0, \vec{C})$ for appropriate $\vec{M}_j$, and to randomize $(\Sigma_0, \Sigma_1, \tau) \in \mathbb{G}^3 \times \widehat{\mathbb{G}}$, keeping $D = (P, \vec{Z})$ unchanged. According to another embodiment, the present invention can use the SDH signature (see for example the following publication "Chloé Hébant, David Pointcheval. Traceable Constant-Size Multi-authority Credentials. SCN 2022: 411-434."), with Square Diffie-Hellman tags $\tau = (P, t \cdot P, t^2 \cdot P)$, for $t \xleftarrow{\$} \mathbb{Z}_p$.

According to a preferred embodiment, the present invention uses Linearly homomorphic Signatures with Randomizable Tags (LH-Sign-RTag) for zero-knowledge proofs of subset membership on ElGamal ciphertexts. The present invention can also use One-Time Linearly homomorphic Signature (OT-LH-Sign).

According to some embodiments, additional, but optional, steps to make them non-malleable and traceable by the prover are possible and will be described hereafter. Then, combinations of such proofs can be used for any kind of election, to prove the validity of at least one ballot, preferably with randomizability to provide receipt-freeness, i.e. to exclude VS-attacks, and/or non-malleability to provide the strong receipt-freeness, i.e. to exclude CS-attacks.

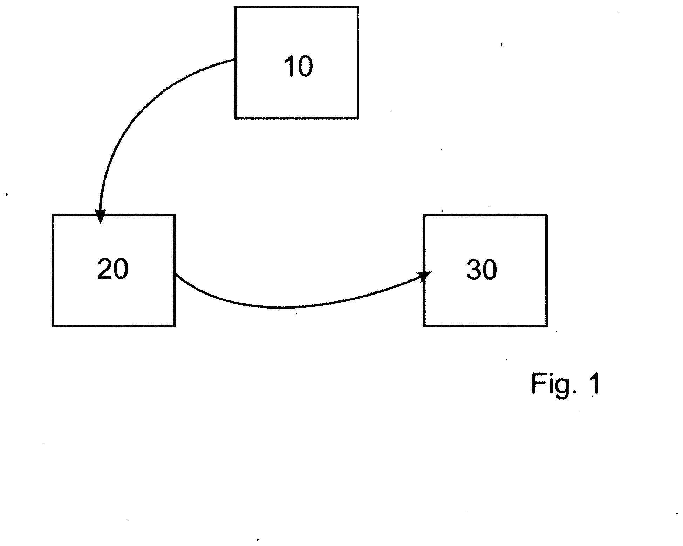

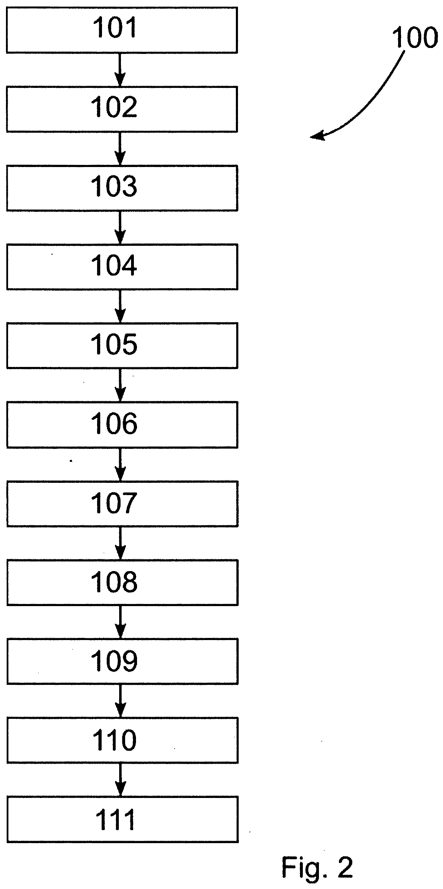

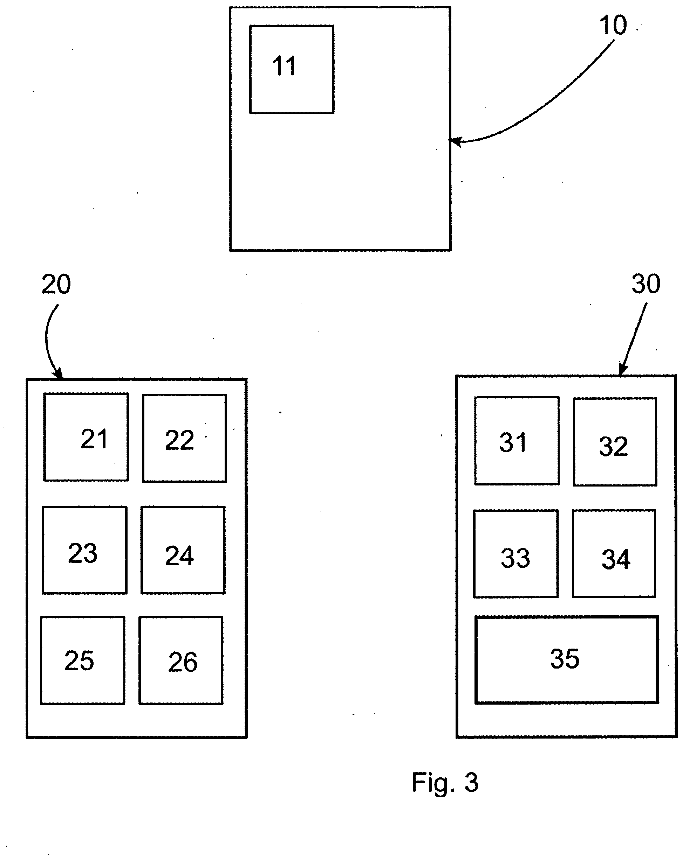

According to an embodiment and as illustrated by figures 1 to 4, the present invention relates to a method 100. Said method 100 involves at least preferably:

    a. an authority device AUT 10, said authority device AUT 10 is configured to generate at least a set of public parameters, said authority device AUT 10 can be distributed among several parties;

    b. a sender device SEND 20, Said sender device SEND 20 is configured to generates at least one ciphertext with at least one proof of subset membership, preferably with at least one non-malleable proof of subset membership;

    c. a receiver device REC 30, said receiver device REC 30 is configured to store at least one final ciphertext, preferably to randomize and/or store at least one final ciphertext.

As described hereafter, a pairing-friendly setting ( $\mathbb{G}$, $\widehat{\mathbb{G}}$, $\mathbb{G}_T$, $p$, $P$, $\hat{P}$, $e$) is used, where the SXDH assumption holds, for the ElGamal encryption privacy.

The present invention considers at least one set $\mathcal{S} = \{\vec{x}_1, \dots, \vec{x}_N\} \subseteq \mathbb{Z}_p^n$ of the $N$ authorized plaintexts, and denote $H_{\mathcal{S}} \in \mathbb{G}$, an element that characterizes the proof on $\mathcal{S}$ (in case of multiple concurrent proofs, on the same ciphertext). It can be $H_{\mathcal{S}} = \mathcal{H}(\mathcal{S})$, where $\mathcal{H}$ is a full-domain hash function into G. Advantageously, $H_{\mathcal{S}}$ is configured to characterize at least one proof $\text{PR}_{\mathcal{S}}$ on the subset $\mathcal{S}$ as described hereafter.

According to an embodiment, the present invention relates to a linearly homomorphic signature method for zero-knowledge proofs of subset membership on at least one ElGamal ciphertext regarding at least one subset $\mathcal{S} = \{\vec{x}_1, \dots, \vec{x}_N\} \subseteq \mathbb{Z}_p^n$ of $N$ authorized plaintexts. Preferably, said plaintexts are authorized by at least said authority device AUT 10. Said cyphertext is advantageously generated from a plaintext taken among said subset $\mathcal{S}$.

Said method is configured to be executable by at least one computing system. Preferably said computing system is communicatively connected to at least one communication network.

Advantageously, and as described hereafter, said method 100 uses randomizable tags.

According to an embodiment, said method 100 comprising at least:

a. An initialization step 101, preferably executed by said authority device AUT 10, preferably using at least one initialization module IM 11. Said initialization step 101 comprises at least a generation step of at least:

i. one pair of ElGamal encryption keys (DK, EK) for plaintexts comprised by a group $\mathbb{G}^n$, and wherein, preferably, the decryption key DK is generated as $\text{DK} = \vec{z} \xleftarrow{\$} \mathbb{Z}_p^n$, and the encryption key EK is generated as $\text{EK} = \vec{Z} = \vec{z} \cdot P \in \mathbb{G}^n$;

ii. one pair of linearly homomorphic signature keys (SK, VK) for messages in $\mathbb{G}^{n+2}$, said messages comprising at least ciphertexts;

iii. N verifiable tags Tag$_j$, for $j$ = 1, ..., $N$;

iv. N pairs of signatures ($\Sigma_{j,0}$, $\Sigma_{j,1}$), for $j$ = 1, ..., $N$, on $\vec{M}_j = \vec{x}_j \cdot P$ such as:

$$\Sigma_{j,0} = \text{Sign}\left(\text{SK}, \text{Tag}_j, \left(H_{\mathcal{S}}, 0, \vec{M}_j\right)\right)$$

$$\Sigma_{j,1} = \text{Sign}\left(\text{SK}, \text{Tag}_j, \left(0, P, \vec{Z}\right)\right)$$

Said initialization step 101 generating at least a set of public parameters comprising:
EK, VK, and (Tag$_j$, $\Sigma_{j,0}$, $\Sigma_{j,1}$) for $j$ = 1,...,$N$

b. A ciphertext creation step 102, preferably with proof of subset membership, preferably executed by at least said sender device SEND 20 using at least one encryption module EM 21. Said ciphertext creation step 102 comprises preferably the generation of at least one ElGamal ciphertext ($C_0$, $\vec{C}$) for at least one authorized plaintext $\vec{x} = \vec{x}_j \in \mathcal{S} \subseteq \mathbb{Z}_p^n$, for a given $j$, with a random scalar $r \xleftarrow{\$} \mathbb{Z}_p$ such as:

$$C_0 = r \cdot P \quad \vec{C} = r \cdot \vec{Z} + \vec{M}_j \quad \text{with } \vec{M}_j = \vec{x}_j \cdot P \in \mathbb{G}^n$$

c. A proof creation step 103, preferably executed by at least said sender device SEND 20 using at least a first proof module PM1 22, of at least one proof $\text{PR}_{\mathcal{S}}$, from Tag$_j$ and $\Sigma_{j,0}$, $\Sigma_{j,1}$ comprising at least:

i. A first randomization step, preferably executed by at least a first randomization module RM1 23. Said first randomization step comprises at least a randomization of at least one Tag$_j$ into Tag', for a given $j$;

ii. A first computation step, preferably executed by at least a first computational module CM1 24, of $\Sigma'_0$ and $\Sigma'_1$,

wherein: $\Sigma"_0$ is a valid signature of ($H_s$, $C_0$, $\vec{C}$) under VK for the tag Tag' and $\Sigma'_1$ is a valid signature of a randomizer (0, $D_0$, $\vec{D}$), under VK for the tag Tag';

d. A generation step 104, preferably executed by at least said sender device SEND 20 using at least a generation module GM 25, comprising at least:

    i. Generating at least a pair of linearly homomorphic signing-verification keys (sk, vk) for messages in $\mathbb{G}^{n+2}$ ; According to an embodiment, the pair of linearly homomorphic signing-verification keys (sk, vk) for messages in $\mathbb{G}^{n+2}$ are generated such as:

$$\text{sk} = \vec{e} \overset{\$}{\leftarrow} \mathbb{Z}_p^{n+2}, \text{ and vk} = \vec{e} \cdot \hat{P} \in \widehat{\mathbb{G}}^{n+2}$$

    ii. Generating at least signatures $\sigma_0$ and $\sigma_1$ wherein:

$$\sigma_0 = \text{Sign}\left(\text{sk}, \left(H_s, C_0, \vec{C}\right)\right)$$

$$\sigma_1 = \text{Sign}\left(\text{sk}, \left(0, D_0, \vec{D}\right)\right)$$

e. A sending step 105, preferably executed by at least said sender device SEND 20 using at least a sending module SM 26, from the sender device SEND 20 to at least one receiver device REC 30, of the ciphertexts ($C_0$, $\vec{C}$) and ($D_0$, $\vec{D}$), together with the proof $\text{PR}_s$ and with the signatures (vk, $\sigma_0$, $\sigma_1$). Said proof $\text{PR}_s$ comprises preferably at least (Tag', $\Sigma"_0$, $\Sigma'_1$);

f. A verification step 106, preferably executed by said receiver device REC 30 using at least one verification module VM 31. Said verification step 106 comprises at least the verification of at least:

    i. the validity of the tag Tag'

    ii. the validity of the signature $\Sigma'_0$ on ($H_s$, $C_0$, $\vec{C}$) under VK for the tag Tag', and the validity of the signature $\Sigma'_1$ on (0, $D_0$, $\vec{D}$), under VK for the tag Tag';

    iii. the validity of the signatures $\sigma_0$ on ($H_s$, $C_0$, $\vec{C}$) under vk and $\sigma_1$ on (0, $D_0$, $\vec{D}$) under vk;

g. A second randomization step 107, preferably executed by at least said receiver device REC 30 using a second randomization module RM2 32, of said ElGamal ciphertext ($C_0$, $\vec{C}$) to generate the ciphertext ($C'_0$, $\vec{C'}$) using a random scalar $s \overset{\$}{\leftarrow} \mathbb{Z}_p$ and a randomizer ($D_0$, $\vec{D}$) such as:

$$C'_0 = C_0 + s \cdot D_0 \qquad \vec{C'} = \vec{C} + s \cdot \vec{D}$$

h. A second computation step 108 of a signature $\Sigma$, preferably executed by at least said receiver device REC 30 using a second computational module CM2 33:

$$\Sigma' = \Sigma'_0 + s \cdot \Sigma'_1$$

Advantageously, $\Sigma'$ is a valid signature of ($H_s$, $C'_0$, $\vec{C'}$) under VK for the tag Tag'; .

i. A third computation step 109 of a signature $\sigma$, preferably executed by at least said receiver device REC 30 using a second computational module CM2 33:

$$\sigma = \sigma_0 + s \cdot \sigma_1$$

Advantageously, σ is a valid signature of ($H_S$, $C'_0$, $C'$) under vk;

j. A second proof creation step 110, preferably executed by at least said receiver device REC 30 using at least a second proof module PM2 34, of a proof $\mathrm{PR}'_S$ from said proof $\mathrm{PR}_S$, (Tag',$\Sigma'_0,\Sigma'_1$), comprising at least:

  i. A third randomization step, preferably executed by the second randomization module RM2 32, of the tag Tag' into Tag";

  ii. A fourth computation step, preferably executed by the second computational module CM2 33, of the signature $\Sigma'$ into $\Sigma''$: $\Sigma''$ being a valid signature of ($H_S$, $C'_0$, $\vec{C}'$) under VK for the tag Tag";

k. A storing step 111, preferably executed by at least said receiver device REC 30 in a storing module STM 35, of the ciphertext ($C'_0$, $\vec{C}'$), together with said proof $\mathrm{PR}'_S$ comprising (Tag",$\Sigma''$), and with the signature (vk, σ), which are configured to be publicly verified and wherein:

  i. Tag" is a valid tag;

  ii. $\Sigma''$ is a valid signature on ($H_S$, $C'_0$, $\vec{C}'$), under VK for the tag Tag" allowing to prove that the plaintext is in the subset $S$;

  iii. σ is a valid signature on ($H_S$, $C'_0$, $\vec{C}'$), under vk.

According to an embodiment, and in a bilinear setting ($\mathbb{G}$, $\widehat{\mathbb{G}}$, $\mathbb{G}_T$, $p$, $P$, $\hat{P}$, $e$):

a. The pair of linearly homomorphic signing-verification keys (sk, vk) for messages in $\mathbb{G}^{n+2}$ are generated such as:

$$\mathrm{sk} = \vec{e} \xleftarrow{\$} \mathbb{Z}_p^{n+2}, \text{ and } \mathrm{vk} = \vec{e} \cdot \hat{P} \in \widehat{\mathbb{G}}^{n+2}$$

b. The signatures $\sigma_0$ and $\sigma_1$ are generated such as:

$$\sigma_0 = e_1 \cdot H_S + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

According to said embodiment, in the initialization step 101, the authority device AUT 10 generates at least:

a. Encryption Keys: A pair of ElGamal encryption keys (DK, EK) for messages in $\mathbb{G}^n$: the decryption key is $\mathrm{DK} = \vec{z} \xleftarrow{\$} \mathbb{Z}_p^n$, and the encryption key is $\mathrm{EK} = \vec{Z} = \vec{z} \cdot P \in \mathbb{G}^n$;

b. Signature Keys: A pair of LH-Sign-RTag signing-verification keys (SK, VK) for messages in $\mathbb{G}^{n+2}$;

c. Verifiable Tags: $N$ verifiable tags $\mathrm{Tag}_j$, for $j = 1, ..., N$;

d. Initial Signatures: $N$ pairs of signatures ($\Sigma_{j,0}$, $\Sigma_{j,1}$), for $j = 1, ..., N$, on $\vec{M}_j = \vec{x}_j \cdot P$:

$$\Sigma_{j,0} = \mathsf{Sign}\left(\mathrm{SK}, \mathrm{Tag}_j, \left(H_S, 0, \vec{M}_j\right)\right) \qquad \Sigma_{j,1} = \mathsf{Sign}\left(\mathrm{SK}, \mathrm{Tag}_j, \left(0, P, \vec{Z}\right)\right)$$

Therefore, at the end of said initialization step 101, public parameters are generated. Said public parameters comprise EK, VK, and ($\mathrm{Tag}_j$, $\Sigma_{j,0}$, $\Sigma_{j,1}$) for $j = 1, ..., N$.

Then, according to said embodiment, the ciphertext, preferably with proof of subset membership, creation step 102 is executed by said sender device SEND 20. Said sender device SEND 20 is configured to:

a. Generate at least one ciphertext: The ElGamal ciphertext $(C_0, \vec{C})$ for his authorized plaintext $\vec{x} = \vec{x}_j \in \mathcal{S} \subseteq \mathbb{Z}_p^n$, with a random scalar $r \xleftarrow{\$} \mathbb{Z}_p$:

$$C_0 = r \cdot P \quad \vec{C} = r \cdot \vec{Z} + \vec{M}_j \quad \text{with } \vec{M}_j = \vec{x}_j \cdot P \in \mathbb{G}^n$$

b. Generate at least one proof of subset membership: the proof $\mathrm{PR}_\mathcal{S}$, from Tag$_j$ and $\Sigma_{j,0}, \Sigma_{j,1}$:

$$\Sigma_0 = \Sigma_{j,0} + r \cdot \Sigma_{j,1} \qquad \Sigma_1 = \Sigma_{j,1}$$

which are valid signatures of $(H_\mathcal{S}, C_0, \vec{C})$ and $(0, P, \vec{Z})$ under VK for the tag Tag = Tag$_j$. Thanks to the property of LH-Sign-RTag, with randomizable tags, Tag can be randomized into Tag' and $\Sigma_0$ and $\Sigma_1$ can be adapted, i.e. computed, into $\Sigma'_0$ and $\Sigma'_1$, respectively: $\Sigma'_0$ and $\Sigma'_1$ are valid signatures of $(H_\mathcal{S}, C_0, \vec{C})$ and $(0, P, \vec{Z})$, respectively, under VK for the tag Tag'.

c. Optionally, allow individual verifiability (for further randomization): A pair of OT-LH-Sign signing-verification keys (sk, vk) for messages in $\mathbb{G}^{n+2}$, and the signatures $\sigma_0$ and $\sigma_1$ such as:

$$\sigma_0 = \mathsf{Sign}\left(\mathsf{sk}, \left(H_\mathcal{S}, C_0, \vec{C}\right)\right)$$

$$\sigma_1 = \mathsf{Sign}\left(\mathsf{sk}, \left(0, P, \vec{Z}\right)\right)$$

d. Optionally, allow non-malleability: The Diffie-Hellman value $W = r \cdot H$, for $H = \mathcal{H}(\mathsf{vk}) \in \mathbb{G}$, together with a Groth-Sahai proof $\pi$ of Diffie-Hellman tuple for $(P, C_0, H, W)$.

The sender device SEND 20 then outputs the ciphertext $(C_0, \vec{C})$, together with the proof $\mathrm{PR}_\mathcal{S}$ that consists of (Tag', $\Sigma'_0$, $\Sigma'_1$), and optionally the signatures (vk, $\sigma_0$, $\sigma_1$) and $(W, \pi)$.
Then, the receiver device REC 30 is configured to:

a. Optionally, before storing the ciphertext, randomize said ciphertext, after having verified all the values $(C_0, \vec{C})$, (Tag', $\Sigma'_0$, $\Sigma'_1$), (vk, $\sigma_0$, $\sigma_1$), and $(W, \pi)$.

b. Verify all these values, such as, for example:

   i. the validity of Tag'

   ii. the validity of the signatures $\Sigma'_0$ and $\Sigma'_1$ on $(H_\mathcal{S}, C_0, \vec{C})$ and $(0, P, \vec{Z})$, respectively, under VK for the tag Tag';

   iii. the validity of the signatures $\sigma_0$ and $\sigma_1$ on $(H_\mathcal{S}, C_0, \vec{C})$ and $(0, P, \vec{Z})$, respectively, under vk;

   iv. the validity of the Diffie-Hellman proof $\pi$ on the tuple $(P, C_0, H = \mathcal{H}(\mathsf{vk}), W)$.

The receiver device REC 30 is also configured to randomize the ElGamal ciphertext $(C_0, \vec{C})$ using a random scalar $s \xleftarrow{\$} \mathbb{Z}_p$:

$$C'_0 = C_0 + s \cdot P \qquad \vec{C'} = \vec{C} + s \cdot \vec{Z}$$

The receiver device REC 30 is also configured to compute, i.e. adapt, signatures:

$$\Sigma' = \Sigma'_0 + s \cdot \Sigma'_1 \qquad \sigma = \sigma_0 + s \cdot \sigma_1$$

Preferably, $\Sigma'$ is a valid signature of $(H_s, C'_0, \vec{C'})$ under VK for the tag Tag', and $\sigma$ is a valid signature of $(H_s, C'_0, \vec{C'})$ under vk. Thanks to the property of LH-Sign-RTag, with randomizable tags, Tag' can be randomized into Tag" and $\Sigma'$ can be computed, i.e. adapted, into $\Sigma''$: $\Sigma''$ is a valid signature of $(H_s, C'_0, \vec{C'})$ under VK for the tag Tag".

The receiver device REC 30 can also compute the randomized Groth-Sahai proof $\pi'$, for $W' = W + s \cdot H$, using $s$ and $\pi$.

The receiver device REC 30 is configured to store the ciphertext $(C'_0, \vec{C'})$, together with the proof that consists of (Tag", $\Sigma''$), the signature (vk, $\sigma$), and $(W', \pi')$, which can be publicly verified:

    a. Tag" is a valid tag;

    b. $\Sigma''$ is a valid signature on $(H_s, C'_0, \vec{C'})$, under VK for the tag Tag". This proves the plaintext must be in $\mathcal{S}$;

    c. $\sigma$ is a valid signature on $(H_s, C'_0, \vec{C'})$ under vk. This ensures the sender that $(C'_0, \vec{C'})$ contains the same plaintext as his initial ciphertext $(C_0, \vec{C})$, but without knowing the actual randomness, which exclude VS-attacks;

    d. $\pi'$ is a valid Diffie-Hellman proof on the tuple $(P, C'_0, H = \mathcal{H}(vk), W')$. This ensures that only the owner of vk can have initiated the ciphertext, which excludes malleability or repetition, and thus CS-attacks.

According to an embodiment, four random points $\hat{V}_{1,1}, \hat{V}_{1,2}, \hat{V}_{2,1}, \hat{V}_{2,2} \xleftarrow{\$} \hat{\mathbb{G}}$ are generated and appended to the public parameters, preferably for the Groth-Sahai proofs.

According to an embodiment, the proof $PR'_s$, from $Tag_j$ and $\Sigma_{j,0}, \Sigma_{j,1}$, is generated such as:

$$\Sigma_0 = \Sigma_{j,0} + r \cdot \Sigma_{j,1} \qquad \Sigma_1 = \Sigma_{j,1}$$

Wherein $\Sigma_0$ is a valid signature of $(H_s, C_0, \vec{C})$ under VK for the tag Tag = $Tag_j$, and wherein $\Sigma_1$ is a valid signature of $(0, P, \vec{Z})$ under VK for the tag Tag = $Tag_j$ ;

According to an embodiment, the generation step 104 comprises generating a Diffie-Hellman value $W = r \cdot H$, for $H = \mathcal{H}(vk) \in \mathbb{G}$.

According to an embodiment, the generation step 104 comprises generating a Groth-Sahai proof $\pi$ of Diffie-Hellman tuple for $(P, C_0, H, W)$.

According to an embodiment, the sending step 105 from the sender device SEND 20 to the receiver device REC 30 comprises the sending of the value $W$ and of the proof $\pi$.

According to an embodiment, the verification step 106 comprises the verification of the validity of the signature $\sigma$ such as $\sigma$ is a valid signature on $(H_s, C'_0, \vec{C'})$ under vk allowing the sender device SEND 20 to know that $(C'_0, \vec{C'})$ contains the same plaintext as its initial ciphertext $(C_0, \vec{C})$, but without knowing the actual randomness, which excludes VS-attacks.

According to an embodiment, the verification step 106 comprises the verification of the validity of the signatures $\sigma_0$ on $(, C_0, \vec{C})$ under vk and $\sigma_1$ on $(0, P, \vec{Z})$ under vk.

According to an embodiment, the verification step 106 comprises the verification of the validity of the Diffie-Hellman proof $\pi$ on the tuple $(P, C_0, H = \mathcal{H}(vk), W)$.

According to an embodiment, the randomizer $(0, D_0, \vec{D})$ is equal to $(0, P, \vec{Z})$ such as $D_0 = P$ and $\vec{D} = \vec{Z}$ wherein P is the generator of $\mathbb{G}$ and $\vec{Z}$ is the public encryption key.

According to an embodiment, the randomization of said ElGamal ciphertext $(C_0, \vec{C})$ to generate the ciphertext $(C'_0, \vec{C'})$ using a random scalar $s \xleftarrow{\$} \mathbb{Z}_p$ is such as:

$$C'_0 = C_0 + s \cdot P \quad \vec{C}' = \vec{C} + s \cdot \vec{Z}$$

According to an embodiment, the second computation step 108 comprises a computation of the randomized Groth-Sahai proof $\pi'$, $\pi'$ being a valid Diffie-Hellman proof on the tuple $(P, C'_0, H = \mathcal{H}(vk), W')$, *for $W' = W + s \cdot H$, using to s and $\pi$.*

According to an embodiment, the storing step 111 comprises the storing of $(W', \pi')$.

According to another embodiment, the present invention can use FHS LH-Sign-RTag (for Fuchsbauer-Hanser-Slamanig, see for example the following publication "Georg Fuchsbauer, Christian Hanser, Daniel Slamanig. Structure-Preserving Signatures on Equivalence Classes and Constant-Size Anonymous Credentials. J. Cryptol. 32(2): 498-546.").

According to said embodiment, the present invention uses tags of the form Tag = $(\tau_1 = 1/t \cdot P, \tau_2 = 1/t \cdot \hat{P})$, for a scalar $t \xleftarrow{\$} \mathbb{Z}_p$ Advantageously, it is self-verifiable as one can check that $e(P, \tau_2) = e(\tau_1, \hat{P})$ wherein $e(Q, \hat{Q})$ is a pairing function between two elements of the two groups $\mathbb{G}$ and $\widehat{\mathbb{G}}$. The signature of $\vec{M} = (M_i) \in \mathbb{G}^n$ is $\Sigma = t \cdot (\sum s_i \cdot M_i) \in \mathbb{G}$, under VK $= \vec{s} \cdot \hat{P}$, that can be verified by $e(\Sigma, \tau_2) = \Pi e(M_i, VK_i)$.

Preferably, one can easily randomize Tag and adapt, i.e. compute, the signature $\Sigma$, in a perfectly unlinkable way:

Tag' = $1/t' \cdot$ Tag = $(\tau'_1 = 1/t' \cdot \tau_1, \tau'_2 = 1/t' \cdot \tau_2)$, for a scalar $t' \xleftarrow{\$} \mathbb{Z}_p$, and $\Sigma' = t' \cdot \Sigma$.

As the tags are self-verifiable tags, according to said embodiment, this approach is quite efficient, from both the computation and communication points of view.

Preferably, the initialization step 101 is not distributed among multiple users or authorities. Advantageously, the verifiable tags and/or the initial signatures are generated on at least one secure device, i.e. one authority device AUT 10.

According to said embodiment, called the FHS embodiment, the authority device AUT 10 is configured to generate:

a. Encryption Keys: A pair of ElGamal encryption keys (DK, EK) for messages in $\mathbb{G}^n$: the decryption key is DK $= \vec{z} \xleftarrow{\$} \mathbb{Z}_p^n$, and the encryption key is EK $= \vec{Z} = \vec{z} \cdot P \in \mathbb{G}^n$;

b. Signature Keys: A pair of LH-Sign-RTag signing-verification keys SK $= \vec{s} \xleftarrow{\$} \mathbb{Z}_p^{n+2}$, and VK $= \vec{s} \cdot \hat{P} \in \widehat{\mathbb{G}}^{n+2}$;

c. Verifiable Tags: *N* verifiable tags $\text{Tag}_j = (\tau_{j,1} = 1/t_j \cdot P, \tau_{j,2} = 1/t_j \cdot \hat{P})$, with $t_j \xleftarrow{\$} \mathbb{Z}_p$, for $j = 1, \ldots, N$;

d. Initial Signatures: *N* pairs of signatures, for $j = 1, \ldots, N$, on $\vec{M}_j = \vec{x}_j \cdot P$:

$$\Sigma_{j,0} = t_j \cdot \left( s_1 \cdot H_s + \sum_{i=1}^{n} s_{i+2} \cdot M_{j,i} \right)$$

$$\Sigma_{j,1} = t_j \cdot \left( s_2 \cdot P + \sum_{i=1}^{n} s_{i+2} \cdot Z_i \right)$$

Therefore, at the end of said initialization step, public parameters are generated. Said public parameters comprise EK, VK, and $(\text{Tag}_j, \Sigma_{j,0}, \Sigma_{j,1})$ for $j = 1, \ldots, N$.

Then, according to said embodiment, the ciphertext, preferably with proof of subset membership, creation step 102 is executed by said sender device SEND 20. Said sender device SEND 20 is configured to generate at least:

a. One ciphertext: the ElGamal ciphertext $(C_0, \vec{C})$ for its authorized plaintext $\vec{x} = \vec{x}_j \in \mathcal{S} \subseteq \mathbb{Z}_p^n$, with a random scalar $r \xleftarrow{\$} \mathbb{Z}_p$:

$$C_0 = r \cdot P \quad \vec{C} = r \cdot \vec{Z} + \vec{M}_j \quad \text{with } \vec{M}_j = \vec{x}_j \cdot P \in \mathbb{G}^n$$

b. Proof of subset membership: the proof $\mathrm{PR}_{\mathcal{S}}$, from $\mathrm{Tag}_j$ and $\Sigma_{j,0}, \Sigma_{j,1}$:

$$\Sigma_0 = \Sigma_{j,0} + r \cdot \Sigma_{j,1} \qquad \Sigma_1 = \Sigma_{j,1}$$

which are valid signatures of $(, C_0, \vec{C})$ and $(0, P, \vec{Z}$ under VK for the tag Tag = $\mathrm{Tag}_j$. Thanks to the property of LH-Sign-RTag, with randomizable tags, Tag = $(\tau_1, \tau_2)$ can be randomized into Tag' = $(\tau'_1, \tau'_2)$, for a random $t' \xleftarrow{\$} \mathbb{Z}_p$, and $\Sigma_0$ and $\Sigma_1$ can be computed, i.e. adapted, into $\Sigma'_0$ and $\Sigma'_1$, respectively:

$$\mathrm{Tag}' = \left( \tau'_1 = \frac{1}{t'} \cdot \tau_1, \tau'_2 = \frac{1}{t'} \cdot \tau_2 \right)$$

$$\Sigma'_0 = t' \cdot \Sigma_0 \quad \Sigma'_1 = t' \cdot \Sigma_1$$

c. Individual verifiability: A pair of OT-LH-Sign signing-verification keys $\mathrm{sk} = \vec{e} \xleftarrow{\$} \mathbb{Z}_p^{n+2}$, and $\mathrm{vk} = \vec{e} \cdot \hat{P} \in \widehat{\mathbb{G}}^{n+2}$, and the signatures:

$$\sigma_0 = e_1 \cdot H_{\mathcal{S}} + e_2 \cdot C_0 + \sum_{i=1}^n e_{i+2} \cdot C_i$$

$$\sigma_1 = e_2 \cdot P + \sum_{i=1}^n e_{i+2} \cdot Z_i$$

d. Non-Malleability: The Diffie-Hellman value $W = r \cdot H$, for $H = \mathcal{H}(\mathrm{vk}) \in \mathbb{G}$, together with a Groth-Sahai proof $\pi =$ (com, proof) of Diffie-Hellman tuple for $(P, C_0, H, W)$.

The sender device SEND 20 then outputs the ciphertext $(C_0, \vec{C})$, together with the proof that consists of (Tag', $\Sigma'_0, \Sigma'_1$), the signatures (vk, $\sigma_0, \sigma_1$), and $(W, \pi)$.
Then, according to said embodiment, the receiver device REC 30 is configured to:

a. Before storing the ciphertext, randomize said ciphertext, after having verified all the values $(C_0, \vec{C})$, (Tag', $\Sigma'_0, \Sigma'_1$), (vk, $\sigma_0, \sigma_1$), and $(W, \pi)$ such as:

$$e(P, \tau'_2) = e(\tau'_1, \hat{P})$$

$$e(\Sigma'_0, \tau'_2) = e(H_{\mathcal{S}}, \mathrm{VK}_1) \cdot e(C_0, \mathrm{VK}_2) \cdot \prod_{i=1}^n e(C_i, \mathrm{VK}_{i+2})$$

$$e(\Sigma'_1, \tau'_2) = e(P, \mathrm{VK}_2) \cdot \prod_{i=1}^n e(Z_i, \mathrm{VK}_{i+2})$$

$$e(\sigma_0, \hat{P}) = e(H_{\mathcal{S}}, \mathrm{vk}_1) \cdot e(C_0, \mathrm{vk}_2) \cdot \prod_{i=1}^n e(C_i, \mathrm{vk}_{i+2})$$

$$e\left(\sigma_1, \hat{P}\right) = e(P, \mathrm{vk}_2) \cdot \prod_{i=1}^{n} e\left(Z_i, \mathrm{vk}_{i+2}\right)$$

and the validity of the Diffie-Hellman proof $\pi$ = (com, proof) on the tuple $(P, C_0, H = \mathcal{H}(\mathrm{vk}), W)$.

b. Randomize the ElGamal ciphertext $(C_0, \vec{C})$ using a random scalar $s \xleftarrow{\$} \mathbb{Z}_p$

$$C'_0 = C_0 + s \cdot P \qquad \vec{C}' = \vec{C} + s \cdot \vec{Z}$$

c. Compute the signatures and randomize the tag, with $t'' \xleftarrow{\$} \mathbb{Z}_p$, such as:

$$\mathrm{Tag}'' = \left(\tau''_1 = \frac{1}{t''} \cdot \tau'_1, \tau''_2 = \frac{1}{t''} \cdot \tau'_2\right)$$

$$\Sigma'' = t'' \cdot (\Sigma'_0 + s \cdot \Sigma'_1)$$

$$\sigma = \sigma_0 + s \cdot \sigma_1$$

d. Compute the randomized Groth-Sahai proof $\pi'$, for W' = $W + s \cdot H$, using s and $\pi$.
e. Store the ciphertext $(C'_0, \vec{C}')$, together with the proof that consists of (Tag",$\Sigma''$), the signature (vk, $\sigma$), and $(W', \pi')$, which can be publicly verified.

According to said embodiment, the N verifiable tags $\mathrm{Tag}_j$ are generated such as $\mathrm{Tag}_j = (\tau_{j,1} = 1/t_j \cdot P, \tau_{j,2} = 1/t_j \cdot \hat{P})$, with $t_j \xleftarrow{\$} \mathbb{Z}_p$, for j = 1, ... , N;

According to said embodiment, the N pairs of signatures, for j = 1, ... , N, on $\vec{M}_j = \vec{x}_j \cdot P$ are generated such as:

$$\Sigma_{j,0} = t_j \cdot \left(s_1 \cdot H_S + \sum_{i=1}^{n} s_{i+2} \cdot M_{j,i}\right) \qquad \Sigma_{j,1} = t_j \cdot \left(s_2 \cdot P + \sum_{i=1}^{n} s_{i+2} \cdot Z_i\right)$$

According to said embodiment, the randomization of at least Tag = $(\tau_1, \tau_2)$ into Tag' = $(\tau'_1, \tau'_2)$, for a random $t' \xleftarrow{\$} \mathbb{Z}_p$, is such as:

$$\mathrm{Tag}' = (\tau'_1 = 1/t' \cdot \tau_1, \tau'_2 = 1/t' \cdot \tau_2)$$

According to said embodiment, the computation of $\Sigma_0$ and $\Sigma_1$ into $\Sigma'_0$ and $\Sigma'_1$, respectively, is such as:

$$\Sigma'_0 = t' \cdot \Sigma_0 \qquad \Sigma'_1 = t' \cdot \Sigma_1$$

According to said embodiment, embodiment, the randomizer $(0, D_0, \vec{D})$ is equal to $(0, P, \vec{Z})$ such as $D_0 = P$ and $\vec{D} = \vec{Z}$ wherein P is the generator of $\mathbb{G}$ and $\vec{Z}$ is the public encryption key. The signatures $\sigma_0$ and $\sigma_1$ are such as:

$$\sigma_0 = e_1 \cdot H_S + e_2 \cdot C_0 + \sum_{i=1}^{n} e_{i+2} \cdot C_i$$

$$\sigma_1 = e_2 \cdot P + \sum_{i=1}^{n} e_{i+2} \cdot Z_i$$

According to said embodiment, the verification step comprises the verification of the following equalities:

$$e(P, \tau'_2) = e(\tau'_1, \hat{P})$$

$$e(\Sigma'_0, \tau'_2) = e(H_S, \mathsf{VK}_1) \cdot e(C_0, \mathsf{VK}_2) \cdot \prod_{i=1}^{n} e(C_i, \mathsf{VK}_{i+2})$$

$$e(\Sigma'_1, \tau'_2) = e(P, \mathsf{VK}_2) \cdot \prod_{i=1}^{n} e(Z_i, \mathsf{VK}_{i+2})$$

$$e(\sigma_0, \hat{P}) = e(H_S, \mathsf{vk}_1) \cdot e(C_0, \mathsf{vk}_2) \cdot \prod_{i=1}^{n} e(C_i, \mathsf{vk}_{i+2})$$

$$e(\sigma_1, \hat{P}) = e(P, \mathsf{vk}_2) \cdot \prod_{i=1}^{n} e(Z_i, \mathsf{vk}_{i+2})$$

wherein $e(Q, \hat{Q})$ is a pairing function between two elements of the two groups $\mathbb{G}$ and $\widehat{\mathbb{G}}$, and the validity of the Diffie-Hellman proof $\pi =$ (com, proof) on the tuple $(P, C_0, H = \mathcal{H}(\mathsf{vk}), W)$.

According to said embodiment, the third randomization step of the tag Tag' into Tag'' is such as:

$$\mathsf{Tag}'' = (\tau''_1 = 1/t'' \cdot \tau'_1, \tau''_2 = 1/t'' \cdot \tau'_2)$$

According to said embodiment, the second computation step of the signatures $\Sigma$ into $\Sigma'$: $\Sigma'$ being a valid signature of ($H_S, C'_0, \vec{C}'$) under VK for the tag Tag'', is such as:

$$\Sigma'' = t'' \cdot (\Sigma'_0 + s \cdot \Sigma'_1)$$

According to said embodiment, the second computation step comprises a computation of the randomized Groth-Sahai proof $\pi'$, for W' = $W + s \cdot H$, using s and $\pi$.
According to said embodiment, the storing step 111 by the receiver device REC 30 in a storing module STM 35 comprises the storing of $(W', \pi')$.

Therefore, according to said embodiment, for the OT-LH-Sign, one can use $\mathsf{sk} = \vec{s} \xleftarrow{\$} \mathbb{Z}_p^n$ and $\mathsf{vk} = \vec{s} \cdot \hat{P}$. Then,

$\sigma = \mathsf{Sign}(\mathsf{sk}, \vec{M}) = \langle \vec{s}, \vec{M} \rangle = \sum s_i \cdot M_i \in \mathbb{G}$ can be verified as $e(\sigma, \hat{P}) = \Pi e(M_i, \mathsf{vk}_i)$.

Preferably, for Groth-Sahai proofs (see for example the following publication "Jens Groth, Amit Sahai. Efficient Non-interactive Proof Systems for Bilinear Groups. EUROCRYPT 2008: 415-432"), one needs a random tuple $(\hat{V}_{1,1}, \hat{V}_{1,2}, \hat{V}_{2,1}, \hat{V}_{2,2}) \in \widehat{\mathbb{G}}^4$, and the proof $\pi =$ (com, proof), consists of a commitment com of the secret witness known by the prover, and a proof proof, both being additively homomorphic, and publicly verifiable. The properties and the computations for those proofs will not be described, as it is well known by the skilled person in the art.
Now, a third embodiment will be described, called SDH embodiment. Some properties regarding said embodiment will be presented before the features of said embodiment.

According to said embodiment, the set S can be written $\mathcal{S}_{\mathsf{sdh}} = \{(P, x \cdot P, x^2 \cdot P); P \in \mathbb{G}^*, x \in \mathbb{Z}_p\}$ of non-trivial SDH tuples (where $\mathbb{G}^*$ denotes the generators of $\mathbb{G}$). Said set $\mathcal{S}_{\mathsf{sdh}}$ can be partitioned into $\mathcal{S}_{\mathsf{sdh}}(x) = \{(P, x \cdot P, x^2 \cdot P); P \in \mathbb{G}^*\}$, for all $x \in \mathbb{Z}_p$, which can be seen as classes of equivalences.

As well known by the skilled person (see for example the following publication "Chloé Hébant, David Pointcheval. Traceable Constant-Size Multi-authority Credentials. SCN 2022: 411-434."), the DSDH and the DDH assumptions imply the unlinkability of two SDH tuples. Furthermore, under the SDL assumption, classes of equivalence cannot be mixed under known linear combinations: For any $P \in \mathbb{G}$, the DDH and DSDH assumptions imply the indistinguishability of $\mathcal{D}_0$ and $\mathcal{D}_1$, whith $U \xleftarrow{\$} \mathbb{G}, x, y \xleftarrow{\$} \mathbb{Z}_p$ :

$$\mathcal{D}_0 = \{(P, x \cdot P, x^2 \cdot P, U, x \cdot U, x^2 \cdot U)\} \quad and \quad \mathcal{D}_1 = \{(P, x \cdot P, x^2 \cdot P, U, y \cdot U, y^2 \cdot U)\}$$

Given $n$ SDH tuples $(P, U_i = x_i \cdot P, V_i = x_i \cdot U_i)$, for any generator $P$, but random $x_i \xleftarrow{\$} \mathbb{Z}_p$, outputting $(\alpha_i)_{i=1,\ldots,n}$ such that $(H = \sum \alpha_i \cdot P, U = \sum \alpha_i \cdot U_i, V = \sum \alpha_i \cdot V_i)$ is an SDH tuple, with at least two non-zero coefficients $\alpha_i$, is computationally hard under the SDL assumption.

However, verifying an SDH tuple requires an additional proof, which can be done with the well-known Groth-Sahai methodology, with the CRS $(\hat{V}_{1,1}, \hat{V}_{1,2}, \hat{V}_{2,1}, \hat{V}_{2,2})$. Given an SDH tuple $(H, U = x \cdot H, V = x \cdot U)$ in $\mathbb{G}$, knowing the witness $x \in \mathbb{Z}_p$, one first commits it: com $= (\hat{C} = x \cdot \hat{V}_{2,1} + v \cdot \hat{V}_{1,1}, \hat{D} = x \cdot \hat{V}_{2,2} + v \cdot \hat{V}_{1,2})$, for a random $v \xleftarrow{\$} \mathbb{Z}_p$, and one sets proof $= (\Theta = v \cdot H, \Psi = v \cdot U)$. Preferably, this proof is randomizable, as one can publicly update v in both com and proof (advantageously without knowing it), making the new com/proof unlinkable to the initial ones, under the DDH assumption in G.

According to said embodiment, an SDH tag is a tuple $\tau = (\vec{\tau}, \text{proof}, \text{com})$, with valid proof, and two tags are said equivalent if they not only are for the same scalar x, but also for the same commitment com.

Given $n$ equivalent SDH tags, with $\vec{\tau}_i = (H_i, U_i = x \cdot H_i, V_i = x^2 \cdot H_i)$, for the same $x \in \mathbb{Z}_p$, their proofs proof$_i = (\Theta_i = v \cdot H_i, \Psi_i = v \cdot U_i)$, for the same v, and thus the common commitment com $= (\hat{C} = x \cdot \hat{V}_{2,1} + v \cdot \hat{V}_{1,1}, \hat{D} = x \cdot \hat{V}_{2,2} + v \cdot \hat{V}_{1,2})$, for any linear combination $\vec{\tau} = \sum \alpha_i \cdot \vec{\tau}_i$, proof $= (\Theta = \sum \alpha_i \cdot \Theta_i, \Psi = \sum \alpha_i \cdot \Psi_i)$ is a valid proof for com.

Actually, $\vec{\tau} = (H, U, V)$ with $H = \sum \alpha_i \cdot H_i$, hence the validity of proof. The proof and the commitment can thereafter be randomized, with a new $v \xleftarrow{\$} \mathbb{Z}_p$ .

According to said embodiment, and because of the non-miscibility of the SDH tags, any One-Time Linearly homomorphic signature (OT-LH-Sign) can be transformed into a Linearly homomorphic Signature. The unlinkability of the SDH tags make them randomizable tags (LH-Sign-RTag).

Now we will describe a signature scheme with messages in $\mathcal{M} = \mathbb{G}^n$ according to said embodiment:

a. Setup($1^\kappa$): Given $\kappa$, it outputs param, that contains a pairing-friendly setting ( $\mathbb{G}, \hat{\mathbb{G}}, \mathbb{G}_T$ , and a random tuple $\left(\hat{V}_{1,1}, \hat{V}_{1,2}, \hat{V}_{2,1}, \hat{V}_{2,2}\right) \xleftarrow{\$} \hat{\mathbb{G}}^4$ ;

b. Keygen(param,$n$): Given param and an integer n, it generates $sk = \vec{s} \xleftarrow{\$} \mathbb{Z}_p^{n+3}$ , sets $vk = \vec{s} \cdot \hat{P} = \left(\hat{P}_i = s_i \cdot \hat{P}\right)_{i=1}^{n+3} \in \hat{\mathbb{G}}^{n+3}$ , and outputs the key pair (sk, vk);

c. NewTag(param): Generates a tag $\tau = (\vec{\tau} = (P, t \cdot P, t^2 \cdot P), \text{proof}, \text{com})$, for random scalars $t, v \xleftarrow{\$} \mathbb{Z}_p$ , used in proof and com;

d. Sign(sk, $\tau$, $\vec{M}$): Given a signing key sk, a tag $\tau = (\vec{\tau}, \text{proof}, \text{com})$, and a vector-message $\vec{M} = (M_i)_i \in \mathbb{G}^n$ , it outputs the signature $\sigma = \langle \vec{s}, \vec{M} \| \vec{\tau} \rangle \in \mathbb{G}$ , where $\vec{M} \| \vec{\tau} = (M_1, \ldots, M_n, \tau_1, \tau_2, \tau_3) \in \mathbb{G}^{n+3}$ ;

e. DerivSign $\left(vk, \left(w_i, \tau_i, \vec{M}_i, \sigma_i\right)_{i=1}^{\ell}\right)$ : Given a public key vk and $\ell$ tuples of weights $w_i \in \mathbb{Z}_p$ and signed messages $\vec{M}_i$ in $\sigma_i$, under equivalent tags $\tau_i$, it outputs the signature $\sigma = \sum w_i \cdot \sigma_i$, on the vector $\vec{M} = \sum_{i=1}^{\ell} w_i \cdot \vec{M}_i$ , valid under the equivalent tag $\tau'$ with $\vec{\tau}' = \sum w_i \cdot \vec{\tau}_i$, and adapted proof proof', but the same commitment com;

f. Verif(vk,$\tau$,$\vec{M}$,$\sigma$): Given a verification key vk, a tag $\tau$, a vector-message $\vec{M}$ and a signature $\sigma$, it outputs 1 if $e(\sigma, \hat{P}) = \prod_{i=1}^{n} e\left(M_i, \hat{P}_i\right) \times \prod_{i=1}^{3} e\left(\tau_i, \hat{P}_{n+i}\right)$ and the tag $\tau$ is valid, and 0 otherwise.

One of the main advantages of proofs using SDH-based signatures, compared to the FHS-signatures, is the possible distributed setup, key generation, tag generation, and signatures, among multiple users $(\mathcal{U}_k)_k$ according to the following signatures scheme:

a. Setup($1^\kappa$,k): They all agree on the bilinear setting ( $\mathbb{G}, \widehat{\mathbb{G}}, \mathbb{G}_T$ ,$p,P,\hat{P},e$). User $\mathcal{U}_k$ chooses and sends random points $\hat{V}_{1,1,k}, \hat{V}_{1,2,k}, \hat{V}_{2,1,k}, \hat{V}_{2,2,k} \xleftarrow{\$} \widehat{\mathbb{G}}$ . This leads to the global verification points $\hat{V}_{1,1} = \Sigma_k \hat{V}_{1,1,k}$, $\hat{V}_{1,2} = \Sigma_k \hat{V}_{1,2,k}$, $\hat{V}_{2,1} = \Sigma_k \hat{V}_{2,1,k}$, $\hat{V}_{2,2} = \Sigma_k \hat{V}_{2,2,k}$, to complete param.

b. Keygen(param, n, k): Given the public parameters param, $\mathcal{U}_k$ randomly chooses $s_{i,k} \xleftarrow{\$} \mathbb{Z}_p$ , for i = 1, ...,n + 3. $\mathcal{U}_k$ computes and sends $vk_k = \left(\hat{P}_{i,k} = s_{i,k} \cdot \hat{P}\right)_{i=1}^{n+3}$. This leads to the global verification key vk = $\Sigma_k$ vk$_k$, while $\mathcal{U}_k$ keeps its signing key share $sk_k = \left(sk_{i,k} = s_{i,k}\right)_{i=1}^{n+3}$ .

c. NewTag(param): each user $\mathcal{U}_k$ chooses random $t_k, v_k \xleftarrow{\$} \mathbb{Z}_p$ :

    i. $\mathcal{U}_k$ computes and sends com$_k$ = ($\hat{C}_k = t_k \cdot \hat{V}_{2,1} + v_k \cdot \hat{V}_{1,1}$, $\hat{D}_k = t_k \cdot \hat{V}_{2,2} + v_k \cdot \hat{V}_{1,2}$), and $U_k = t_k \cdot P$, $\Theta_k = v_k \cdot P$;

    ii. $\mathcal{U}_k$ computes $U = \Sigma_k U_k$, $\Theta = \Sigma_k \Theta_k$, and sends $V_k = t_k \cdot U$, $\Psi_k = v_k \cdot U$.

This allows to compute $V = \Sigma_k V_k$, $\Psi = \Sigma_k \Psi_k$, and $\hat{C} = \Sigma_k \hat{C}_k$, $\hat{D} = \Sigma_k \hat{D}_k$. This leads to $\tau = (\vec{\tau} = (P,U,V)$, proof = $(\Theta, \Psi)$, com = $(\hat{C},\hat{D}))$, on $t = \Sigma t_k$ and $v = \Sigma v_k$.

d. Sign(sk$_k$,$\tau$,$\vec{M}$ = ($M_i$)$_i$): Given signing-key shares sk$_k$ = ($s_{i,k}$)$_i$, a tag $\tau$ = ($\vec{\tau}$, proof, com) and a vector-message $\vec{M} = (M_i)_i \in \mathbb{G}^n$, one outputs the signature share $\sigma_k = \sum_{i=1}^{n} s_{i,k} \cdot M_i + \sum_{i=1}^{3} s_{n+i,k} \cdot \tau_i \in \mathbb{G}$ . From those shares, one can compute $\sigma = \Sigma_k \sigma_k$.

According to said third embodiment, said public parameters VK, ($\hat{V}_{1,1}, \hat{V}_{1,2}, \hat{V}_{2,1}, \hat{V}_{2,2}$), and (Tag$_j$,$\Sigma_{j,0}$,$\Sigma_{j,1}$) for j = 1, ...,N, are generated in a distributed way between multiple independent parties $(\mathcal{U}_k)_k$:

o Said multiple independent parties $(\mathcal{U}_k)_k$ agree on a bilinear setting ( $\mathbb{G}, \widehat{\mathbb{G}}, \mathbb{G}_T$ , $p,P,\hat{P},e$);

o Each party $\mathcal{U}_k$ chooses and sends random points $\hat{V}_{1,1,k}, \hat{V}_{1,2,k}, \hat{V}_{2,1,k}, \hat{V}_{2,2,k} \xleftarrow{\$} \widehat{\mathbb{G}}$ to the others parties, generating global verification points $\hat{V}_{1,1} = \Sigma_k$ these global verification points being configured to be computed by said multiple independent parties;

o the pair of linearly homomorphic signing-verification keys SK and VK are generated by each party $\mathcal{U}_k$ that randomly chooses $s_{i,k} \xleftarrow{\$} \mathbb{Z}_p$ , for i = 1, ... , n + 4, computes and sends $VK_k = \left(s_{i,k} \cdot \hat{P}\right)_{i=1}^{n+4}$ to the other parties, generating a global verification key VK = $\Sigma_k$ VK$_k$, while $\mathcal{U}_k$ is configured to keep its signing key share $SK_k = \left(s_{i,k}\right)_{i=1}^{n+4}$ ;

o the N verifiable tags Tag$_j$ are generated in two steps, where each party $\mathcal{U}_k$ chooses random $t_{j,k}, v_{j,k} \xleftarrow{\$} \mathbb{Z}_p$ , for j = 1, ..., N:

• Each $\mathcal{U}_k$ computes and sends com$_{j,k}$ = ($\hat{C}_{j,k} = t_{j,k} \cdot \hat{V}_{2,1} + v_{j,k} \cdot \hat{V}_{1,1}$, $\hat{D}_{j,k} = t_{j,k} \cdot \hat{V}_{2,2} + v_{j,k} \cdot \hat{V}_{1,2}$), and $U_{j,k} = t_{j,k} \cdot P$, $\Theta_{j,k} =$

$v_{j,k} \cdot P$ to the other parties;

- Each $\mathcal{U}_k$ computes $U'_j = \Sigma_k U_{j,k}$, $\Theta'_j = \Sigma_k \Theta_{j,k}$, and sends $V_{j,k} = t_{j,k} \cdot U'_j$, $\Psi_{j,k} = v_{j,k} \cdot U'_j$ to the other parties

Generating $V'_j = \Sigma_k V_{j,k}$, $\Psi'_j = \Sigma_k \Psi_{j,k}$, and $\hat{C}'_j = \Sigma_k \hat{C}_{j,k}$, $\hat{D}'_j = \Sigma_k \hat{D}_{j,k}$; $\text{Tag}_j = ((\tau_{j,1} = P, \tau_{j,2} = U'_j, \tau_{j,3} = V'_j), \pi_j = (\text{com}_j = (\hat{C}'_j, \hat{D}'_j), \text{proof}_j = (\Theta'_j, \Psi'_j)))$, on random $t'_j = \Sigma t_{j,k}$ and $v'_j = \Sigma v_{j,k}$;

o the $N$ pairs of signatures, for $j = 1, ..., N$, on $\vec{M}_j = \vec{x}_j \cdot P$ are also generated in a distributed way, where each $\mathcal{U}_k$ uses $\text{SK}_k = (s_{i,k})_i$ and $\text{Tag}_j$ to compute:

$$\Sigma_{j,0,k} = s_{1,k} \cdot H_S + \sum_{i=1}^{n} s_{i+2,k} \cdot M_{j,i} + s_{n+3,k} \cdot U'_j + s_{n+4,k} \cdot V'_j$$

$$\Sigma_{j,1,k} = s_{2,k} \cdot P + \sum_{i=1}^{n} s_{i+2,k} \cdot Z_i + s_{n+3,k} \cdot U'_j + s_{n+4,k} \cdot V'_j$$

Then said multiple independent parties can all compute:

$$\Sigma_{j,0} = \sum_k \Sigma_{j,0,k} \qquad \Sigma_{j,1} = \sum_k \Sigma_{j,1,k}$$

which are signatures of $(,C_0,\vec{C})$ and of $(0,P,\vec{Z})$ respectively, under VK for said tag $\text{Tag}_j$.

According to said third embodiment, the correctness can easily be verified, and parallelizing some steps, to generate the public parameters, also called the global parameters, param, several tags, and signatures on pre-determined messages, a three-round protocol is enough, with public communications, in the 'honest-but-curious setting. No additional proofs are required in the malicious setting, as each step is already verifiable: $(\Theta_k, \Psi_k)$ is a DH proof on $(P, U_k, U, V_k)$ for the commitment $\text{com}_k$, and $\sigma_k$ is a valid signature of $(\tau, \vec{M})$ under $\text{vk}_k$. Additional extractable commitments on every sent value allows perfect simulation even against adaptive adversaries: from the committed values, the simulator can generate all its contributions so that the final outcome corresponds to any pre-defined values.

The SDH LH-Sign-RTag (for Square Diffie-Hellman) uses tags of the form $(\tau_1 = U, \tau_2 = t \cdot U, \tau_3 = t^2 \cdot U)$, for $U \in \mathbb{Z}_p$ and $t \xleftarrow{\$} \mathbb{Z}_p$, which require additional validity proof, in order to be verifiable. This can be done with a Groth-Sahai proof of Diffie-Hellman tuple for $(\tau_1, \tau_2, \tau_2, \tau_3)$, with at least one commitment com and a proof proof. Hence, a verifiable SDH tag is Tag $= (\tau_1, \tau_2, \tau_3, \pi = (\text{com}, \text{proof}))$..

According to said embodiment, the signature of $\vec{M} = (M_i) \in \mathbb{G}^n$ is $\Sigma = (\sum s_i \cdot M_i) + s_{n+1} \cdot \tau_1 + s_{n+2} \cdot \tau_2 + s_{n+3} \cdot \tau_3 \in \mathbb{G}$, under $\text{VK} = (\hat{P}_i = s_i \cdot \hat{P})_{i=1}^{n+3}$, can be verified by $e(\Sigma, \hat{P}) = \prod_{i=1}^{n} e(M_i, \hat{P}_i) \times \prod_{i=1}^{3} e(\tau_i, \hat{P}_{n+i})$. However, when combining two signatures $\Sigma_0$ and $\Sigma_1$ on two messages $\vec{M}$ and $\vec{M}'$, with coefficient $\alpha$ and $\alpha'$ under the same (or equivalent) tags Tag and Tag', one gets a signature on $\alpha \cdot \vec{M} + \alpha' \cdot \vec{M}'$ under the tag $(\tau''_1, \tau''_2, \tau''_3) = \alpha \cdot (\tau_1, \tau_2, \tau_3) + \alpha' \cdot (\tau'_1, \tau'_2, \tau'_3)$. The proof can be computed, i.e. adapted, and randomized (preferably, if they both have the same com). In order to simplify the notation, one writes $\text{Tag}'' = \alpha \cdot \text{Tag} + \alpha' \cdot \text{Tag}'$.

Because of the need of additional proofs of validity for the tags, this third embodiment could be less efficient than other embodiments, while still constant time for the generation of the proofs of subset membership (independently of the size of the subset). However, the initialization can efficiently be distributed among multiple users, which avoids a unique trusted party.

According to said third embodiment, the authority device AUT 10 can comprise several sub-authority modules distributed between independent parties $(\mathcal{U}_k)_k$.

According to said third embodiment, the authority device AUT 10 is configured to generate, in a bilinear setting ($\mathbb{G}, \hat{\mathbb{G}}, \mathbb{G}_T, p, P, \hat{P}, e$):

a. four random points $\hat{V}_{1,1}, \hat{V}_{1,2}, \hat{V}_{2,1}, \hat{V}_{2,2} \xleftarrow{\$} \hat{\mathbb{G}}$, and to append them to the public parameters, preferably for the Groth-Sahai proofs;

b. Encryption Keys: A pair of ElGamal encryption keys (DK, EK) for messages in $\mathbb{G}^n$ : the decryption key is $DK = \vec{z} \overset{\$}{\leftarrow} \mathbb{Z}_p^n$ , and the encryption key is $EK = \vec{Z} = \vec{z} \cdot P \in \mathbb{G}^n$ ;

c. Signature Keys: A pair of LH-Sign-RTag signing-verification keys $SK = \vec{s} \overset{\$}{\leftarrow} \mathbb{Z}_p^{n+4}$ , and $VK = \vec{s} \cdot \hat{P} \in \widehat{\mathbb{G}}^{n+4}$ ;

d. Verifiable Tags: *N* verifiable tags $Tag_j = \left(\tau_{j,1} = P, \tau_{j,2} = t_j \cdot P, \tau_{j,3} = t_j^2 \cdot P, \pi_j\right)$ with $t_j \overset{\$}{\leftarrow} \mathbb{Z}_p$ , for *j* = 1, ... , *N*, with their validity proofs $\pi_j$ = (com$_j$,proof$_j$);

e. Initial Signatures: *N* pairs of signatures, for *j* = 1, ... , *N*, on $\vec{M}_j = \vec{x}_j \cdot P$:

$$\Sigma_{j,0} = s_1 \cdot H_\mathcal{S} + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

According to said third embodiment, the public parameters, also called the global parameters, comprise EK, VK, and (Tag$_j$,$\Sigma_{j,0}$,$\Sigma_{j,1}$) for *j = 1, ...,N*.

According to said embodiment, the sender device SEND 20 is configured to generate at least one:

a. ciphertext: The ElGamal ciphertext (C$_0$, $\vec{C}$) for its authorized plaintext $\vec{x} = \vec{x}_j \in \mathcal{S} \subseteq \mathbb{Z}_p^n$ , with a random scalar $r \overset{\$}{\leftarrow} \mathbb{Z}_p$ :

$$C_0 = r \cdot P \quad \vec{C} = r \cdot \vec{Z} + \vec{M}_j \quad \text{with } \vec{M}_j = \vec{x}_j \cdot P \in \mathbb{G}^n$$

b. optionally, randomizer: The randomizer $(P,\vec{Z})$ is randomized with a random scalar $r' \overset{\$}{\leftarrow} \mathbb{Z}_p$ :

$$D_0 = r' \cdot P \qquad \vec{D} = r' \cdot \vec{Z}$$

c. proof of subset membership: The proof, from Tag$_j$ and $\Sigma_{j,0}$,$\Sigma_{j,1}$:

$$\Sigma'_0 = \Sigma_{j,0} + r \cdot \Sigma_{j,1} \qquad \Sigma'_1 = r' \cdot \Sigma_{j,1}$$

which are valid signatures of (,$C_0$,$\vec{C}$) and (0,$D_0$,$\vec{D}$) under VK for the tags Tag'$_0$ = (r + 1) · Tag and Tag'$_1$ = r' · Tag, respectively. Note that using r and *r'*, the validity proof $\pi_j$ of Tag$_j$ can be converted and randomized for Tag'$_0$ and Tag'$_1$, into $\pi'_0$ and $\pi'_1$, both with the same com' part.

d. optionally, individual verifiability: A pair of OT-LH-Sign signing-verification keys $sk = \vec{e} \overset{\$}{\leftarrow} \mathbb{Z}_p^{n+2}$ , and $vk = \vec{e} \cdot \hat{P} \in \widehat{\mathbb{G}}^{n+2}$ , and the signatures:

$$\sigma_0 = e_1 \cdot H_\mathcal{S} + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

e. optionally, non-malleability: The Diffie-Hellman values $W = r \cdot H$ and $W' = r' \cdot H$, for $H = \mathcal{H}(\text{vk}) \in \mathbb{G}$, together with Groth-Sahai proofs $\pi$ = (com, proof) and $\pi'$ = (com', proof') of Diffie-Hellman tuple for $(P, C_0, H, W)$ and $(P, D_0, H, W')$ respectively.

According to said embodiment, the sender device SEND 20 then outputs, i.e. send to the receiver device REC 30, the ciphertext $(C_0, \vec{C})$, the randomizer $(D_0, \vec{D})$, together with the proof that consists of (Tag'$_0$, Tag'$_1$, $\Sigma$'$_0$, $\Sigma$'$_1$), the signatures (vk, $\sigma_0$, $\sigma_1$), and $(W, W', \pi, \pi')$.

According to said embodiment, the receiver device REC 30 is configured to:

a. optionally, before storing the ciphertext, randomize said ciphertext, after having verified all the values $(C_0, \vec{C})$, $(D_0, \vec{D})$, (Tag'$_0$, Tag'$_1$, $\Sigma$'$_0$, $\Sigma$'$_1$), (vk, $\sigma_0$, $\sigma_1$), and $(W, W', \pi, \pi')$.

b. verify that at least:

    i. the tags Tag'$_0$ and Tag'$_1$ are valid;

    ii. the signature $\Sigma$'$_0$ is valid on the message ($H_s$, $C_0$, $\vec{C}$) and tag Tag'$_0$ under VK;

    iii. the signature $\Sigma$'$_1$ is valid on the message (0, $D_0$, $\vec{D}$) and tag Tag'$_1$ under VK;

    iv. the signature $\sigma_0$ is valid on the message ($H_s$, $C_0$, $\vec{C}$) under vk;

    v. the signature $\sigma_1$ is valid on the message (0, $D_0$, $\vec{D}$) under vk;

    vi. the Diffie-Hellman proofs $\pi$ and $\pi'$ are valid on the tuples $(P, C_0, H, W)$ and $(P, D_0, H, W')$, respectively.

c. randomizes the ElGamal ciphertext $(C_0, \vec{C})$ using a random scalar s $s \xleftarrow{\$} \mathbb{Z}_p$, and the randomizer $(D_0, \vec{D})$:

$$C'_0 = C_0 + s \cdot D_0 \qquad \vec{C}' = \vec{C} + s \cdot \vec{D}$$

d. compute and randomize the tags and the signatures:

$$\text{Tag}'' = \text{Tag}'_0 + s \cdot \text{Tag}'_1$$

$$\Sigma'' = \Sigma'_0 + s \cdot \Sigma'_1$$

$$\sigma = \sigma_0 + s \cdot \sigma_1$$

e. compute the randomized Groth-Sahai proof $\pi''$, for $W'' = W + s \cdot W'$, using s, $\pi$ and $\pi'$.

According to said embodiment, the receiver device REC 30 then stores the ciphertext $(C'_0, \vec{C}')$, together with the proof that consists of (Tag'', $\Sigma$''), the signature (vk, $\sigma$), and $(W'', \pi'')$, which can be publicly verified.

According to said third embodiment, the pair of linearly homomorphic signing-verification keys SK and VK are generated such as $\text{SK} = \vec{s} \xleftarrow{\$} \mathbb{Z}_p^{n+4}$, and $\text{VK} = \vec{s} \cdot \hat{P} \in \widehat{\mathbb{G}}^{n+4}$ ;

According to said third embodiment, the N verifiable tags Tag$_j$ are generated such as $\text{Tag}_j = \left( \tau_{j,1} = P, \tau_{j,2} = t_j \cdot P, \tau_{j,3} = t_j^2 \cdot P, \pi_j \right)$, with $t_j \xleftarrow{\$} \mathbb{Z}_p$, for $j = 1, \dots, N$, with their validity proofs $\pi_j = (\text{com}_j, \text{proof}_j)$

According to said third embodiment, the $N$ pairs of signatures, for $j = 1, \ldots, N$, on $\vec{M}_j = \vec{x}_j \cdot P$ are generated such as:

$$\Sigma_{j,0} = s_1 \cdot H_S + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

According to said third embodiment, $D_0$ and $D$ are equal to:

$$D_0 = r' \cdot P \qquad \vec{D} = r' \cdot \vec{Z}$$

with a random scalar $r' \xleftarrow{\$} \mathbb{Z}_p$

According to said third embodiment, the proof $\mathrm{PR}_S$ is generated, from $\mathrm{Tag}_j$ and $\Sigma_{j,0}$, $\Sigma_{j,1}$ such as:

$$\Sigma'_0 = \Sigma_{j,0} + r \cdot \Sigma_{j,1} \qquad \Sigma'_1 = r' \cdot \Sigma_{j,1}$$

wherein $\Sigma'_0$ is a valid signature of ($H_S$, $C_0$, $\vec{C}$) under VK for the tag $\mathrm{Tag}'_0 = (r + 1) \cdot \mathrm{Tag}$ and
wherein $\Sigma'_1$ is a valid signature of ($0$, $D_0$, $\vec{D}$) under VK for the tag $\mathrm{Tag}'_1 = r' \cdot \mathrm{Tag}$;

According to said third embodiment, the generation step comprises the generation of Diffie-Hellman values $W = r \cdot H$ and $W' = r' \cdot H$, for $H = \mathcal{H}(\mathrm{vk}) \in \mathbb{G}$, together with a Groth-Sahai proofs $\pi = (\mathrm{com}, \mathrm{proof})$ of Diffie-Hellman tuple for ($P$, $C_0$, $H$, $W$) and $\pi' = (\mathrm{com'}, \mathrm{proof'})$ of Diffie-Hellman tuple for ($P$, $D_0$, $H$, $W'$);

According to said third embodiment, the sending step 111 from the sender device SEND 20 to the receiver device REC 30 comprises the sending of the proof $\mathrm{PR}_S$ comprising ($\mathrm{Tag}'_0$, $\mathrm{Tag}'_1$, $\Sigma'_0$, $\Sigma'_1$), and ($W$, $W'$, $\pi$, $\pi'$)

According to said third embodiment, the verification step 106 comprises verifying that:

- the tags $\mathrm{Tag}'_0$ and $\mathrm{Tag}'_1$ are valid;
- the signature $\Sigma'_0$ is valid on the message ($H_S$, $C_0$, $\vec{C}$) and tag $\mathrm{Tag}'_0$ under VK;
- the signature $\Sigma'_1$ is valid on the message ($0$, $D_0$, $\vec{D}$) and tag $\mathrm{Tag}'_1$ under VK;
- the signature $\sigma_0$ is valid on the message ($H_S$, $C_0$, $\vec{C}$) under vk;
- the signature $\sigma_1$ is valid on the message ($0$, $D_0$, $\vec{D}$) under vk;
- the Diffie-Hellman proofs $\pi$ is valid on the tuples ($P$, $C_0$, $H$, $W$) and $\pi'$ is valid on the tuples ($P$, $D_0$, $H$, $W'$).

According to said third embodiment, the third randomization step of the tag $\mathrm{Tag}'$ into $\mathrm{Tag}''$ is such as:

$$\mathrm{Tag}'' = \mathrm{Tag}'_0 + s \cdot \mathrm{Tag}'_1$$

According to said third embodiment, the fourth computation step of the signatures $\Sigma''$ and $\sigma$ is such as:

$$\Sigma'' = \Sigma'_0 + s \cdot \Sigma'_1$$

$$\sigma = \sigma_0 + s \cdot \sigma_1$$

According to said third embodiment, the second computation step comprises a computation of the randomized Groth-Sahai proofs $\pi''$, for $W'' = W + s \cdot W'$, using s, $\pi$ and $\pi'$.

According to said third embodiment, the storing step 111 comprises the storing of ($W''$, $\pi''$).

The present invention relates also to a homomorphic voting system allowing efficiency and security.

For example, in the N-subset case, for ballots where $n$ boxes could be checked: $\vec{M} \in \mathcal{S} \subset \mathbb{G}^n$, the following explains the security properties implemented by the present invention used as a homomorphic voting system.

According to an embodiment, the public information, i.e. public parameters, generated at the initialization step 101, i.e. at the setup time, in a possibly distributed way, consists of $VK \in \widehat{\mathbb{G}}^{n+4}$, $(\Sigma_{i,0}, \Sigma_{i,1})_i \in \mathbb{G}^{2N}$, with the tags, but without the constant generator $P$, $(\tau_{i,2}, \tau_{i,3})_i \in \mathbb{G}^{2N}$, together with their proofs and commitments in $(\mathbb{G}^2 \times \widehat{\mathbb{G}}^2)^N$, and $(\widehat{V}_{1,1}, \widehat{V}_{1,2}, \widehat{V}_{2,1}, \widehat{V}_{2,2}) \in \widehat{\mathbb{G}}^4$. This thus consists of 6N elements from $\mathbb{G}$ and n + 2N + 8 elements from $\widehat{\mathbb{G}}$.

According to an embodiment, from the setup data, the sender device SEND 20 generates and sends the twin-ciphertexts $(\mathcal{C}, \mathcal{D}) \in \mathbb{G}^{2n+2}$, the twin-validity-proofs $(\Sigma_0, \Sigma_1, \vec{\tau}'_0, \text{proof}'_0, \vec{\tau}'_1, \text{proof}'_1, \text{com}') \in \mathbb{G}^{10} \times \widehat{\mathbb{G}}^2$, the twin-signatures $(vk, \sigma_0, \sigma_1) \in \widehat{\mathbb{G}}^{n+2} \times \mathbb{G}^2$, and the twin-user-proofs $(W_0, W_1, \text{proof}_0, \text{proof}_1, \text{com}_0, \text{com}_1) \in \mathbb{G}^6 \times \widehat{\mathbb{G}}^4$, using above notations. There are therefore 2n + 20 elements from G and n + 8 elements from $\widehat{\mathbb{G}}$ in the twin-ballot, that can be randomized, whatever $N$ is.

According to an embodiment, the ballot-box, i.e. the receiver device REC 30, stores the randomized ciphertext $\mathcal{C}' \in \mathbb{G}^{n+1}$, the validity proof $(\Sigma'', \vec{\tau}'', \text{proof}'', \text{com}'') \in \mathbb{G}^5 \times \widehat{\mathbb{G}}^2$, the user-signature $(vk, \sigma) \in \widehat{\mathbb{G}}^{n+2} \times \mathbb{G}$, and the user-proof $(W'', \text{proof}, \text{com}) \in \mathbb{G}^3 \times \widehat{\mathbb{G}}^2$. There are therefore n + 10 elements from $\mathbb{G}$ and $n$ + 6 elements from $\widehat{\mathbb{G}}$ for each randomized ballot.

One can use the type III pairing-friendly curve BLS12-381 (see for example the following publication "Paulo S. L. M. Barreto, Ben Lynn, and Michael Scott. Constructing Elliptic Curves with Prescribed Embedding Degrees. SCN 2002: 257-267."), as in all the zk-SNARKs applications: $\mathbb{G}$ group elements are encoded on 48 bytes, while $\widehat{\mathbb{G}}$ group elements are encoded on 96 bytes. For $N$ = n = 25 (in the 1-out-of-$n$ case), the public information is a bit more than 15KB, the twin-ballot is 6.5KB, while the ballot is 4.6KB. Which is quite reasonable in size.

According to the present invention, one of the main important properties in electronic voting is the privacy of the vote. The voter, i.e. the sender device SEND, derives the twin-ciphertexts $(C_0, \vec{C}) = (r \cdot P, \vec{M}_j + r \cdot \vec{Z})$ and $(D_0, \vec{D}) = (s \cdot P, s \cdot \vec{Z})$, the twin-tags $\vec{\tau}'_0 = (r + 1) \cdot \vec{\tau}_j, \vec{\tau}'_1 = s \cdot \vec{\tau}_j$, and randomized proofs $\text{proof}'_0, \text{proof}'_1, \text{com}'$, for random $r, s, v \xleftarrow{\$} \mathbb{Z}_p$, which are unlinkable to $\vec{M}_j$ under the DDH assumption (ElGamal security), to $\vec{\tau}_j$ and $\text{proof}_j$ under both the DDH and DSDH assumptions in G (tag-unlinkability) and to $\text{com}_j$ under the DDH assumption in $\widehat{\mathbb{G}}$.

The further Groth-Sahai proofs are zero-knowledge under the SXDH assumption. This is under the assumption that the scalars in the tags generated during the setup are really private. One can stress that the ballot privacy (in the honest-but-curious setting) is achieved in the standard model, under quite standard DDH-like assumptions. Nevertheless, one needs stronger privacy properties, by preventing malicious voter behaviors, with replay and vote-selling attacks.

When the voter has sent the ciphertext $(C_0, \vec{C})$, he can open it with his randomness $r$. But the ciphertext in the public ballot-box is $(C'_0, \vec{C}')$ that has been randomized with an unknown $r'$: this excludes VS-attacks. The receiver must first check $D_0 \neq 0$ for randomization to be effective. The additional Diffie-Hellman proof for $(P, C'_0, H = \mathcal{H}(vk), W)$ avoids replay attacks under a different verification key vk'. Excluding multiple ballots with the same vk then avoids replay attacks, and thus CS-attacks.

According to the present invention, a formal proof of strong receipt-freeness is achieved.

For example, from the unforgeability under chosen-message attacks of the OT-LH-Sign in the GGM, and the non-miscibility of the SDH-tags, the validity of signatures on $(H_{\mathcal{S}}, C_0, \vec{C})$ or $(, \vec{C}'_0, \vec{C}')$ under the key VK (and a valid tag) implies that they are linear combinations of some $(H_{\mathcal{S}}, 0, \vec{M}_j)$ and $(0, P, \vec{Z})$, again under the assumption that the scalars in the tags generated during the setup are really private, and even destroyed after use. Hence, no new signature can be generated by anybody, excepted under linear combinations on equivalent tags. Because of the first component $H_{\mathcal{S}}$, this is necessarily for a valid ballot, but not necessarily for the same $j$: $C_0, = r \cdot P$ and $\vec{C} = r \cdot \vec{Z} + \vec{M}_j$, and $C'_0 = r' \cdot P$ and $\vec{C}' = r' \cdot \vec{Z} + \vec{M}_k$. Anyway, they are both valid ballots. Furthermore, the decryption of the tally is given with a proof of correct decryption, which provides the universal verifiability of ballots and tally.

However, the voter needs the additional guarantee of no modification of his initial choice $\vec{M}_j$ in $(C_0, \vec{C})$ after randomization in $(C_0', \vec{C}')$, by the receiver device REC 30: the voter, i.e. the sender device SEND 20, who has kept $H = \mathcal{H}(vk)$, can ask for his vote, and check the validity of $\sigma'$ with respect to $(H_{\mathcal{S}}, C'_0, \vec{C}')$ under vk. This implies $(C'_0, \vec{C}')$ can only be a randomization of the initial ciphertext $(C_0, \vec{C})$: $\vec{M}_k = \vec{M}_j$ under the unforgeability of the OT-LH-Sign, as vk is ephemeral and used only once. This individual verifiability convinces all the voters of the integrity of the ballot-box, with the presence of their votes.

According to an embodiment, the present invention relates to an electronic voting system. Said electronic voting system comprise at least an authority device AUT 10, a sender device SEND 20 and a receiver device REC 30.

Said authority device AUT 10 comprises at least one initialization module IM 11. Said initialization module IM 11 is configured to execute said initialization step.

Said sender device SEND 20 comprises at least:

a. An encryption module EM 21, preferably configured to execute said ciphertext creation step 102.

b. A first proof module PM1 22, preferably configured to execute said proof creation step 103. Said first proof module PM1 22 comprising at least:

i. A first randomization module RM1 23, preferably configured to execute said first randomization step;
ii. A first computational module CM1 24, preferably configured to execute said first computation step.

c. A generation module GM 25, preferably configured to execute said generation step 104;

d. A sending module SM 26, preferably configured to execute the sending step 105, and advantageously to communicate with at least the receiver device REC 30, preferably using at least one communication network.

Said receiver device REC 30 comprises at least:

a. A verification module VM 31, preferably configured to execute said verification step 106;

b. A second randomization module RM2 32, preferably configured to execute said second randomization step 107, the third randomization step, and said fourth randomization step;

c. A second computational module CM2 33, preferably configured to execute said second computational step 108, said third computational step 109;

d. A second proof module PM2 34, preferably configured to execute said second proof creation step. Advantageously, said second proof module PM2 34 comprising at least:

i. Said second randomization module RM2 32;
ii. Said second computational module CM2 33.

e. A storing module STM 35, preferably configured to execute the storing step 111.

According to an embodiment, the authority device AUT 10 can be an electronic device comprising a user interface. Said user interface being configured to allow a user to control the authority device AUT 10.

According to an embodiment, the authority device AUT 10 can be a robot, preferably said robot being part of an Internet of Things environment and advantageously being configured to cooperate with other robots or computers.

According to an embodiment, the authority device AUT 10 can be an artificial intelligence configured to cooperate with robots and/or computers and/or other artificial intelligences.

According to an embodiment, the authority device AUT 10 can comprise at least one processor, and preferably at least one non-volatile memory. Said processor is advantageously configured to execute the steps executed by the authority device AUT 10.

According to an embodiment, the sender device SEND 20 can be an electronic device comprising a user interface. Said user interface being configured to allow a user to vote.

According to an embodiment, the sender device SEND 20 can be a robot, preferably said robot being part of an Internet of Things environment and advantageously being configured to cooperate with other robots or computers.

According to an embodiment, the sender device SEND 20 can be an artificial intelligence configured to cooperate with robots and/or computers and/or other artificial intelligences.

According to an embodiment, the sender device SEND 20 can comprise at least one processor, and preferably at least one non-volatile memory. Said processor is advantageously configured to execute the steps executed by the sender device SEND 20.

According to an embodiment, the receiver device REC 30 can be an electronic device comprising a user interface. Said user interface being configured to allow a user to evaluate the result of a voting session, for example.

According to an embodiment, the receiver device REC 30 can be a robot, preferably said robot being part of an Internet of Things environment and advantageously being configured to cooperate with other robots or computers.

According to an embodiment, the receiver device REC 30 can be an artificial intelligence configured to cooperate with robots and/or computers and/or other artificial intelligences.

According to an embodiment, the receiver device REC 30 can comprise at least one processor, and preferably at least one non-volatile memory. Said processor is advantageously configured to execute the steps executed by the receiver device REC 30.

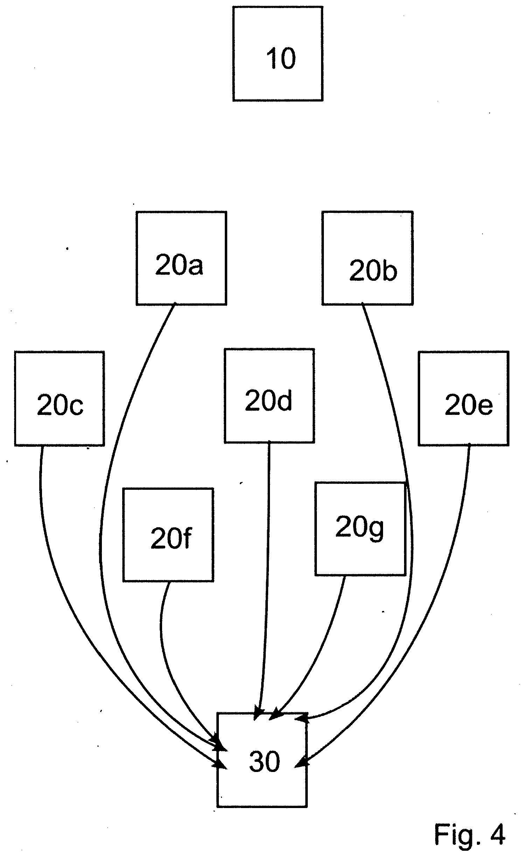

According to an embodiment, the present invention can be used in a electronic environment, for example in a non-secured electronic environment, wherein a vote can be needed regarding at least one action to be taken. For example, the present invention can be used to allow artificial intelligences to vote regarding a decision to be taken. For example, as illustrated by figure 4, the system according to the present invention can comprise a plurality of sender devices SEND 20a to 20g, such as a plurality of artificial intelligences, and regarding a decision to be taken, a vote can be organized. Each artificial intelligence 20a to 20g will therefore produce a vote using the present invention.

In the present description, one module can comprise several modules, one module can be formed of several modules.

According to an embodiment, the present invention can be configured to cooperate with at least one input module including one or more user interface devices such as a keyboard, pointer, number pad, or touch screen.

In the present description, a processor may be any logic processing unit, such as one or more digital processors, microprocessors, central processing units, graphics processing units, application-specific integrated circuits, programmable gate arrays, programmed logic units, digital signal processors, network processors, and the like.

In the present description, a storage device or module is at least one non-transitory or tangible storage device or module. A storage module can, for example, include one or more volatile storage devices, for instance random access memory, and one or more non-volatile storage devices, for instance read only memory, flash memory, magnetic hard disk, optical disk, solid state disk, and the like.

In the present description, a storage module can include or store processor-executable instructions and/or processor-readable data associated with the operation of the present invention and/or with the execution of the method of the present invention. Execution of processor-executable instructions and/or data causes the at least one processor, and/or control modules or units, to carry out various processes and actions.

Unless otherwise specified herein, or unless the context clearly dictates otherwise the term about modifying a numerical quantity means plus or minus ten percent. Unless otherwise specified, or unless the context dictates otherwise, between two numerical values is to be read as between and including the two numerical values.

In the present description, some specific details are included to provide an understanding of various disclosed implementations. The skilled person in the relevant art, however, will recognize that implementations may be practiced without one or more of these specific details, parts of a method, components, materials, etc.

In the present description and appended claims "a", "an", "one", or "another" applied to "embodiment", "example", or."implementation" is used in the sense that a particular referent feature, structure, or characteristic described in connection with the embodiment, example, or implementation is included in at least one embodiment, example, or implementation. Thus, phrases like "in one embodiment", "in an embodiment", or "another embodiment" are not necessarily all referring to the same embodiment. Furthermore, the particular features, structures, or characteristics may be combined in any suitable manner in one or more embodiments, examples, or implementations.

As used in this description and the appended claims, the singular forms of articles, such as "a", "an", and "the", can include plural referents unless the context mandates otherwise. Unless the context requires otherwise, throughout this description and appended claims, the word "comprise" and variations thereof, such as, "comprises" and "comprising" are to be interpreted in an open, inclusive sense, that is, as "including, but not limited to".

All publications referred to in this description, are incorporated by reference in their entireties for all purposes herein.

While certain features of the described embodiments and implementations have been described herein, many modifications, substitutions, changes and equivalents will now occur to the skilled person in the relevant art. It is, therefore, to be understood that the appended claims are intended to cover all such modifications and changes as fall within the scope of the described embodiments and implementations.

**References:**

10          Authority device

11          Initialization module IM

| | |
|---|---|
| 20 | Sender device SEND |
| 20a, ..., 20g | Artificial intelligences |
| 21 | Encryption module EM |
| 22 | First proof module PM1 |
| 23 | First randomization module RM1 |
| 24 | First computational module CM1 |
| 25 | Generation module GM |
| 26 | Sending module SM |
| 30 | Receiver device REC |
| 31 | Verification module |
| 32 | Second randomization module RM2 |
| 33 | Second computational module CM2 |
| 34 | Second proof module PM2 |
| 35 | Storing module STM |
| 100 | Method |
| 101 | Initialization step |
| 102 | Ciphertext creation step |
| 103 | Proof creation step |
| 104 | Generation step |
| 105 | Sending step |
| 106 | Verification step |
| 107 | Second randomization step |
| 108 | Second computation step |
| 109 | Third computation step |
| 110 | Second proof creation step |
| 111 | Storing step |

**Claims**

1. A linearly homomorphic signature method (100) for zero-knowledge proofs of subset membership on at least one ElGamal ciphertext in a group G with a generator $P$ of prime order $p$ regarding at least one subset $\mathcal{S} = \{\vec{x}_1, ..., \vec{x}_N\} \subseteq \mathbb{Z}_p^n$ of N authorized plaintexts, said plaintexts being authorized by at least one authority device AUT (10), said cyphertext being generated from a plaintext taken among said subset $\mathcal{S}$, said method being executable by at least one computing system, preferably said computing system being communicatively connected to at least one communication network, said method (100) using randomizable tags, said method (100) comprising at least:

o An initialization step (101), preferably executed by said authority device AUT (10) using at least one initialization module IM (11), said initialization step (101) comprising at least a generation step of at least:

• one pair of ElGamal encryption keys (DK, EK) for plaintexts comprised by a group $\mathbb{G}^n$ wherein the decryption key DK is generated as $DK = \vec{z} \xleftarrow{\$} \mathbb{Z}_p^n,$ , and the encryption key EK is generated as $EK = \vec{Z} = \vec{z} \cdot P \in \mathbb{G}^n$ wherein $\vec{z}$ is private vector of scalars and $P$ is said generator of the group G of prime order $p$;

• one pair of linearly homomorphic signature keys (SK, VK) for messages in $\mathbb{G}^{n+2}$, said messages comprising at least ciphertexts;

• $N$ verifiable tags Tag$_j$, for $j = 1, ..., N$;

• $N$ pairs of signatures $(\Sigma_{j,0}, \Sigma_{j,1})$, for $j = 1, ..., N$, on $\vec{M}_j = \vec{x}_j \cdot P$ such as:

$$\Sigma_{j,0} = \text{Sign}\left(SK, \text{Tag}_j, \left(H_{\mathcal{S}}, 0, \vec{M}_j\right)\right)$$

$$\Sigma_{j,1} = \text{Sign}\left(SK, \text{Tag}_j, \left(0, P, \vec{Z}\right)\right)$$

Wherein $H_{\mathcal{S}}$ is configured to characterize a proof $PR_{\mathcal{S}}$ on the subset $\mathcal{S}$, preferably, $H_{\mathcal{S}} = \mathcal{H}(\mathcal{S})$, where $\mathcal{H}$ is a full-domain hash function into $\mathbb{G}$;

Said initialization step (101) generating a set of public parameters comprising:
EK, VK, and (Tag$_j$, $\Sigma_{j,0}$, $\Sigma_{j,1}$) for $j = 1, ... , N$
o A ciphertext creation step (102) with proof of subset membership, preferably executed by at least one sender device SEND (20) using at least one encryption module EM (21), said ciphertext creation step (102) comprising the generation of at least one ElGamal ciphertext $(C_0, \vec{C})$ for at least one authorized plaintext $\vec{x} = \vec{x}_j \in \mathcal{S} \subseteq \mathbb{Z}_p^n$, for a given j, with a random scalar $r \xleftarrow{\$} \mathbb{Z}_p$ such as:

$$C_0 = r \cdot P \qquad \vec{C} = r \cdot \vec{Z} + \vec{M}_j \quad \text{with } \vec{M}_j = \vec{x}_j \cdot P \in \mathbb{G}^n$$

o A proof creation step (103), preferably executed by at least said sender device SEND (20) using at least a first proof module PM1 (22), of at least said proof $PR_{\mathcal{S}}$, from Tag$_j$ and $\Sigma_{j,0}$, $\Sigma_{j,1}$ comprising:

• a first randomization step, preferably executed by said sender device SEND (20) using at least a first randomization module RM1 (23), said first randomization step comprising a randomization of at least one Tag$_j$ into Tag', for said given $j$;

• a first computation step, preferably executed by said sender device SEND (20) using at least a first computational module CM1 (24), of $\Sigma'_0$ and $\Sigma'_1$, wherein: $\Sigma'_0$ is a valid signature of ($H_{\mathcal{S}}$, $C_0$, $\vec{C}$) under VK for the tag Tag' and $\Sigma'_1$ is a valid signature of a randomizer (0, $D_0$, $\vec{D}$), under VK for the tag Tag';

o A generation step (104), preferably executed by said sender device SEND (20) using at least a generation module GM (25), comprising at least:

• Generating a pair of linearly homomorphic signing-verification keys (sk, vk) for messages in $\mathbb{G}^{n+2}$;

• Generating signatures $\sigma_0$ and $\sigma_1$ wherein:

$$\sigma_0 = \text{Sign}\left(\text{sk}, \left(H_{\mathcal{S}}, C_0, \vec{C}\right)\right)$$

$$\sigma_1 = \text{Sign}\left(\text{sk}, \left(0, D_0, \vec{D}\right)\right)$$

◦ A sending step (105), preferably executed by said sender device SEND (20) using at least a sending module SM (26), from the sender device SEND (20) to at least one receiver device REC (30) of the ciphertexts ($C_0$, $\vec{C}$) and ($D_0$, $\vec{D}$), together with the proof $\text{PR}_{\mathcal{S}}$ comprising (Tag', $\Sigma'_0$, $\Sigma'_1$) and with the signatures (vk, $\sigma_0$, $\sigma_1$);

o A verification step (106), preferably executed by said receiver device REC (30) using at least one verification module VM (31), said verification step comprising at least the verification of at least:

• the validity of Tag';

• the validity of the signature $\Sigma'_0$ on ($H_{\mathcal{S}}$, $C_0$, $\vec{C}$) under VK for the tag Tag', and the validity of the signature $\Sigma'_1$ on (0, $D_0$, $\vec{D}$), under VK for the tag Tag';

• the validity of the signatures $\sigma_0$ on ($H_{\mathcal{S}}$, $C_0$, $\vec{C}$) under vk and $\sigma_1$ on (0, $D_0$, $\vec{D}$) under vk.

◦ A second randomization step (107), preferably executed by said receiver device REC (30) using at least a second randomization module RM2 (32), of said ElGamal ciphertext ($C_0$, $\vec{C}$) to generate the ciphertext ($C'_0$, $\vec{C}'$) using a random scalar $s \xleftarrow{\$} \mathbb{Z}_p$ and a randomizer ($D_0$, $\vec{D}$) such as:

$$C'_0 = C_0 + s \cdot D_0 \qquad \vec{C}' = \vec{C} + s \cdot \vec{D}$$

◦ A second computation step (108), preferably executed by said receiver device REC (30) using at least a second computational module CM2 (33), of a signature $\Sigma'$:

$$\Sigma' = \Sigma'_0 + s \cdot \Sigma'_1$$

$\Sigma'$ being a valid signature of ($H_{\mathcal{S}}$, $C'_0$, $\vec{C}'$) under VK for the tag Tag';

◦ A third computation step (109), preferably executed by said receiver device REC (30) using at least said computational module CM2 (33), of a signature $\sigma$ :

$$\sigma = \sigma_0 + s \cdot \sigma_1$$

wherein $\sigma$ is a valid signature of ($H_{\mathcal{S}}$, $C'_0$, $\vec{C}'$) under vk;

◦ A second proof creation step (110), preferably executed by at least said receiver device REC (30) using at least a second proof module PR2 (34), of a proof $\text{PR}'_{\mathcal{S}}$ from said proof $\text{PR}_{\mathcal{S}}$, from Tag' and $\Sigma'_0$, $\Sigma'_1$ comprising:

• A third randomization step by at least said second randomization module RM2 (32) of the tag Tag' into Tag" ;

• A fourth computation step by at least said second computational module CM2 (33) of the signature $\Sigma''$: $\Sigma''$ being a valid signature of ($H_{\mathcal{S}}$, $C'_0$, $\vec{C}'$) under VK for the tag Tag";

◦ A storing step (111), preferably executed by the receiver device REC (30) using at least a storing module STM (35), of the ciphertext ($C'_0$, $\vec{C}'$), together with said proof $\text{PR}'_{\mathcal{S}}$ comprising (Tag", $\Sigma''$), and with the signature (vk, $\sigma$), which are configured to be publicly verified and wherein:

• Tag" is a valid tag;

• $\Sigma''$ is a valid signature on ($H_{\mathcal{S}}$, $C'_0$, $\vec{C}'$), under VK for the tag Tag" allowing-to prove that the plaintext is in the subset $\mathcal{S}$;

• $\sigma$ is a valid signature on ($H_S$, $C'_0$, $\vec{C}'$), under vk.

2. The method (100) according to the previous claim wherein, in a bilinear setting ( $\mathbb{G}, \widehat{\mathbb{G}}, \mathbb{G}_T, p, P, \widehat{P}, e$ ), the pair of linearly homomorphic, signing-verification keys (sk, vk) for messages in $\mathbb{G}^{n+2}$ are generated such as:

$$\text{sk} = \vec{e} \xleftarrow{\$} \mathbb{Z}_p^{n+2}, \text{ and vk} = \vec{e} \cdot \widehat{P} \in \widehat{\mathbb{G}}^{n+2}$$

and,

$$\sigma_0 = e_1 \cdot H_S + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

3. The method (100) according to the previous claim wherein:

◦ four random points $\widehat{V}_{1,1}, \widehat{V}_{1,2}, \widehat{V}_{2,1}, \widehat{V}_{2,2} \xleftarrow{\$} \widehat{\mathbb{G}}$ are generated and appended to the public parameters, for the Groth-Sahai proofs;

◦ the proof $\mathrm{PR}_S$, from Tag$_j$ and $\Sigma_{j,0}$, $\Sigma_{j,1}$, is generated such as:

$$\Sigma_0 = \Sigma_{j,0} + r \cdot \Sigma_{j,1} \qquad \Sigma_1 = \Sigma_{j,1}$$

wherein $\Sigma_0$ is a valid signature of ($H_S$, $C_0$, $\vec{C}$) under VK for the tag Tag = Tag$_j$, and wherein $\Sigma_1$ is a valid signature of (0, $P$, $\vec{Z}$) under VK for the tag Tag = Tag$_j$ ;

◦ the generation step comprises generating a Diffie-Hellman value $W = r \cdot H$, for $H = \mathcal{H}(\text{vk}) \in \mathbb{G}$ , and generating a Groth-Sahai proof $\pi$ of Diffie-Hellman tuple for *(P, $C_0$, H, W)*.
◦ the sending step from the sender device SEND (20) to the receiver device REC (30) comprises the sending of the value *W* and of the proof $\pi$.
◦ the verification step comprises the verification of the validity of the Diffie-Hellman proof $\pi$ on the tuple *(P, $C_0$, H =* $\mathcal{H}$*(vk), W)*.

◦ the randomizer (0, $D_0$, $\vec{D}$) is equal to (0, $P$, $\vec{Z}$) such as $D_0 = P$ and $\vec{D} = \vec{Z}$ wherein *P* is the generator of $\mathbb{G}$ and $\vec{Z}$ is the public encryption key;
o the randomization of said ElGamal ciphertext ($C_0$, $\vec{C}$) to generate the ciphertext ($C'_0$, $\vec{C}'$) using a random scalar $s \xleftarrow{\$} \mathbb{Z}_p$ is such as:

$$C'_0 = C_0 + s \cdot P \qquad \vec{C}' = \vec{C} + s \cdot \vec{Z}$$

o the second computation step comprises a computation of the randomized Groth-Sahai proof $\pi'$, $\pi'$ being a valid Diffie-Hellman proof on the tuple (P, $C'_0$, H = $\mathcal{H}$(vk), W'), for $W' = W + s \cdot H$, using *s* and $\pi$.
◦ the storing step comprises the storing of *(W', $\pi'$)*.

4. The method (100) according to claim 1 wherein, in a bilinear setting ( $\mathbb{G}, \widehat{\mathbb{G}}, \mathbb{G}_T, p, P, \widehat{P}, e$ ):

◦ four random points $\widehat{V}_{1,1}, \widehat{V}_{1,2}, \widehat{V}_{2,1}, \widehat{V}_{2,2} \xleftarrow{\$} \widehat{\mathbb{G}}$ are generated, and appended to the public parameters, for the Groth-Sahai proofs;

o the pair of linearly homomorphic signing-verification keys SK and VK are generated such as $SK = \vec{s} \xleftarrow{\$} \mathbb{Z}_p^{n+4}$,

and $VK = \vec{s} \cdot \vec{P} \in \widehat{\mathbb{G}}^{n+4}$ ;

o the $N$ verifiable tags $\text{Tag}_j$ are generated such as $\text{Tag}_j = \left(\tau_{j,1} = P, \tau_{j,2} = t_j \cdot P, \tau_{j,3} = t_j^2 \cdot P, \pi_j\right)$ , with

$t_j \xleftarrow{\$} \mathbb{Z}_p$ , for $j$ = 1, ...,$N$, with their validity proofs $\pi_j$ = (com$_j$, proof$_j$) ;

o the $N$ pairs of signatures, for $j$ = 1, ..., $N$, on $\vec{M_j} = \vec{x_j} \cdot P$ are generated such as:

$$\Sigma_{j,0} = s_1 \cdot H_s + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

o ($D_0$, $\vec{D}$) are defined as:

$$D_0 = r' \cdot P$$

$\vec{D}$ = $r' \cdot \vec{Z}$ with a random scalar $r' \xleftarrow{\$} \mathbb{Z}_p$

o the proof $PR_s$ is generated, from $\text{Tag}_j$ and $\Sigma_{j,0}$, $\Sigma_{j,1}$ such as:

$$\Sigma'_0 = \Sigma_{j,0} + r \cdot \Sigma_{j,1} \qquad \Sigma'_1 = r' \cdot \Sigma_{j,1}$$

wherein $\Sigma'_0$ is a valid signature of ($H_s$, $C_0$, $\vec{C}$) under VK for the tag $\text{Tag}'_0$ = ($r$ + 1) · Tag and
wherein $\Sigma'_1$ is a valid signature of (0, $D_0$, $\vec{D}$) under VK for the tag $\text{Tag}'_1$ = $r'$ · Tag;

o the generation step (104) comprises the generation of Diffie-Hellman values W = $r$ · H and $W'$ = $r'$ · H, for $H = \mathcal{H}(vk) \in \mathbb{G}$, together with Groth-Sahai proofs $\pi$ = (com, proof) of Diffie-Hellman tuple for ($P$, $C_0$, $H$, $W$) and $\pi'$ = (com', proof') of Diffie-Hellman tuple for *(P, D$_0$, H, W')*;

o the sending step (105) from the sender device SEND (20) to the receiver device REC (30) comprises the sending of the proof $PR_s$ comprising (Tag'$_0$, Tag'$_1$; $\Sigma'_0$, $\Sigma'_1$), and *(W, W', $\pi$, $\pi'$)*

o the verification step (106) comprises verifying that:

• the tags Tag'$_0$ and Tag'$_1$ are valid;

• the signature $\Sigma'_0$ is valid on the message ($H_s$, $C_0$, $\vec{C}$) and tag Tag'$_0$ under VK;
• the signature $\Sigma'_1$ is valid on the message (0, $D_0$, $\vec{D}$) and tag Tag'$_1$ under VK;

• the signature $\sigma_0$ is valid on the message ($H_s$, $C_0$, $\vec{C}$) under vk;
• the signature $\sigma_1$ is valid on the message (0, $D_0$, $\vec{D}$) under vk;
• the Diffie-Hellman proofs $\pi$ is valid on the tuples *(P, C$_0$, H, W)* and $\pi'$ is valid on the tuples *(P, D$_0$, H, W')*.

o the third randomization step of the tag Tag' into Tag" is such as:

$$\text{Tag}'' = \text{Tag}'_0 + s \cdot \text{Tag}'_1$$

o the fourth computation step of the signatures $\Sigma''$ and $\sigma$ is such as:

$$\Sigma'' = \Sigma'_0 + s \cdot \Sigma'_1$$

$$\sigma = \sigma_0 + s \cdot \sigma_1$$

○ the second computation step (108) comprises a computation of the randomized Groth-Sahai proof $\pi''$, for $W'' = W + s \cdot W'$, using $s$, $\pi$ and $\pi'$.
○ the storing step (111) comprises the storing of $(W'', \pi'')$.

**5.** The method (100) according to claim 4 wherein said, public parameters VK, $(\hat{V}_{1,1}, \hat{V}_{1,2}, \hat{V}_{2,1}, \hat{V}_{2,2})$, and $(\text{Tag}_j, \Sigma_{j,0}, \Sigma_{j,1})$ for $j = 1, \dots, N$, are generated in a distributed way between multiple independent parties $(\mathcal{U}_k)_k$:

○ Said multiple independent parties $(\mathcal{U}_k)_k$ agree on a bilinear setting ( $\mathbb{G}$, $\widehat{\mathbb{G}}$, $\mathbb{G}_T$, $p$, $P$, $\hat{P}$, $e$);

○ Each party $\mathcal{U}_k$ chooses and sends random points $\hat{V}_{1,1,k}, \hat{V}_{1,2,k}, \hat{V}_{2,1,k}, \hat{V}_{2,2,k} \xleftarrow{\$} \widehat{\mathbb{G}}$ to the others parties, generating global verification points $\hat{V}_{1,1} = \Sigma_k \hat{V}_{1,1,k}, \hat{V}_{1,2} = \Sigma_k \hat{V}_{1,2,k}, \hat{V}_{2,1} = \Sigma_k \hat{V}_{2,1,k}, \hat{V}_{2,2} = \Sigma_k \hat{V}_{2,2,k}$, these global verification points being configured to be computed by said multiple independent parties;

○ the pair of linearly homomorphic signing-verification keys SK and VK are generated by each party $\mathcal{U}_k$ that randomly chooses $s_{i,k} \xleftarrow{\$} \mathbb{Z}_p$, for i = 1, ..., n + 4, computes and sends $\text{VK}_k = \left(s_{i,k} \cdot \hat{P}\right)_{i=1}^{n+4}$ to the other parties, generating a global verification key VK = $\Sigma_k$ VK$_k$, while $\mathcal{U}_k$ is configured to keep its signing key share $\text{SK}_k = \left(s_{i,k}\right)_{i=1}^{n+4}$;

○ the $N$ verifiable tags Tag$_j$ are generated in two steps, where each party $\mathcal{U}_k$ chooses random $t_{j,k}, v_{j,k} \xleftarrow{\$} \mathbb{Z}_p$, for $j = 1, ..., N$:

• Each $\mathcal{U}_k$ computes and sends com$_{j,k} = (\hat{C}_{j,k} = t_{j,k} \cdot \hat{V}_{2,1} + v_{j,k} \cdot \hat{V}_{1,1}, \hat{D}_{j,k} = t_{j,k} \cdot \hat{V}_{2,2} + v_{j,k} \cdot \hat{V}_{1,2})$, and $U_{j,k} = t_{j,k} \cdot P$, $\Theta_{j,k} = v_{j,k} \cdot P$ to the other parties;

• Each $\mathcal{U}_k$ computes $U'_j = \Sigma_k U_{j,k}, \Theta'_j = \Sigma_k \Theta_{j,k}$, and sends $V_{j,k} = t_{j,k} \cdot U'_j, \Psi_{j,k} = v_{j,k} \cdot U'_j$ to the other parties

Generating $V'_j = \Sigma_k V_{j,k}, \Psi'_j = \Sigma_k \Psi_{j,k}$, and $C'_j = \Sigma_k \hat{C}_{j,k}, \hat{D}'_j = \Sigma_k \hat{D}_{j,k}$; Tag$_j = ((\tau_{j,1} = P, \tau_{j,2} = U'_j, \tau_{j,3} = V'_j), \pi_j = (\text{com}_j = (\hat{C}'_j, \hat{D}'_j), \text{proof}_j = (\Theta'_j, \psi'_j)))$, on random $t'_j = \Sigma t_{j,k}$ and $v'_j = \Sigma v_{j,k}$;

○ the $N$ pairs of signatures, for $j = 1, ..., N$, on $\vec{M}_j = \vec{x}_j \cdot P$ are also generated in a distributed way, where each $\mathcal{U}_k$ uses SK$_k = (s_{i,k})_i$ and Tag$_j$ to compute:

$$\Sigma_{j,0,k} = s_{1,k} \cdot H_S + \sum_{i=1}^{n} s_{i+2,k} \cdot M_{j,i} + s_{n+3,k} \cdot U'_j + s_{n+4,k} \cdot V'_j$$

$$\Sigma_{j,1,k} = s_{2,k} \cdot P + \sum_{i=1}^{n} s_{i+2,k} \cdot Z_i + s_{n+3,k} \cdot U'_j + s_{n+4,k} \cdot V'_j$$

Then said multiple independent parties can all compute:

$$\Sigma_{j,0} = \sum_k \Sigma_{j,0,k} \qquad \Sigma_{j,1} = \sum_k \Sigma_{j,1,k}$$

which are signatures of $(H_S, 0, \vec{M}_j)$ and of $(0, P, \vec{Z})$ respectively, under VK for said tag Tag$_j$.

**6.** The method (100) according to claim 3 wherein:

○ the $N$ verifiable tags $Tag_j$ are generated such as $Tag_j = (\tau_{j,1} = 1/t_j \cdot P, \tau_{j,2} = 1/t_j \cdot \hat{P})$, with $t_j \overset{\$}{\leftarrow} \mathbb{Z}_p$, for $j = 1, ..., N$;

○ the $N$ pairs of signatures, for $j = 1, ..., N,$ on $\vec{M}_j = \vec{x}_j \cdot P$ are generated such as:

$$\Sigma_{j,0} = t_j \cdot \left( s_1 \cdot H_S + \sum_{i=1}^{n} s_{i+2} \cdot M_{j,i} \right) \quad \Sigma_{j,1} = t_j \cdot \left( s_2 \cdot P + \sum_{i=1}^{n} s_{i+2} \cdot Z_i \right)$$

○ the randomization of at least Tag $= (\tau_1, \tau_2)$ into Tag' $= (\tau'_1, \tau'_2)$, for a random $t' \overset{\$}{\leftarrow} \mathbb{Z}_p$, is such as:

$$\text{Tag}' = (\tau'_1 = 1/t' \cdot \tau_1, \tau'_2 = 1/t' \cdot \tau_2)$$

○ the computation of $\Sigma_0$ and $\Sigma_1$ into $\Sigma'_0$ and $\Sigma'_1$, respectively, is such as:

$$\Sigma'_0 = t' \cdot \Sigma_0 \qquad \Sigma'_1 = t' \cdot \Sigma_1$$

○ the randomizer $(0, D_0, \vec{D})$ is equal to $(0, P, \vec{Z})$ such as $D_0 = P$ and $\vec{D} = \vec{Z}$ wherein $P$ is the generator of $\mathbb{G}$ and $\vec{Z}$ is the public encryption key. The signatures $\sigma_0$ and $\sigma_1$ are such as:

$$\sigma_0 = e_1 \cdot H_S + e_2 \cdot C_0 + \sum_{i=1}^{n} e_{i+2} \cdot C_i$$

$$\sigma_1 = e_2 \cdot P + \sum_{i=1}^{n} e_{i+2} \cdot Z_i$$

○ the verification step (106) comprises the verification of the following equalities:

$$e(P, \tau'_2) = e(\tau'_1, \hat{P})$$

$$e(\Sigma'_0, \tau'_2) = e(H_S, \text{VK}_1) \cdot e(C_0, \text{VK}_2) \cdot \prod_{i=1}^{n} e(C_i, \text{VK}_{i+2})$$

$$e(\Sigma'_1, \tau'_2) = e(P, \text{VK}_2) \cdot \prod_{i=1}^{n} e(Z_i, \text{VK}_{i+2})$$

$$e(\sigma_0, \hat{P}) = e(H_S, \text{vk}_1) \cdot e(C_0, \text{vk}_2) \cdot \prod_{i=1}^{n} e(C_i, \text{vk}_{i+2})$$

$$e(\sigma_1, \hat{P}) = e(P, \text{vk}_2) \cdot \prod_{i=1}^{n} e(Z_i, \text{vk}_{i+2})$$

wherein $e(Q, \hat{Q})$ is a pairing function between two elements of the two groups $\mathbb{G}$ and $\widehat{\mathbb{G}}$ and the validity of the Diffie-Hellman proof $\pi = (\text{com, proof})$ on the tuple $(P, C_0, H = \mathcal{H}(\text{vk}), W)$

○ the third randomization step of the tag Tag' into Tag" is such as:

$$\text{Tag}'' = (\tau''_1 = 1/t'' \cdot \tau'_1, \tau''_2 = 1/t'' \cdot \tau'_2)$$

○ the second computation step (108) of the signatures $\Sigma$ into $\Sigma$': $\Sigma$' being a valid signature of ($H_S$, $C'_0$, $\vec{C}$') under VK for the tag Tag", is such as:

$$\Sigma'' = t'' \cdot (\Sigma'_0 + s \cdot \Sigma'_1)$$

○ the second computation step (108) comprises a computation of the randomized Groth-Sahai proof $\pi$', for $W' = W + s \cdot H$, using $s$ and $\pi$.
○ the storing step (111) comprises the storing of ($W'$, $\pi$').

7. A computer program product which, when executed by at least one processor, executes the method according to any one of the previous claims.

8. A non-volatile memory comprising at least one computer program product according to the previous claim.

9. A voting system configured to execute the method according to any one of the claims 1 to 6, said voting system comprising at least:

○ One authority device AUT (10) comprising at least one initialization module IM (11), said initialization module IM (11) being configured to execute said initialization step (101).
○ One sender device SEND (20) comprising at least:

• An encryption module EM (21) being configured to execute said ciphertext creation step (102).
• A first proof module PM1 (22) being configured to execute said proof creation step (103). Said first proof module PM1 (22) comprising at least:

▪ A first randomization module RM1 (23) being configured to execute said first randomization step;
▪ A first computational module CM1 (24) being configured to execute said first computation step.

• A generation module GM (25) being configured to execute said generation step (104);
• A sending module SM (26) being configured to execute the sending step (105), and advantageously to communicate with at least one receiver device REC (30).

○ One receiver device REC (30) comprising at least:

• A verification module VM (31) being configured to execute said verification step (106);
• A second randomization module RM2 (32) being configured to execute said second randomization step (107), and the third randomization step;
• A second computational module CM2 (33) being configured to execute said second computational step (108), said third computational step (109) and said fourth randomization step;
• A second proof module PM2 (34) being configured to execute said second proof creation step (110);
• A storing module STM (35) being configured to execute said storing step (111).

10. The voting system according to claim 9 wherein at least one among the authority device AUT (10), the sender device SEND (20) and the receiver device REC (30) is taken among: a robot, a smartphone, an Internet of Thing device, an artificial intelligence, a computer.

**Patentansprüche**

1. Verfahren (100) einer linear homomorphen Signatur für Null-Wissen-Beweise einer Teilmengenzugehörigkeit auf mindestens einem ElGamal-Geheimtext in einer Gruppe $\mathbb{G}$ mit einem Generator $P$ von Primordnung $p$ bezüglich mindestens einer Teilmenge $\mathcal{S} = \{\vec{x}_1, ..., \vec{x}_N\} \subseteq \mathbb{Z}_p^n$ von N autorisierten Klartexten, wobei die Klartexte durch mindestens eine Autoritätsvorrichtung AUT (10) autorisiert werden, wobei der Geheimtext aus einem Klartext generiert wird, der aus der Teilmenge S genommen wird, wobei das Verfahren durch mindestens ein Computersystem ausführbar ist, wobei das Computersystem vorzugsweise mit mindestens einem Kommunikationsnetzwerk kommunikativ verbunden ist, wobei das Verfahren (100) randomisierbare Tags verwendet, das Verfahren (100) umfassend mindestens:

○ einen Initialisierungsschritt (101), der vorzugsweise durch die Autoritätsvorrichtung AUT (10) unter Verwendung mindestens eines Initialisierungsmoduls IM (11) ausgeführt wird, der Initialisierungsschritt (101) umfassend mindestens einen Generierungsschritt von mindestens:

• einem Paar von ElGamal-Verschlüsselungsschlüsseln (DK, EK) für Klartexte, die durch eine Gruppe $\mathbb{G}^n$ umfasst sind, wobei der Entschlüsselungsschlüssel DK als $\mathrm{DK} = \vec{z} \xleftarrow{\$} \mathbb{Z}_p^n$ generiert wird und der Verschlüsselungsschlüssel EK als EK = $\vec{Z} = \vec{z} \cdot P \in \mathbb{G}^n$ generiert wird, wobei $\vec{Z}$ ein privater Vektor von Skalaren ist und $P$ der Generator der Gruppe $\mathbb{G}$ von Primordnung $p$ ist;

• einem Paar von Schlüsseln (SK, VK) der linear homomorphen Signatur für Nachrichten in $\mathbb{G}^{n+2}$, die Nachrichten umfassend mindestens Geheimtexte;
• $N$ verifizierbaren Tags $\mathrm{Tag}_j$ für $j$ = 1, ..., $N$;
• $N$ Paaren von Signaturen $(\Sigma_{j,0}, \Sigma_{j,1})$ für $j$ = 1, ..., $N$ auf $\vec{M}_j = \vec{x}_j \cdot P$, wie zum Beispiel:

$$\Sigma_{j,0} = \mathrm{Sign}\left(\mathrm{SK}, \mathrm{Tag}_j, \left(H_S, 0, \vec{M}_j\right)\right)$$

$$\Sigma_{j,1} = \mathrm{Sign}\left(\mathrm{SK}, \mathrm{Tag}_j, \left(0, P, \vec{Z}\right)\right)$$

wobei $H_S$ konfiguriert ist, um einen Beweis $\mathrm{PR}_S$ auf der Teilmenge $S$ zu kennzeichnen, vorzugsweise $H_S = \mathcal{H}(S)$, wobei $\mathcal{H}$ eine Volldomänen-Hash-Funktion zu $\mathbb{G}$ ist;
wobei der Initialisierungsschritt (101) einen Satz öffentlicher Parameter generiert, umfassend:
EK, VK und $(\mathrm{Tag}_j, \Sigma_{j,0}, \Sigma_{j,1})$ für $j$ = 1, ..., $N$

○ einen Geheimtexterstellungsschritt (102) mit Beweis der Teilmengenzugehörigkeit, der vorzugsweise durch mindestens eine Sendervorrichtung SEND (20) unter Verwendung mindestens eines Verschlüsselungsmoduls EM (21) ausgeführt wird, der Geheimtexterstellungsschritt (102) umfassend die Generierung mindestens eines ElGamal-Geheimtexts $(C_0, \vec{C})$ für mindestens einen autorisierten Klartext $\vec{x} = \vec{x}_j \in S \subseteq \mathbb{Z}_p^n$ für ein gegebenes $j$ mit einem zufälligen Skalar $r \xleftarrow{\$} \mathbb{Z}_p$, wie zum Beispiel:

$$C_0 = r \cdot P \qquad \vec{C} = r \cdot \vec{Z} + \vec{M}_j \quad \text{mit} \quad \vec{M}_j = \vec{x}_j \cdot P \in \mathbb{G}^n$$

○ einen Beweiserstellungsschritt (103), der vorzugsweise durch mindestens die Sendervorrichtung SEND (20) unter Verwendung mindestens eines ersten Beweismoduls PM1 (22) ausgeführt wird, von mindestens dem Beweis $\mathrm{PR}_S$ von $\mathrm{Tag}_j$ und $\Sigma_{j,0}$, $\Sigma_{j,1}$, umfassend:

• einen ersten Randomisierungsschritt, der vorzugsweise durch die Sendevorrichtung SEND (20) unter Verwendung mindestens eines ersten Randomisierungsmoduls RM1 (23) ausgeführt wird, der erste Randomisierungsschritt umfassend eine Randomisierung mindestens eines $\mathrm{Tag}_j$ zu Tag' für das gegebene $j$;
• einen ersten Berechnungsschritt, der vorzugsweise durch die Sendevorrichtung SEND (20) unter Verwendung mindestens eines ersten Berechnungsmoduls CM1 (24) ausgeführt wird, von $\Sigma'_0$ und $\Sigma'_1$, wobei:

$\Sigma'_0$ eine gültige Signatur von $(H_S, C_0, \vec{C})$ unter VK für das Tag Tag' und $\Sigma'_1$ eine gültige Signatur eines Zufallsgenerators $(0, D_0, \vec{D})$ unter VK für das Tag Tag' ist;

○ einen Generierungsschritt (104), der vorzugsweise durch die Sendevorrichtung SEND (20) unter Verwendung mindestens eines Generierungsmoduls GM (25) ausgeführt wird, umfassend mindestens:

• Generieren eines Paars von Verifizierungsschlüsseln (sk, vk) der linear homomorphen Signatur für Nachrichten in $\mathbb{G}^{n+2}$;

• Generieren von Signaturen $\sigma_0$ und $\sigma_1$, wobei:

$$\sigma_0 = \text{Sign}\left(\text{sk}, \left(H_s, C_0, \vec{C}\right)\right)$$

$$\sigma_1 = \text{Sign}\left(\text{sk}, \left(0, D_0, \vec{D}\right)\right)$$

○ einen Sendeschritt (105), der vorzugsweise durch die Sendevorrichtung SEND (20) unter Verwendung mindestens eines Sendemoduls SM (26) ausgeführt wird, von der Sendevorrichtung SEND (20) an mindestens eine Empfängervorrichtung REC (30) der Geheimtexte $(C_0, \vec{C})$ und $(D_0, \vec{D})$ zusammen mit dem Beweis $\text{PR}_s$, umfassend (Tag', $\Sigma'_0$ $\Sigma'_1$), und mit den Signaturen (vk, $\sigma_0$, $\sigma_1$);

○ einen Verifizierungsschritt (106), der vorzugsweise durch die Empfängervorrichtung REC (30) unter Verwendung mindestens eines Verifizierungsmoduls VM (31) ausgeführt wird, der Verifizierungsschritt umfassend mindestens die Verifizierung von mindestens:

• der Gültigkeit von Tag';

• der Gültigkeit der Signatur $\Sigma'_0$ auf ($H_s$, $C_0$, $\vec{C}$) unter VK für das Tag Tag' und der Gültigkeit der Signatur $\Sigma'_1$ auf (0, $D_0$, $\vec{D}$) unter VK für das Tag Tag';

• der Gültigkeit der Signaturen $\sigma_0$ auf ($H_s$, $C_0$, $\vec{C}$) unter vk und $\sigma_1$ auf (0, $D_0$, $\vec{D}$) unter vk.

○ einen zweiten Randomisierungsschritt (107), der vorzugsweise durch die Empfängervorrichtung REC (30) unter Verwendung mindestens eines zweiten Randomisierungsmoduls RM2 (32) ausgeführt wird, des ElGamal-Geheimtexts $(C_0, \vec{C})$, um den Geheimtext $(C'_0, \vec{C}')$ unter Verwendung eines zufälligen Skalars $s \xleftarrow{\$} \mathbb{Z}_p$ und eines Zufallsgenerators $(D_0, \vec{D})$ zu generieren, wie zum Beispiel:

$$C'_0 = C_0 + s \cdot D_0 \qquad \vec{C}' = \vec{C} + s \cdot \vec{D}$$

○ einen zweiten Berechnungsschritt (108), der vorzugsweise durch die Empfängervorrichtung REC (30) unter Verwendung mindestens eines zweiten Berechnungsmoduls CM2 (33) ausgeführt wird, einer Signatur $\Sigma'$:

$$\Sigma' = \Sigma'_0 + s \cdot \Sigma'_1$$

wobei $\Sigma'$ eine gültige Signatur von ($H_s$, $C'_0$, $\vec{C}'$) unter VK für das Tag Tag' ist;

○ einen dritten Berechnungsschritt (109), der vorzugsweise durch die Empfängervorrichtung REC (30) unter Verwendung mindestens des Berechnungsmoduls CM2 (33) ausgeführt wird, einer Signatur σ:

$$\sigma = \sigma_0 + s \cdot \sigma_1$$

wobei σ eine gültige Signatur von ($H_s$, $C'_0$, $\vec{C}'$) unter vk ist;

○ einen zweiten Beweiserstellungsschritt (110), der vorzugsweise durch mindestens die Empfängervorrichtung REC (30) unter Verwendung mindestens eines zweiten Beweismoduls PR2 (34) ausgeführt wird, eines Beweises $\text{PR}'_s$ aus dem Beweis $\text{PR}_s$ von Tag' und $\Sigma'_0, \Sigma'_1$, umfassend:

• einen dritten Randomisierungsschritt durch mindestens das zweite Randomisierungsmodul RM2 (32) des Tags Tag' zu Tag";
• einen vierten Berechnungsschritt durch mindestens das zweite Berechnungsmodul CM2 (33) der Signatur

$\Sigma$":$\Sigma$", die eine gültige Signatur von ($H_S$, $C'_0$, $\vec{C}$') unter VK für das Tag Tag" ist;

o einen Speicherschritt (111), der vorzugsweise durch die Empfängervorrichtung REC (30) unter Verwendung mindestens eines Speichermoduls STM (35) ausgeführt wird, des Geheimtexts ($C'_0$, $\vec{C}$') zusammen mit dem

Beweis $PR'_S$, umfassend (Tag",$\Sigma$"), und mit der Signatur (vk, $\sigma$), die konfiguriert sind, um öffentlich verifiziert zu werden, und wobei:

• Tag" ein gültiges Tag ist;

• $\Sigma$" eine gültige Signatur auf ($H_S$, $C'_0$, $\vec{C}$') unter VK für das Tag Tag" ist, das es ermöglicht, zu beweisen, dass der Klartext in der Teilmenge $S$ ist;

• $\sigma$ eine gültige Signatur auf ($H_S$, $C'_0$, $\vec{C}$') unter vk ist.

2. Verfahren (100) nach dem vorstehenden Anspruch, wobei in einer bilinearen Einstellung ($\mathbb{G}$, $\widehat{\mathbb{G}}$, $\mathbb{G}_{T}$,$p$,$P$,$\hat{P}$,$e$) das Paar von Verifizierungsschlüsseln (sk, vk) der linear homomorphen Signatur für Nachrichten in $\mathbb{G}^{n+2}$ generiert wird, wie zum Beispiel:

$$sk = \vec{e} \overset{\$}{\leftarrow} \mathbb{Z}_p^{n+2}, \quad vk = \vec{e} \cdot \hat{P} \in \widehat{\mathbb{G}}^{n+2}$$
$$\text{und}$$

und

$$\sigma_0 = e_1 \cdot H_S + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

.

3. Verfahren (100) nach dem vorstehenden Anspruch, wobei:

○ vier zufällige Punkte $\hat{V}_{1,1}, \hat{V}_{1,2}, \hat{V}_{2,1}, \hat{V}_{2,2} \overset{\$}{\leftarrow} \widehat{\mathbb{G}}$ für die Groth-Sahai-Beweise generiert und an die öffentlichen Parameter angehängt werden;

○ der Beweis $PR_S$ von Tag; und $\Sigma_{j,0},\Sigma_{j,1}$ generiert wird, wie zum Beispiel:

$$\Sigma_0 = \Sigma_{j,0} + r \cdot \Sigma_{j,1} \qquad \Sigma_1 = \Sigma_{j,1}$$

wobei $\Sigma_0$ eine gültige Signatur von ($H_S$, $C'_0$, $\vec{C}$') unter VK für das Tag Tag = Tag$_j$ ist und wobei $\Sigma_1$ eine gültige Signatur von (0, P, $\vec{Z}$) unter VK für das Tag Tag = Tag$_j$ ist;

○ der Generierungsschritt das Generieren eines Diffie-Hellman-Werts $W = r \cdot H$ für $H = \mathcal{H}(vk) \in \mathbb{G}$ und das Generieren eines Groth-Sahai-Beweises $\pi$ eines Diffie-Hellman-Tupels für (P, $C_0$, H, W) umfasst.
○ der Sendeschritt von der Sendervorrichtung SEND (20) an die Empfängervorrichtung REC (30) das Senden des Werts $W$ und des Beweises $\pi$ umfasst.
○ der Verifizierungsschritt die Verifizierung der Gültigkeit des Diffie-Hellman-Beweises $\pi$ auf dem Tupel (P,$C_0$, H =

$\mathcal{H}$(vk),W) umfasst.

o der Zufallsgenerator $(0, D_0, \vec{D})$ gleich $(0, P, \vec{Z})$ ist, wie zum Beispiel $D_0 = P$ und $\vec{D} = \vec{Z}$, wobei $P$ der Generator von $\mathbb{G}$ ist und $\vec{Z}$ der öffentliche Verschlüsselungsschlüssel ist;

o die Randomisierung des ElGamal-Geheimtextes $(C_0, \vec{C})$ um den Geheimtext $(C'_0, \vec{C}')$ unter Verwendung eines zufälligen Skalars $s \xleftarrow{\$} \mathbb{Z}_p$ zu generieren, ist wie zum Beispiel:

$$C'_0 = C_0 + s \cdot P \quad \vec{C}' = \vec{C} + s \cdot \vec{Z}$$

o der zweite Berechnungsschritt eine Berechnung des randomisierten Groth-Sahai-Beweises $\pi$' umfasst, wobei $\pi$' ein gültiger Diffie-Hellman-Beweis auf dem Tupel $(P, C'_0, H = \mathcal{H}(\text{vk}), W)$ für $W' = W + s \cdot H$ unter Verwendung von s und $\pi$ ist.

o der Speicherschritt das Speichern von $(W', \pi')$ umfasst.

4. Verfahren (100) nach Anspruch 1, wobei in einer bilinearen Einstellung $(\mathbb{G}, \widehat{\mathbb{G}}, \mathbb{G}_T, p, P, \hat{P}, e)$.

o vier zufällige Punkte $\hat{V}_{1,1}, \hat{V}_{1,2}, \hat{V}_{2,1}, \hat{V}_{2,2} \xleftarrow{\$} \widehat{\mathbb{G}}$ für die Groth-Sahai-Beweise generiert und an die öffentlichen Parameter angehängt werden;

o das Paar von Verifizierungsschlüsseln SK und VK der linear homomorphen Signatur generiert wird, wie zum Beispiel $SK = \vec{s} \xleftarrow{\$} \mathbb{Z}_p^{n+4}$ und $VK = \vec{s} \cdot \hat{P} \in \widehat{\mathbb{G}}^{n+4}$;

o die N verifizierbaren Tags Tag; generiert werden, wie zum Beispiel $\text{Tag}_j = (\tau_{j,1} = P, \tau_{j,2} = t_j \cdot P, \tau_{j,3} = t_j^2 \cdot P, \pi_j)$ mit $t_j \xleftarrow{\$} \mathbb{Z}_p$ für $j = 1, ..., N$ mit ihren Gültigkeitsbeweisen $\pi_j = (\text{com}_j, \text{Beweis}_j)$;

∘ die N Paare von Signaturen für $j = 1, ..., N$ auf $\vec{M}_j = \vec{x}_j \cdot P$ generiert werden, wie zum Beispiel:

$$\Sigma_{j,0} = s_1 \cdot H_S + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

o $(D_0, \vec{D})$ definiert sind als:

$$D_0 = r' \cdot P$$

$\vec{D} = r' \cdot \vec{Z}$ mit einem zufälligen Skalar $r' \xleftarrow{\$} \mathbb{Z}_p$

o der Beweis $\text{PR}_S$ aus Tag$_j$ und $\Sigma_{j,0}, \Sigma_{j,1}$ generiert wird, wie zum Beispiel:

$$\Sigma'_0 = \Sigma_{j,0} + r \cdot \Sigma_{j,1} \qquad \Sigma'_1 = r' \cdot \Sigma_{j,1}$$

wobei $\Sigma'_0$ eine gültige Signatur von $(H_S, C_0, \vec{C})$ unter VK für das Tag Tag$'_0$ = (r + 1) · Tag ist und wobei $\Sigma'_1$ eine gültige Signatur von $(0, D_0, \vec{D})$ unter VK für das Tag Tag$'_1$ = r · Tag ist;

◦ der Generierungsschritt (104) die Generierung von Diffie-Hellman-Werten $W = r \cdot H$ und $W' = r' \cdot H$ für $H = \mathcal{H}(\text{vk}) \in \mathbb{G}_1$ zusammen mit Groth-Sahai-Beweisen $\pi$ = (com, Beweis) des Diffie-Hellman-Tupels für *(P, $C_0$, H, W)* und $\pi'$ = (com', Beweis') des Diffie-Hellman-Tupels für *(P, $D_0$, H, W)* umfasst;

◦ der Sendeschritt (105) von der Sendervorrichtung SEND (20) an die Empfängervorrichtung REC (30) das Senden des Beweises $\text{PR}_\mathcal{S}$, umfassend (Tag'$_0$, Tag'$_1$, $\Sigma'_0$, $\Sigma'_1$) und (*W, W', $\pi$, $\pi'$*), umfasst

o der Verifizierungsschritt (106) das Verifizieren umfasst, dass:

- die Tags Tag'$_0$ und Tag'$_1$ gültig sind;

- die Signatur $\Sigma'_0$ auf der Nachricht ($H_\mathcal{S}$, $C_0$, $\vec{C}$) und Tag Tag'$_0$ unter VK gültig ist;
- die Signatur $\Sigma'_1$ auf der Nachricht *(0, $D_0$, $\vec{D}$)* und Tag Tag'$_1$ unter VK gültig ist;

- die Signatur $\sigma_0$ auf der Nachricht ($H_\mathcal{S}$, $C_0$, $\vec{C}$) unter vk gültig ist;
- die Signatur $\sigma_1$ für die Nachricht (0, $D_0$, $\vec{D}$) unter vk gültig ist;
- die Diffie-Hellman-Beweise $\pi$ auf den Tupeln (*P*, $C_0$, *H*, *W*) gültig sind und $\pi'$ auf den Tupeln (*P*, $D_0$, *H*, *W'*) gültig ist.

o der dritte Randomisierungsschritt des Tags Tag' zu Tag" ist wie zum Beispiel:

$$\text{Tag}'' = \text{Tag}'_0 + s \cdot \text{Tag}'_1$$

o der vierte Berechnungsschritt der Signaturen $\Sigma$" und $\sigma$ ist wie zum Beispiel:

$$\Sigma'' = \Sigma'_0 + s \cdot \Sigma'_1$$

$$\sigma = \sigma_0 + s \cdot \sigma_1$$

o der zweite Berechnungsschritt (108) eine Berechnung des randomisierten Groth-Sahai-Beweises $\pi$" für $W'' = W + s \cdot W'$ unter Verwendung von s, $\pi$ und $\pi'$ umfasst.

◦ der Speicherschritt (111) das Speichern von (*W''*, $\pi'$) umfasst.

**5.** Verfahren (100) nach Anspruch 4, wobei die öffentlichen Parameter VK, ($\hat{V}_{1,1}$, $\hat{V}_{1,2}$, $\hat{V}_{2,1}$, $\hat{V}_{2,2}$) und (*Tag$_j$*, $\Sigma_{j,0}$, $\Sigma_{j,1}$) für *j* = 1,..., *N* zwischen mehreren unabhängigen Parteien $(\mathcal{U}_k)_k$ auf eine verteilte Weise generiert werden:

◦ die mehreren unabhängigen Parteien $(\mathcal{U}_k)_k$ einigen sich auf eine bilineare Einstellung ($\mathbb{G}$, $\widehat{\mathbb{G}}$, $\mathbb{G}_T$, *p, P, $\hat{P}$, e*);

◦ jede Partei $\mathcal{U}_k$ wählt und sendet zufällige Punkte $\hat{V}_{1,1,k}$, $\hat{V}_{1,2,k}$, $\hat{V}_{2,1,k}$, $\hat{V}_{2,2,k} \overset{\$}{\leftarrow} \widehat{\mathbb{G}}$ an die anderen Parteien, wobei globale Verifizierungspunkte $\hat{V}_{1,1} = \Sigma_k \hat{V}_{1,1,k}$, $\hat{V}_{1,2} = \Sigma_k \hat{V}_{1,2,k}$, $\hat{V}_{2,1} = \Sigma_k \hat{V}_{2,1,k}$ $\hat{V}_{2,2} = \Sigma_k \hat{V}_{2,2,k}$ generiert werden, wobei diese globalen Verifizierungspunkte konfiguriert sind, um durch die mehreren unabhängigen Parteien berechnet zu werden;

o das Paar von Verifizierungsschlüsseln SK und VK der linear homomorphen Signatur wird durch jede Partei $\mathcal{U}_k$ generiert, die $s_{i,k} \overset{\$}{\leftarrow} \mathbb{Z}_p$ für *j* = 1, ..., n + 4 zufällig wählt, $\text{VK}_k = (s_{i,k} \cdot \hat{P})_{i=1}^{n+4}$ berechnet und an die anderen Parteien sendet, wobei ein globaler Verifizierungsschlüssel VK = $\Sigma_k$VK$_k$ generiert wird, während $\mathcal{U}_k$ konfiguriert ist, um seinen Schlüsselanteil $\text{SK}_k = (s_{i,k})_{i=1}^{n+4}$ weiter zu signieren;

o die *N* verifizierbaren Tags Tag$_j$ werden in zwei Schritten generiert, wobei jede Partei $\mathcal{U}_k$ $t_{j,k}, v_{j,k} \overset{\$}{\leftarrow} \mathbb{Z}_p$ für *j* = 1 ,....., N zufällig wählt:

- jede $\mathcal{U}_k$ com$_{j,k}$ = ($\hat{C}_{j,k} = t_{j,k} \cdot \hat{V}_{2,1} + v_{j,k} \cdot \hat{V}_{1,1}$, $\hat{D}_{j,k} = t_{j,k} \hat{V}_{2,2} + v_{j,k} \cdot \hat{V}_{1,2}$) und $U_{j,k} = t_{j,k} \cdot P$, $\Theta_{j,k} = v_{j,k} \cdot P$ berechnet

und an die anderen Parteien sendet;

• jede $\mathcal{U}_k$ $U'_j = \Sigma_k U_{j,k}$, $\Theta'_j = \Sigma_k \Theta_{j,k}$ und $V_{j,k} = t_{j,k} \cdot U'_j$, $\Psi_{j,k} = v_{j,k} \cdot U'_j$ berechnet und an die anderen Parteien sendet

Generieren von $V_j = \Sigma_k V_{j,k}$, $\Psi'_j = \Sigma_k \Psi_{j,k}$, und $\hat{C}'_j = \Sigma_k \hat{C}_{j,k}$, $D'_j = \Sigma_k \hat{D}_{j,k}$; $\text{Tag}_j = ((\tau_{j,1} = P, \tau_{j,2} = U'_j, \tau_{j,3} = V'_j)$, $\pi_j = (\text{com}_j = (\hat{C}'_j, \hat{D}'_j), \text{proof}_j = (\Theta'_j, \Psi'_j)))$ auf zufälligem $t'_j = \Sigma t_{j,k}$ und $v'_j = \Sigma v_{j,k}$;

o die N Paare von Signaturen für $j$ = 1, ...., N auf $\vec{M}_j = \vec{x}_j \cdot P$ werden ebenfalls auf eine verteilte Weise generiert, wobei jede $\mathcal{U}_k$ $\text{SK}_k = (s_{i,k})_i$ und Tag; verwendet, um zu berechnen:

$$\Sigma_{j,0,k} = s_{1,k} \cdot H_s + \sum_{i=1}^{n} s_{i+2,k} \cdot M_{j,i} + s_{n+3,k} \cdot U'_j + s_{n+4,k} \cdot V'_j$$

$$\Sigma_{j,1,k} = s_{2,k} \cdot P + \sum_{i=1}^{n} s_{i+2,k} \cdot Z_i + s_{n+3,k} \cdot U'_j + s_{n+4,k} \cdot V'_j$$

wobei dann die mehreren unabhängigen Parteien alle berechnen können:

$$\Sigma_{j,0} = \sum_{k} \Sigma_{j,0,k} \qquad \Sigma_{j,1} = \sum_{k} \Sigma_{j,1,k}$$

die Signaturen von $(H_s, 0, \vec{M}_j)$ beziehungsweise von $(0, P, \vec{Z})$ unter VK für das Tag $\text{Tag}_j$ sind.

6. Verfahren (100) nach Anspruch 3, wobei:

o die N verifizierbaren Tags $\text{Tag}_j$ generiert werden, wie zum Beispiel $\text{Tag}_j = (\tau_{j,1} = 1/t_j \cdot P, \tau_{j,2} = 1/t_j \cdot \hat{P})$ mit $t_j \xleftarrow{\$} \mathbb{Z}_p$ für $j$ = 1, ....,N;

o die N Paare von Signaturen für $j$ = 1,...., N auf $\vec{M}_j = \vec{x}_j \cdot P$ generiert werden, wie zum Beispiel:

$$\Sigma_{j,0} = t_j \cdot \left( s_1 \cdot H_s + \sum_{i=1}^{n} s_{i+2} \cdot M_{j,i} \right) \quad \Sigma_{j,1} = t_j \cdot \left( s_2 \cdot P + \sum_{i=1}^{n} s_{i+2} \cdot Z_i \right)$$

o die Randomisierung von mindestens Tag = $(\tau_1, \tau_2)$ zu Tag' = $(\tau'_1, \tau'_2)$ für ein zufälliges $t' \xleftarrow{\$} \mathbb{Z}_p$ ist wie zum Beispiel:

$$\text{Tag}' = (\tau'_1 = 1/t' \cdot \tau_1, \tau'_2 = 1/t' \cdot \tau_2)$$

o die Berechnung von $\Sigma_0$ und $\Sigma'_1$ zu $\Sigma'_0$ beziehungsweise $\Sigma'_1$ ist wie zum Beispiel:

$$\Sigma'_0 = t' \cdot \Sigma_0 \qquad \Sigma'_1 = t' \cdot \Sigma_1$$

o der Zufallsgenerator $(0, D_0, \vec{D})$ gleich $(0, \hat{P}, \vec{Z})$ ist, wie zum Beispiel $D_0 = P$ und $\vec{D} = \vec{Z}$, wobei $P$ der Generator von $\mathbb{G}$ und $\vec{Z}$ der öffentliche Verschlüsselungsschlüssel ist. Die Signaturen $\sigma_0$ und $\sigma_1$ sind wie zum Beispiel:

$$\sigma_0 = e_1 \cdot H_s + e_2 \cdot C_0 + \sum_{i=1}^{n} e_{i+2} \cdot C_i$$

$$\sigma_1 = e_2 \cdot P + \sum_{i=1}^{n} e_{i+2} \cdot Z_i$$

o der Verifizierungsschritt (106) die Verifizierung der folgenden Gleichheiten umfasst:

$$e(P, \tau'_2) = e(\tau'_1, \hat{P})$$

$$e(\Sigma'_0, \tau'_2) = e(H_S, \mathsf{VK}_1) \cdot e(C_0, \mathsf{VK}_2) \cdot \prod_{i=1}^{n} e(C_i, \mathsf{VK}_{i+2})$$

$$e(\Sigma'_1, \tau'_2) = e(P, \mathsf{VK}_2) \cdot \prod_{i=1}^{n} e(Z_i, \mathsf{VK}_{i+2})$$

$$e(\sigma_0, \hat{P}) = e(H_S, \mathsf{vk}_1) \cdot e(C_0, \mathsf{vk}_2) \cdot \prod_{i=1}^{n} e(C_i, \mathsf{vk}_{i+2})$$

$$e(\sigma_1, \hat{P}) = e(P, \mathsf{vk}_2) \cdot \prod_{i=1}^{n} e(Z_i, \mathsf{vk}_{i+2})$$

wobei $e(Q, \hat{Q})$ eine Paarungsfunktion zwischen zwei Elementen der zwei Gruppen $\mathbb{G}$ und $\widehat{\mathbb{G}}$ und der Gültigkeit des Diffie-Hellman-Beweises $\pi$ = (com, Beweis) auf dem Tupel $(P, C_0, H = \mathcal{H}(\mathsf{vk}), W)$ ist
o der dritte Randomisierungsschritt des Tags Tag' zu Tag" ist wie zum Beispiel:

$$\mathsf{Tag}'' = (\tau''_1 = 1/t'' \cdot \tau'_1, \tau''_2 = 1/t'' \cdot \tau'_2)$$

o der zweite Berechnungsschritt (108) der Signaturen $\Sigma$ zu $\Sigma'$: wobei $\Sigma'$ eine gültige Signatur von $(H_S, C'_0, \overrightarrow{C'})$ unter VK für das Tag Tag" ist, ist wie zum Beispiel:

$$\Sigma'' = t'' \cdot (\Sigma'_0 + s \cdot \Sigma'_1)$$

o der zweite Berechnungsschritt (108) eine Berechnung des randomisierten Groth-Sahai-Beweises $\pi'$ für $W' = W$ + s · $H$ unter Verwendung von s und $\pi$ umfasst.
o der Speicherschritt (111) das Speichern von $(W', \pi')$ umfasst.

7. Computerprogrammprodukt, das, wenn es durch mindestens einen Prozessor ausgeführt wird, das Verfahren nach einem der vorstehenden Ansprüche ausführt.

8. Nichtflüchtiger Speicher, umfassend mindestens ein Computerprogrammprodukt nach dem vorstehenden Anspruch.

9. Abstimmungssystem, das konfiguriert ist, um das Verfahren nach einem der Ansprüche 1 bis 6 auszuführen, das Abstimmungssystem umfassend mindestens:

o eine Autoritätsvorrichtung AUT (10), umfassend mindestens ein Initialisierungsmodul IM (11), wobei das Initialisierungsmodul IM (11) konfiguriert ist, um den Initialisierungsschritt (101) auszuführen.
◦ eine Sendevorrichtung SEND (20), umfassend mindestens:

• ein Verschlüsselungsmodul EM (21), das konfiguriert ist, um den Geheimtexterstellungsschritt (102) auszuführen.

• ein erstes Beweismodul PM1 (22), das konfiguriert ist, um den Beweiserstellungsschritts (103) auszuführen. Das erste Beweismodul PM1 (22) umfasst mindestens:

▪ ein erstes Randomisierungsmodul RM1 (23), das konfiguriert ist, um den ersten Randomisierungsschritts auszuführen;
▪ ein erstes Berechnungsmodul CM1 (24), das konfiguriert ist, um den ersten Berechnungsschritt auszuführen.

• ein Generierungsmodul GM (25), das konfiguriert ist, um den Generierungsschritt (104) auszuführen;
• ein Sendemodul SM (26), das konfiguriert ist, um den Sendeschritt (105) auszuführen und vorteilhafterweise mit mindestens einer Empfängervorrichtung REC (30) zu kommunizieren.

o eine Empfängervorrichtung REC (30), umfassend mindestens:

• ein Verifizierungsmodul VM (31), das konfiguriert ist, um den Verifizierungsschritt (106) auszuführen;
• ein zweites Randomisierungsmodul RM2 (32), das konfiguriert ist, um den zweiten Randomisierungsschritt (107) und den dritten Randomisierungsschritt auszuführen;
• ein zweites Berechnungsmodul CM2 (33), das konfiguriert ist, um den zweiten Berechnungsschritt (108), den dritten Berechnungsschritt (109) und den vierten Randomisierungsschritt auszuführen;
• ein zweites Beweismodul PM2 (34), das konfiguriert ist, um den zweiten Beweiserstellungsschritt (110) auszuführen;
• ein Speichermodul STM (35), das konfiguriert ist, um den Speicherschritt (111) auszuführen.

**10.** Abstimmungssystem nach Anspruch 9, wobei mindestens eine der Autorisierungsvorrichtung AUT (10), der Sendervorrichtung SEND (20) und der Empfängervorrichtung REC (30) genommen wird aus: einem Roboter, einem Smartphone, einer Internet-of-Things-Vorrichtung, einer künstlichen Intelligenz oder einem Computer.

## Revendications

**1.** Procédé de signature linéairement homomorphe (100) pour preuves à connaissance nulle d'appartenance à un sous-ensemble sur au moins un cryptogramme ElGamal dans un groupe G avec un générateur $P$ d'ordre premier $p$ concernant au moins un sous-ensemble $\mathcal{S} = \{\vec{x}_1, ..., \vec{x}_N\} \subseteq \mathbb{Z}_p^n$ de N textes en clair autorisés, lesdits textes en clair étant autorisés par au moins un dispositif d'autorité AUT (10), ledit cryptogramme étant généré à partir d'un texte en clair pris dans ledit sous-ensemble S, ledit procédé étant exécutable par au moins un système informatique, de préférence ledit système informatique étant connecté en communication à au moins un réseau de communication, ledit procédé (100) utilisant des étiquettes randomisables, ledit procédé (100) comprenant au moins :

o une étape d'initialisation (101), de préférence exécutée par ledit dispositif d'autorité AUT (10) à l'aide d'au moins un module d'initialisation IM (11), ladite étape d'initialisation (101) comprenant au moins une étape de génération d'au moins :

• une paire de clés de chiffrement ElGamal (DK, EK) pour des textes en clair contenue dans un groupe $\mathbb{G}^n$ dans lequel la clé de déchiffrement DK est générée comme $DK = \vec{z} \xleftarrow{\$} \mathbb{Z}_p^n$, et la clé de chiffrement EK est générée comme $EK = \vec{Z} = \vec{z} \cdot P \in \mathbb{G}^n$ où $\vec{Z}$ est un vecteur privé de scalaires et $P$ est ledit générateur du groupe $\mathbb{G}$ d'ordre premier $p$ ;

• une paire de clés de signature linéairement homomorphes (SK, VK) pour des messages dans $\mathbb{G}^{n+2}$, lesdits messages comprenant au moins des cryptogrammes ;
• N étiquettes vérifiables $Tag_j$, pour $j = 1, ..., N$;
• N paires de signatures $(\Sigma_{j,0}, \Sigma_{j,1})$, pour $j = 1, ..., N$, sur $\vec{M}_j = \vec{x}_j \cdot P$ telles que :

$$\Sigma_{j,0} = \mathrm{Sign}\left(\mathrm{SK}, \mathrm{Tag}_j, \left(H_{\mathcal{S}}, 0, \vec{M}_j\right)\right)$$

$$\Sigma_{j,1} = \mathrm{Sign}\left(\mathrm{SK}, \mathrm{Tag}_j, \left(0, P, \vec{Z}\right)\right)$$

où $H_{\mathcal{S}}$ est configuré pour caractériser une preuve $\mathrm{PR}_{\mathcal{S}}$ sur le sous-ensemble $\mathcal{S}$, de préférence, $H_{\mathcal{S}} = \mathcal{H}(\mathcal{S})$ où $\mathcal{H}$ est une fonction de hachage à domaine complet dans $\mathbb{G}$ ;

ladite étape d'initialisation (101) générant un ensemble de paramètres publics comprenant :

$$\mathrm{EK}, \mathrm{VK}, \text{ et } \left(\mathrm{Tag}_j, \Sigma_{j,0}, \Sigma_{j,1}\right) \text{ pour } j = 1, ..., N$$

o une étape de création de cryptogramme (102) avec preuve d'appartenance à un sous-ensemble, de préférence exécutée par au moins un dispositif émetteur SEND (20) à l'aide d'au moins un module de chiffrement EM (21), ladite étape de création de cryptogramme (102) comprenant la génération d'au moins un cryptogramme ElGamal $(C_0, \vec{C})$ pour au moins un texte en clair autorisé $\vec{x} = \vec{x}_j \in \mathcal{S} \subseteq \mathbb{Z}_p^n$, pour un j donné, avec un scalaire aléatoire $r \xleftarrow{\$} \mathbb{Z}_p$, tel que :

$$C_0 = r \cdot P \qquad \vec{C} = r \cdot \vec{Z} + \vec{M}_j \text{ avec } \vec{M}_j = \vec{x}_j \cdot P \in \mathbb{G}^n$$

○ une étape de création de preuve (103), de préférence exécutée par au moins ledit dispositif émetteur SEND (20) à l'aide d'au moins un premier module de preuve PM1 (22), d'au moins ladite preuve $\mathrm{PR}_{\mathcal{S}}$, à partir de $\mathrm{Tag}_j$ et $\Sigma_{j,0}$, $\Sigma_{j,1}$ comprenant :

- une première étape de randomisation, de préférence exécutée par ledit dispositif émetteur SEND (20) à l'aide d'au moins un premier module de randomisation RM1 (23), ladite première étape de randomisation comprenant une randomisation d'au moins une $\mathrm{Tag}_j$ en Tag', pour ledit *j* donné ;
- une première étape de calcul, de préférence exécutée par ledit dispositif émetteur SEND (20) à l'aide d'au moins un premier module de calcul CM1 (24), de $\Sigma'_0$ et $\Sigma'_1$, dans lequel : $\Sigma'_0$ est une signature valide de ( $H_{\mathcal{S}}, C_0, \vec{C}$) sous VK pour l'étiquette Tag' et $\Sigma'_1$ est une signature valide d'un randomiseur $(0, D_0, \vec{D})$, sous VK pour l'étiquette Tag' ;

○ une étape de génération (104), de préférence exécutée par ledit dispositif émetteur SEND (20) à l'aide d'au moins un module de génération GM (25), comprenant au moins :

- la génération d'une paire de clés de signature-vérification linéairement homomorphes (sk,vk) pour des messages dans $\mathbb{G}^{n+2}$ ;
- la génération de signatures $\sigma_0$ et $\sigma_1$ dans lequel :

$$\sigma_0 = \mathrm{Sign}\left(\mathrm{sk}, \left(H_{\mathcal{S}}, C_0, \vec{C}\right)\right)$$

$$\sigma_1 = \mathrm{Sign}\left(\mathrm{sk}, \left(0, D_0, \vec{D}\right)\right)$$

o une étape d'envoi (105), de préférence exécutée par ledit dispositif émetteur SEND (20) à l'aide d'au moins un module d'envoi SM (26), à partir du dispositif émetteur SEND (20) vers au moins un dispositif récepteur REC (30) des cryptogrammes $(C_0, \vec{C})$ et $(D_0, \vec{D})$, conjointement avec la preuve $\mathrm{PR}_{\mathcal{S}}$ comprenant (Tag', $\Sigma'_0$, $\Sigma'_1$) et avec les

signatures (vk, $\sigma_0,\sigma_1$) ;

o une étape de vérification (106), de préférence exécutée par ledit dispositif récepteur REC (30) à l'aide d'au moins un module de vérification VM (31), ladite étape de vérification comprenant au moins la vérification d'au moins :

• la validité de Tag' ;

• la validité de la signature $\Sigma'_0$ sur ($H_S$ , $C_0, \vec{C}$) sous VK pour l'étiquette Tag', et la validité de la signature $\Sigma'_1$ sur ($0, D_0, \vec{D}$), sous VK pour l'étiquette Tag' ;

• la validité des signatures $\sigma_0$ sur ($H_S$ , $C_0, \vec{C}$) sous vk et $\sigma_1$ sur ($0, D_0, \vec{D}$) sous vk.

○ une deuxième étape de randomisation (107), de préférence exécutée par ledit dispositif récepteur REC (30) à l'aide d'au moins un second module de randomisation RM2 (32), dudit cryptogramme ElGamal ($C_0, \vec{C}$) pour générer le cryptogramme ($C'_0, \vec{C}$) à l'aide d'un scalaire aléatoire $s \xleftarrow{\$} \mathbb{Z}_p$ et d'un randomiseur ($D_0, \vec{D}$) tels que :

$$C'_0 = C_0 + s \cdot D_0 \qquad \vec{C'} = \vec{C} + s \cdot \vec{D}$$

○ une deuxième étape de calcul (108), de préférence exécutée par ledit dispositif récepteur REC (30) à l'aide d'au moins un second module de calcul CM2 (33), d'une signature $\Sigma'$:

$$\Sigma' = \Sigma'_0 + s \cdot \Sigma'_1 \cdot$$

$\Sigma'$ étant une signature valide de ($H_S$ , $C'_0, \vec{C'}$) sous VK pour l'étiquette Tag' ;

○ une troisième étape de calcul (109), de préférence exécutée par ledit dispositif récepteur REC (30) à l'aide d'au moins ledit module de calcul CM2 (33), d'une signature $\sigma$ :

$$\sigma = \sigma_0 + s \cdot \sigma_1$$

où $\sigma$ est une signature valide de ($H_S$ , $C'_0$, $\vec{C'}$) sous vk ;

o une seconde étape de création de preuve (110), de préférence exécutée par au moins ledit dispositif récepteur REC (30) à l'aide d'au moins un second module de preuve PR2 (34), d'une preuve $PR'_S$ à partir de ladite preuve $PR_S$ , à partir de Tag' et $\Sigma'_0, \Sigma'_1$ comprenant :

• une troisième étape de randomisation par au moins ledit second module de randomisation RM2 (32) de l'étiquette Tag' en Tag" ;

• une quatrième étape de calcul par au moins ledit second module de calcul CM2 (33) de la signature $\Sigma"$: $\Sigma"$ étant une signature valide de ($H_S$ , $C'_0, \vec{C'}$) sous VK pour l'étiquette Tag" ;

○ une étape de stockage (111), de préférence exécutée par le dispositif récepteur REC (30) à l'aide d'au moins un module de stockage STM (35), du cryptogramme ($C'_0, \vec{C'}$), conjointement avec ladite preuve $PR'_S$ comprenant (Tag",$\Sigma"$), et avec la signature (vk,$\sigma$), qui sont configurés pour être vérifiés publiquement et dans lequel :

• Tag" est une étiquette valide ;

• $\Sigma"$ est une signature valide sur ($H_S$ ,$C'_0, \vec{C'}$), sous VK pour l'étiquette Tag" permettant de prouver que le texte en clair se trouve dans le sous-ensemble $S$ ;

• $\sigma$ est une signature valide sur ($H_S$ ,$C'_0, \vec{C'}$), sous vk.

**2.** Procédé (100) selon la revendication précédente dans lequel, dans un cadre bilinéaire ( $\mathbb{G}$ , $\widehat{\mathbb{G}}$ , $\mathbb{G}_T$ , $p,P,\hat{P},e$), la paire de clés de signature-vérification linéairement homomorphes (sk,vk) pour des messages dans $\mathbb{G}^{n+2}$ est générée, telle que

$$sk = \vec{e} \overset{\$}{\leftarrow} \mathbb{Z}_p^{n+2}, \text{ and } vk = \vec{e} \cdot \hat{P} \in \widehat{\mathbb{G}}^{n+2}$$

et,

$$\sigma_0 = e_1 \cdot H_{\mathcal{S}} + e_2 \cdot C_0 + \sum_{i=1}^{n} e_{i+2} \cdot C_i$$

$$\sigma_1 = e_2 \cdot D_0 + \sum_{i=1}^{n} e_{i+2} \cdot D_i$$

**3.** Procédé (100) selon la revendication précédente dans lequel :

∘ quatre points aléatoires $\hat{V}_{1,1}, \hat{V}_{1,2}, \hat{V}_{2,1}, \hat{V}_{2,2} \overset{\$}{\leftarrow} \widehat{\mathbb{G}}$ sont générés et ajoutés aux paramètres publics, pour les preuves de Groth-Sahai ;

∘ la preuve $\text{PR}_{\mathcal{S}}$ , à partir de $\text{Tag}_j$ et $\Sigma_{j,0}, \Sigma_{j,1}$, est générée, telle que :

$$\Sigma_0 = \Sigma_{j,0} + r \cdot \Sigma_{j,1} \qquad \Sigma_1 = \Sigma_{j,1}$$

où $\Sigma_0$ est une signature valide de ( $H_{\mathcal{S}}, C_0, \vec{C}$) sous VK pour l'étiquette Tag = $\text{Tag}_j$, et où $\Sigma_1$ est une signature valide de $(0, P, \vec{Z})$ sous VK pour l'étiquette Tag = $\text{Tag}_j$;

∘ l'étape de génération comprend la génération d'une valeur Diffie-Hellman $W = r \cdot H$, pour $H = \mathcal{H}(vk) \in \mathbb{G}$ , et la génération d'une preuve de Groth-Sahai $\pi$ de tuple Diffie-Hellman pour *(P, $C_0$, H, W)*.

∘ l'étape d'envoi à partir du dispositif émetteur SEND (20) au dispositif récepteur REC (30) comprend l'envoi de la valeur *W* et de la preuve $\pi$.

o l'étape de vérification comprend la vérification de la validité de la preuve Diffie-Hellman $\pi$ sur le tuple *(P, $C_0$, H =* $\mathcal{H}$*(vk), W)*.

o le randomiseur *(0,$D_0$,$\vec{D}$)* est égal à *(0,P,$\vec{Z}$)* tel que $D_0 = P$ et $\vec{D} = \vec{Z}$ où *P* est le générateur de $\mathbb{G}$ et $\vec{Z}$ est la clé de chiffrement publique ;

o la randomisation dudit cryptogramme ElGamal *($C_0$,$\vec{C}$)* pour générer le cryptogramme *($C'_0$,$\vec{C'}$)* à l'aide d'un scalaire aléatoire $s \overset{\$}{\leftarrow} \mathbb{Z}_p$ est telle que :

$$C'_0 = C_0 + s \cdot P \qquad \vec{C'} = \vec{C} + s \cdot \vec{Z}$$

∘ la deuxième étape de calcul comprend un calcul de la preuve randomisée de Groth-Sahai $\pi'$, $\pi'$ étant une preuve Diffie-Hellman valide sur le tuple *(P,$C'_0$,H =* $\mathcal{H}$*(vk),W)*, pour *W' = W + s · H*, en utilisant s et. $\pi$.

∘ l'étape de stockage comprend le stockage de *(W', $\pi'$)*.

**4.** Procédé (100) selon la revendication 1, dans lequel, dans un cadre bilinéaire ( $\mathbb{G}$, $\widehat{\mathbb{G}}$, $\mathbb{G}_T$, *p, P, $\hat{P}$, e)*:

- quatre points aléatoires $\hat{V}_{1,1}, \hat{V}_{1,2}, \hat{V}_{2,1}, \hat{V}_{2,2} \xleftarrow{\$} \hat{\mathbb{G}}$ sont générés et ajoutés aux paramètres publics pour les preuves de Groth-Sahai ;

∘ la paire de clés de signature-vérification linéairement homomorphes SK et VK est générée telle que

$$\mathsf{SK} = \vec{s} \xleftarrow{\$} \mathbb{Z}_p^{n+4} \text{ , et } \mathsf{VK} = \vec{s} \cdot \hat{P} \in \hat{\mathbb{G}}^{n+4} \text{ ;}$$

∘ les N étiquettes vérifiables $\mathrm{Tag}_j$ ; sont générées de sorte que

$$\mathsf{Tag}_j = \left( \tau_{j,1} = P, \tau_{j,2} = t_j \cdot P, \tau_{j,3} = t_j^2 \cdot P, \pi_j \right) \text{ avec } t_j \xleftarrow{\$} \mathbb{Z}_p \text{, pour } j = 1, ..., N, \text{ avec leurs preuves}$$
de validité $\pi_j = (\mathrm{com}_j, \mathrm{proof}_j)$ ;

∘ les $N$ paires de signatures', pour $j = 1, ..., \mathsf{N}$, sur $\vec{M}_j = \vec{x}_j \cdot P$ sont générées telles que :

$$\Sigma_{j,0} = s_1 \cdot H_s + \sum_{i=1}^{n} s_{i+2} \cdot M_{j,i} + s_{n+3} \cdot \tau_{j,2} + s_{n+4} \cdot \tau_{j,3}$$

$$\Sigma_{j,1} = s_2 \cdot P + \sum_{i=1}^{n} s_{i+2} \cdot Z_i + s_{n+3} \cdot \tau_{j,2} + s_{n+4} \cdot \tau_{j,3}$$

∘ $(D_0, \vec{D})$ sont définies telles que :

$$D_0 = r' \cdot P$$

$\vec{D} = r' \cdot \vec{Z}$ avec un scalaire aléatoire $r' \xleftarrow{\$} \mathbb{Z}_p$

o la preuve $\mathrm{PR}_s$ est générée, à partir de $\mathrm{Tag}_j$ et $\Sigma_{j,0}, \Sigma_{j,1}$ telle que :

$$\Sigma'_0 = \Sigma_{j,0} + r \cdot \Sigma_{j,1} \qquad \Sigma'_1 = r' \cdot \Sigma_{j,1}$$

où $\Sigma'_0$ est une signature valide de $(H_s, c_0, \vec{C})$ sous VK pour l'étiquette $\mathrm{Tag}'_0 = (r+1) \cdot \mathrm{Tag}$ et où $\Sigma'_1$ est une signature valide de $(0, D_0, \vec{D})$ sous VK pour l'étiquette $\mathrm{Tag}'_1 = r' \cdot \mathrm{Tag}$ ;

o l'étape de génération (104) comprend la génération de valeurs Diffie-Hellman $W = r \cdot H$ et $W' = r' \cdot H$, pour $H = \mathcal{H}(\mathrm{vk}) \in \mathbb{G}$, avec des preuves de Groth-Sahai $\pi = (\mathrm{com}, \mathrm{proof})$ de tuple Diffie-Hellman pour $(P, C_0, H, W)$ et $\pi' = (\mathrm{com}', \mathrm{proof}')$ de tuple Diffie-Hellman pour $(P, D_0, H, W')$ ;

∘ l'étape d'envoi (105) à partir du dispositif émetteur SEND (20) au dispositif récepteur REC (30) comprend l'envoi de la preuve $\mathrm{PR}_s$ comprenant $(\mathrm{Tag}'_0, \mathrm{Tag}'_1, \Sigma'_0, \Sigma'_1)$, et $(W, W', \pi, \pi')$

o l'étape de vérification (106) comprend la vérification que :

 • les étiquettes $\mathrm{Tag}'_0$ et $\mathrm{Tag}'_1$ sont valides ;

 • la signature $\Sigma'_0$ est valide sur le message $(H_s, C_0, \vec{C})$ et l'étiquette $\mathrm{Tag}'_0$ sous VK ;
 • la signature $\Sigma'_1$ est valide sur le message $(0, C_0, \vec{C})$ et l'étiquette $\mathrm{Tag}'_1$ sous VK;

 • la signature $\sigma_0$ est valide sur le message $(H_s, C_0, \vec{C})$ sous vk ;
 • la signature $\sigma_1$ est valide sur le message $(0, D_0, \vec{D})$ sous vk ;
 • les preuves de Diffie-Hellman $\pi$ sont valides sur les tuples $(P, C_0, H, W)$ et $\pi'$ est valide sur les tuples $(P, D_0, H, W')$.

∘ la troisième étape de randomisation de l'étiquette Tag' en Tag"est telle que :

$$\text{Tag}'' = \text{Tag}'_0 + s \cdot \text{Tag}'_1$$

o la quatrième étape de calcul des signatures $\Sigma''$ et $\sigma$ est telle que :

$$\Sigma'' = \Sigma'_0 + s \cdot \Sigma'_1$$

$$\sigma = \sigma_0 + s \cdot \sigma_1$$

o la deuxième étape de calcul (108) comprend le calcul de la preuve randomisée de Groth-Sahai $\pi''$, pour $W'' = W + s - W'$, en utilisant s, $\pi$ et $\pi'$.

∘ l'étape de stockage (111) comprend le stockage de $(W'', \pi'')$,

**5.** Procédé (100) selon la revendication 4, dans lequel lesdits paramètres publics VK, $(\hat{V}_{1,1}, \hat{V}_{1,2}, \hat{V}_{2,1}, \hat{V}_{2,2})$, et $(\text{Tag}_j, \Sigma_{j,0}, \Sigma_{j,1})$ pour $j$ = 1,....$N$, sont générés de manière distribuée entre de multiples parties inépendantes $(\mathcal{U}_k)_k$ :

∘ lesdites multiples parties indépendantes $(\mathcal{U}_k)_k$ s'accordent sur un cadre bilinéaire ( $\mathbb{G}, \hat{\mathbb{G}}, \mathbb{G}_T, p, P, \hat{P}, e$ ) ;

∘ chaque partie $\mathcal{U}_k$ choisit et envoie des points aléatoires $\hat{V}_{1,1,k}, \hat{V}_{1,2,k}, \hat{V}_{2,1,k}, \hat{V}_{2,2,k} \xleftarrow{\$} \hat{\mathbb{G}}$ aux autres parties, générant ainsi des points de vérification globaux $\hat{V}_{1,1} = \Sigma_k \hat{V}_{1,1,k}, \hat{V}_{1,2} = \Sigma_k \hat{V}_{1,2,k}, \hat{V}_{2,1} = \Sigma_k \hat{V}_{2,1,k}, \hat{V}_{2,2} = \Sigma_k \hat{V}_{2,2,k}$, ces points de vérification globaux étant configurés pour être calculés par lesdites multiples parties indépendantes ;

∘ la paire de clés de signature-vérification linéairement homomorphes SK et VK est générée par chaque partie $\mathcal{U}_k$ qui choisit aléatoirement $s_{i,k} \xleftarrow{\$} \mathbb{Z}_p$ , pour i = 1, ..., $n + 4$, calcule et envoie $\text{VK}_k = \left( s_{i,k} \cdot \hat{P} \right)_{i=1}^{n+4}$ aux autres parties, générant une clé de vérification globale VK = $\Sigma_k \text{VK}_k$, tandis que $\mathcal{U}_k$ est configuré pour conserver sa part de clé de signature $\text{SK}_k = \left( s_{i,k} \right)_{i=1}^{n+4}$ ;

∘ les N étiquettes vérifiables $\text{Tag}_j$ sont générées en deux étapes, où chaque partie $\mathcal{U}_k$ choisit aléatoirement $t_{j,k}, v_{j,k} \xleftarrow{\$} \mathbb{Z}_p$ , pour $j$ = 1,....., $N$ :

• chaque $\mathcal{U}_k$ calcule et envoie $\text{com}_{j,k} = (\hat{C}_{j,k} = t_{j,k} \cdot \hat{V}_{2,1} + v_{j,k} \cdot \hat{V}_{1,1}, \hat{D}_{j,k} = t_{j,k} \cdot \hat{V}_{2,2} + v_{j,k} \cdot \hat{V}_{1,2})$, et $U_{j,k} = t_{j,k} \cdot P, \Theta_{j,k} = v_{j,k} \cdot P$ aux autres parties ;

• chaque $\mathcal{U}_k$ calcule $U'_j = \Sigma_k U_{j,k}, \Theta'_j = \Sigma_k \Theta_{j,k}$ et envoie $v_{j,k} = t_{j,k} \cdot U'_j, \Psi_{j,k} = v_{j,k} \cdot U'_j$ aux autres parties générant $V'_j = \Sigma_k V_{j,k}, \Psi'_j = \Sigma_k \Psi_{j,k}$, et $\hat{C}'_j = \Sigma_k \hat{C}_{j,k}, \hat{D}'_j = \Sigma_k \hat{D}_{j,k}$ ;

$$\text{Tag}_j = \left( \left( \tau_{j,1} = P, \tau_{j,2} = U'_j, \tau_{j,3} = V'_j \right), \pi_j = (\text{com}_j = (\hat{C}'_j, \hat{D}'_j), \text{proof}_j = (\Theta'_j, \Psi'_j)) \right),$$

au **hasard** $t'_j = \Sigma t_{j,k}$ et $v'_j = \Sigma v_{j,k}$ ;

∘ les N paires de signatures, pour $j$ = 1,...., N, sur $\vec{M}_j = \vec{x}_j \cdot P$ sont également générées de manière distribuée, où chaque $\mathcal{U}_k$ utilise $\text{SK}_k = (s_{i,k})_i$ et $\text{Tag}_j$ pour calculer :

$$\Sigma_{j,0,k} = s_{1,k} \cdot H_s + \sum_{i=1}^{n} s_{i+2,k} \cdot M_{j,i} + s_{n+3,k} \cdot U'_j + s_{n+4,k} \cdot V'_j$$

$$\Sigma_{j,1,k} = s_{2,k} \cdot P + \sum_{i=1}^{n} s_{i+2,k} \cdot Z_i + s_{n+3,k} \cdot U'_j + s_{n+4,k} \cdot V'_j$$

ensuite, lesdites multiples parties indépendantes peuvent toutes calculer :

$$\Sigma_{j,0} = \sum_{k} \Sigma_{j,0,k} \qquad \Sigma_{j,1} = \sum_{k} \Sigma_{j,1,k}$$

qui sont des signatures de ($H_s$, 0, $\vec{M_j}$) et de (0, $P$, $\vec{Z}$) respectivement, sous VK pour ladite étiquette Tag$_j$.

**6.** Procédé (100) selon la revendication 3, dans lequel :

○ les N étiquettes vérifiables Tag$_j$ sont générées telles que Tag$_j$ = ($\tau_{k,1}$ = 1/$t_j \cdot P$, $\tau_{j,2}$ = 1/$t_j \cdot \hat{P}$) avec $t_j \stackrel{\$}{\leftarrow} \mathbb{Z}_p$, pour $j$ = 1,...., $N$ ;
○ les N paires de signatures, pour $j$ = 1,...., N, sur $\vec{M_j}$ = $\vec{x_j} \cdot P$ sont générées telles que :

$$\Sigma_{j,0} = t_j \cdot \left( s_1 \cdot H_s + \sum_{i=1}^{n} s_{i+2} \cdot M_{j,i} \right) \quad \Sigma_{j,1} = t_j \cdot \left( s_2 \cdot P + \sum_{i=1}^{n} s_{i+2} \cdot Z_i \right)$$

○ la randomisation d'au moins Tag = ($\tau_1$, $\tau_2$) en Tag' = ($\tau'_1$, $\tau'_2$), pour un $t' \stackrel{\$}{\leftarrow} \mathbb{Z}_p$ aléatoire ; est telle que :

$$\text{Tag}' = (\tau'_1 = 1/t' \cdot \tau_1, \tau'_2 = 1/t' \cdot \tau_2)$$

o le calcul de $\Sigma_0$ et $\Sigma_1$ en $\Sigma'_0$ et $\Sigma'_1$, respectivement, est tel que :

$$\Sigma'_0 = t' \cdot \Sigma_0 \qquad \Sigma'_1 = t' \cdot \Sigma_1$$

○ le randomiseur (0, $D_0$, $\vec{D}$) est égal à (0, $P$, $\vec{Z}$) de sorte que $D_0$ = $P$ et $\vec{D}$ = $\vec{Z}$ où $P$ est le générateur de $\mathbb{G}$ et $\vec{Z}$ est la clé de chiffrement publique. Les signatures $\sigma_0$ et $\sigma_1$ sont telles que :

$$\sigma_0 = e_1 \cdot H_s + e_2 \cdot C_0 + \sum_{i=1}^{n} e_{i+2} \cdot C_i$$

$$\sigma_1 = e_2 \cdot P + \sum_{i=1}^{n} e_{i+2} \cdot Z_i$$

o l'étape de vérification (106) comprend la vérification des égalités suivantes :

$$e(P, \tau'_2) = e(\tau'_1, \hat{P})$$

$$e(\Sigma'_0, \tau'_2) = e(H_s, \text{VK}_1) \cdot e(C_0, \text{VK}_2) \cdot \prod_{i=1}^{n} e(C_i, \text{VK}_{i+2})$$

$$e(\Sigma'_1, \tau'_2) = e(P, \text{VK}_2) \cdot \prod_{i=1}^{n} e(Z_i, \text{VK}_{i+2})$$

$$e\left(\sigma_0, \hat{P}\right) = e(H_s, \mathsf{vk}_1) \cdot e(C_0, \mathsf{vk}_2) \cdot \prod_{i=1}^{n} e\left(C_i, \mathsf{vk}_{i+2}\right)$$

$$e\left(\sigma_1, \hat{P}\right) = e(P, \mathsf{vk}_2) \cdot \prod_{i=1}^{n} e\left(Z_i, \mathsf{vk}_{i+2}\right)$$

où $e(Q, \hat{Q})$ est une fonction d'appariement entre deux éléments des deux groupes $\mathbb{G}$ et $\widetilde{\mathbb{G}}$ et la validité de la preuve de Diffie-Hellman $\pi = (\text{com}, \text{proof})$ sur le tuple $(P, C_0, H = \mathcal{H}(\mathsf{vk}), W)$

o la troisième étape de randomisation de l'étiquette Tag' en Tag "est telle que :

$$\mathrm{Tag}'' = \left(\tau''_1 = 1/t'' \cdot \tau'_1, \tau''_2 = 1/t'' \cdot \tau'_2\right)$$

o la deuxième étape de calcul (108) des signatures $\Sigma$ en $\Sigma'$ : $\Sigma'$ étant une signature valide de $(H_s, C'_0, \vec{C})$ sous VK pour l'étiquette Tag", est telle que :

$$\Sigma'' = t'' \cdot \left(\Sigma'_0 + s \cdot \Sigma'_1\right)$$

o la deuxième étape de calcul (108) comprend un calcul de la preuve randomisée de Groth-Sahai $\pi'$, pour $W' = W + s \cdot H$, en utilisant s et $\pi$.

∘ l'étape de stockage (111) comprend le stockage de $(W', \pi')$.

7. Produit-programme informatique qui, lorsqu'il est exécuté par au moins un processeur, exécute le procédé selon l'une quelconque des revendications précédentes.

8. Mémoire non volatile comprenant au moins un produit-programme informatique selon la revendication précédente.

9. Système de vote configuré pour exécuter le procédé selon l'une quelconque des revendications 1 à 6, ledit système de vote comprenant au moins :

∘ un dispositif d'autorité AUT (10) comprenant au moins un module d'initialisation IM (11), ledit module d'initialisation IM (11) étant configuré pour exécuter ladite étape d'initialisation (101),
∘ un dispositif émetteur SEND (20) comprenant au moins :

• un module de chiffrement EM (21) configuré pour exécuter ladite étape de création de cryptogramme (102).
• un premier module de preuve PM1 (22) qui est configuré pour exécuter ladite étape de création de preuve (103). Ledit premier module d'épreuve PM1 (22) comprenant au moins :

■ un premier module de randomisation RM1 (23) qui est configuré pour exécuter ladite première étape de randomisation ;
■ un premier module de calcul CM1 (24) qui est configuré pour exécuter ladite première étape de calcul.

• un module de génération GM (25) qui est configuré pour exécuter ladite étape de génération (104) ;
• un module d'envoi SM (26) qui est configuré pour exécuter l'étape d'envoi (105) et, avantageusement, pour communiquer avec au moins un dispositif récepteur REC (30).

∘ un dispositif récepteur REC (30) comprenant au moins :

• un module de vérification VM (31) qui est configuré pour exécuter ladite étape de vérification (106) ;
• un second module de randomisation RM2 (32) qui est configuré pour exécuter ladite deuxième étape de randomisation (107) et la troisième étape de randomisation ;
• un second module de calcul CM2 (33) qui est configuré pour exécuter ladite deuxième étape de calcul (108), ladite troisième étape de calcul (109) et ladite quatrième étape de randomisation ;
• un second module de preuve PM2 (34) qui est configuré pour exécuter ladite seconde étape de création de preuve (110) ;
• un module de stockage STM (35) qui est configuré pour exécuter ladite étape de stockage (111).

10. Système de vote selon la revendication 9, dans lequel au moins l'un parmi le dispositif d'autorité AUT (10), le dispositif émetteur SEND (20) et le dispositif récepteur REC (30) est choisi parmi : un robot, un smartphone, un dispositif de l'Internet des objets, une intelligence artificielle, un ordinateur.

Fig. 1

Fig. 2

10

11

20

21 22

23 24

25 26

30

31 32

33 34

35

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENRI DEVILLEZ et al.** Traceable Receipt-Free Encryption. *IACR, INTERNATIONAL ASSOCIATION FOR CRYPTOLOGIC RESEARCH*, 22 June 2022, vol. 20220622 (235217), 1-56
- Linearly-Homomorphic Signatures and Scalable Mix-Nets. **HÉBANT CHLOÉ et al.** PUBLIC-KEY CRYPTOGRAPHY - PKC 2020; [LECTURE NOTES IN COMPUTER SCIENCE; LECT.NOTES COMPUTER. SPRINGER INTER-NATIONAL PUBLISHING, 29 April 2020, 597-627
- **VÉRONIQUE CORTIER** ; **BEN SMYTH**. Attacking and Fixing Helios: An analysis of Ballot Secrecy. *CSF*, 2011, 297-311
- **VICTOR SHOUP**. Lower Bounds for Discrete Logarithms and Related Problems. *EUROCRYPT*, 1997, 256-266
- **GEORG FUCHSBAUER** ; **EIKE KILTZ** ; **JULIAN LOSS**. The Algebraic Group Model and its Applications. *CRYPTO*, 2018 (2), 33-62

- **TAHER EL GAMAL**. A Public Key Cryptosystem and a Signature Scheme Based on Discrete Logarithms. *CRYPTO*, 1984, 10-18
- **GEORG FUCHSBAUER** ; **CHRISTIAN HANSER** ; **DANIEL SLAMANIG**. Structure-Preserving Signatures on Equivalence Classes and Constant-Size Anonymous Credentials. *J. Cryptol*, vol. 32 (2), 498-546
- **CHLOÉ HÉBANT** ; **DAVID POINTCHEVAL**. Traceable Constant-Size Multi-authority Credentials. *SCN*, 2022, 411-434
- **JENS GROTH** ; **AMIT SAHAI**. Efficient Non-interactive Proof Systems for Bilinear Groups. *EUROCRYPT*, 2008, 415-432
- **PAULO S. L. M. BARRETO** ; **BEN LYNN** ; **MICHAEL SCOTT**. Constructing Elliptic Curves with Prescribed Embedding Degrees. *SCN*, 2002, 257-267